# EUROPEAN PATENT APPLICATION

(11) **EP 4 776 108 A1**
(43) Date of publication of application: **15.07.2026**
(21) Application number: 25820815.6
(22) Date of filing: 09.01.2025
(51) Int. Cl.: G06F 3/0481, G06F 3/04817, G06F 3/04842, G06F 9/451

(54) **DISPLAY METHOD, READABLE STORAGE MEDIUM, AND ELECTRONIC DEVICE**

(30) Priority: 14.06.2024 CN 202410775494
(71) Applicant: HUAWEI TECHNOLOGIES CO., LTD., Shenzhen 518129 (CN)
(72) Inventor: YANG, Xuefei, Shenzhen, Guangdong 518129 (CN)
(74) Representative: Goddar, Heinz J.
(86) International application number: PCT/CN2025/071566
(87) International publication number: WO 2025/256131

(57) **Abstract**

This application relates to the field of terminal technologies, and discloses a display method, a readable storage medium, and an electronic device. After detecting a desktop modification operation performed by a user on a display element in a first desktop interface displayed by using a first direction as a display direction, the electronic device may first predict whether a target display element can be completely displayed, after the desktop modification operation of the user is performed, in a second desktop interface displayed in a second direction. If it is predicted that after the desktop modification operation of the user is performed, the target display element can be completely displayed in the second desktop interface, the desktop modification operation of the user is performed, and a third desktop interface is displayed; otherwise, the desktop modification operation of the user is not performed. In this way, when the display direction of the electronic device changes, failure to completely display, in a desktop interface after the display direction changes, a display element in a desktop interface before the display direction changes can be avoided, helping improve user experience.

## Description

This application claims priority to Chinese Patent Application No. 202410775494.4, filed with the China National Intellectual Property Administration on June 14, 2024 and entitled "DISPLAY METHOD, READABLE STORAGE MEDIUM, AND ELECTRONIC DEVICE", which is incorporated herein by reference in its entirety.

### TECHNICAL FIELD

This application relates to the field of terminal technologies, and in particular, to a display method, a readable storage medium, and an electronic device.

### BACKGROUND

A desktop of an electronic device is usually provided with display elements for displaying icons of applications on the electronic device, icons of function controls (for example, large folders and widgets), and the like. In addition, the desktop may be usually provided with a plurality of desktop interfaces, and a plurality of display elements may be displayed in one desktop interface.

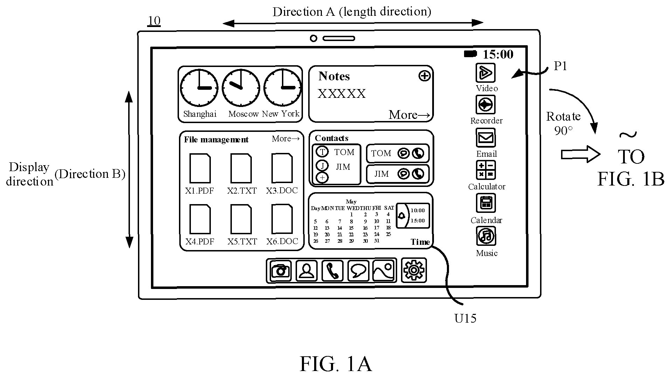

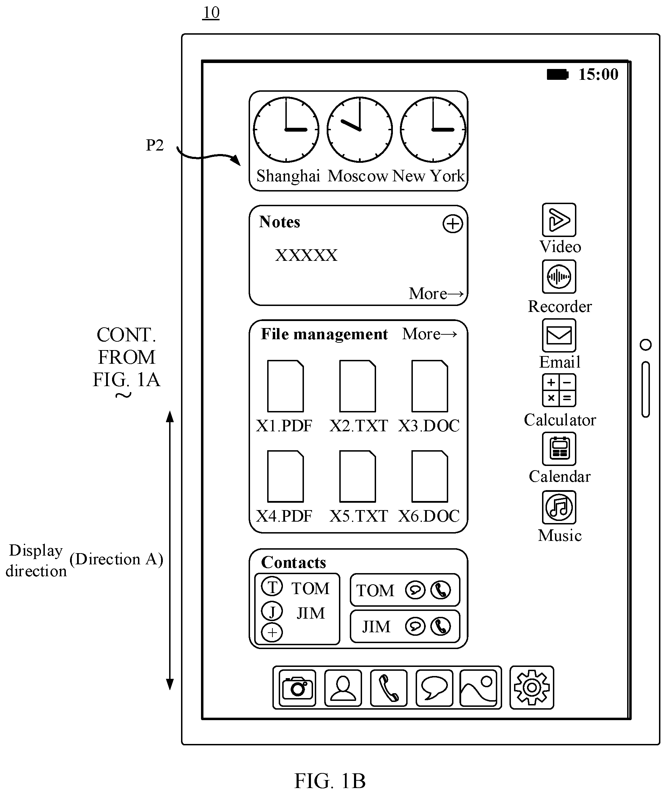

The electronic device may usually use different directions (for example, a length direction or a width direction of a display of the electronic device) as a top-bottom direction (referred to as a display direction below) of a display interface to display the interface. However, because a length and a width of the display of the electronic device are usually different, a layout manner of display elements in a desktop interface displayed in a display direction may not be suitable for a desktop interface displayed in another display direction. As a result, after the display direction of the electronic device is switched, the display elements displayed in the desktop interface before the display direction is switched may not be completely displayed in the desktop interface after the display direction is switched, affecting user experience. For example, refer to FIG. 1A and FIG. 1B. An electronic device displays a desktop interface P1 by using a direction B as a display direction, and the desktop interface P1 includes a time widget U15. After detecting that the electronic device rotates by 90°, the electronic device may switch to display a desktop interface P2 by using a direction A as the display direction. Because there is no sufficient display area to lay out the time widget U15 after display elements other than the time widget U15 in the desktop interface P1 are laid out in the desktop interface P2, the time widget U15 cannot be displayed.

### SUMMARY

Embodiments of this application provide a display method, a readable storage medium, an electronic device, and a program product.

According to a first aspect, a display method is provided, applied to an electronic device. The method includes: displaying a first desktop interface in a first display direction of the electronic device, where a size of an empty display area in a display area used to lay out a display element in the first desktop interface is a first size; detecting a first operation of a user, where the first operation includes a modification operation on a first display element, the modification operation is used to decrease the size of the empty display area by a second size, and the second size is less than or equal to the first size; and when the first operation does not meet a modification condition, not performing the first operation.

In the method, when the size of the empty display area in the first desktop interface is greater than a size to be decreased by using the first operation, if the first operation does not meet the modification condition, the electronic device may not perform the first operation. The modification condition may indicate that all display elements in the first desktop interface after the first operation is performed may be displayed in a desktop interface displayed in a second display direction (perpendicular to the first display direction). In this way, it can be avoided that after the first operation is performed, the electronic device cannot display all display elements (the display elements in the first desktop interface after the first operation is performed) in a desktop interface displayed in the first display direction (for example, a length direction or a width direction) when the electronic device displays a desktop in the second display direction (for example, the length direction or the width direction), to help improve user experience.

In some implementations, a length and a width of a display of the electronic device are different.

In some implementations, the display area used to lay out the display element may be an icon display area below.

In a possible implementation of the first aspect, grid of the display area used to lay out the display element in the first desktop interface includes a grid with m rows and n columns, m and n are positive integers greater than 1, and m and n are different; and the first operation is an operation of adding the first display element to the grid with m rows and n columns, where that the second size is less than or equal to the first size includes that a grid size of the first display element is less than or equal to a size of an empty grid in the grid with m rows and n columns; or the first display element is a display element in the first desktop interface, and the first operation is an operation of increasing a grid size of the first display element, where that the second size is less than or equal to the first size includes that an increased size of the grid size of the first display element is less than or equal to a size of an empty grid in the grid with m rows and n columns.

In this implementation, the size decreased by using the first operation may be the grid size of the first display element or the increased grid size of the first display element.

In a possible implementation of the first aspect, the modification condition indicates that when a grid size of a target display element is not adjusted, the target display element is capable of being laid out in a second desktop interface displayed in a second display direction, where a grid of a display area, in the second desktop interface, used to lay out a display element includes a grid with n rows and m columns, and the second display direction is perpendicular to the first display direction; and
when the first operation is an operation of increasing a size of the first display element, the target display element includes a display element other than the first display element in the display element in the first desktop interface, and the first display element whose size is increased; or
when the first operation is the operation of adding the first display element to the grid with m rows and n columns, the target display element includes the display element in the first desktop interface and the first display element.

In a possible implementation of the first aspect, the modification condition includes: both m and n are integer multiples of 4; or a remainder b obtained by dividing m by 4 is different from a remainder d obtained by dividing n by 4, both b and d are even numbers, and a sum of quantities of grids occupied by display elements whose grid sizes are greater than two rows and four columns in the target display element is less than or equal to 16a×c, where a is equal to (m-b)/4, and c is equal to (n-d)/4; or both b and d are 2, and a sum of quantities of grids occupied by display elements whose grid sizes are greater than two rows and four columns in the target display element is less than or equal to 16a×c+8×e, where e is a minimum value in a and c; or one of b and d is an odd number, the other is an even number, at least one of b and d is less than 2, a sum of quantities of grids occupied by display elements whose grid sizes are greater than two rows and four columns in the target display element is less than or equal to 16a×c, and a difference obtained by subtracting a sum of quantities of grids occupied by display elements whose grid sizes are greater than one row and one column in the target display element from a total quantity of grids in the grid with m rows and n columns is greater than or equal to an odd number in m and n; or one of b and d is an odd number, the other is an even number, both b and d are greater than or equal to 2, a sum of quantities of grids occupied by display elements whose grid sizes are greater than two rows and four columns in the target display element is less than or equal to 16a×c+8×e, and a difference obtained by subtracting a sum of quantities of grids occupied by display elements whose grid sizes are greater than one row and one column in the target display element from a total quantity of grids in the grid with m rows and n columns is greater than or equal to an odd number in m and n; or both b and d are odd numbers, at least one of b and d is less than 2, a sum of quantities of grids occupied by display elements whose grid sizes are greater than two rows and four columns in the target display element is less than or equal to 16a×c, and a difference obtained by subtracting a sum of quantities of grids occupied by display elements whose grid sizes are greater than one row and one column in the target display element from a total quantity of grids in the grid with m rows and n columns is greater than or equal to a maximum value in m and n; or both b and d are 3, a sum of quantities of grids occupied by display elements whose grid sizes are greater than two rows and four columns in the target display element is less than or equal to 16a×c+8×e, and a difference obtained by subtracting a sum of quantities of grids occupied by display elements whose grid sizes are greater than one row and one column in the target display element from a total quantity of grids in the grid with m rows and n columns is greater than or equal to a maximum value in m and n; or the target display element is capable of being completely laid out in the grid with n rows and m columns in a preset layout manner.

In this implementation, the electronic device may determine, based on a grid division manner of the first desktop interface and a grid size of the target display element, whether the first operation meets the modification condition. Alternatively, the target display element is pre-laid out in the preset layout manner, and it is determined that the first operation meets the modification condition when the target display element can be completely laid out in the grid with n rows and m columns in the preset layout manner. In this way, it can be ensured that after the display direction of the electronic device changes, the electronic device can display the target display element on one desktop interface without changing the grid size of the target display element.

In a possible implementation of the first aspect, when determining that the modification condition is not met, but detecting a second operation of confirming, by the user, to perform the first operation, the electronic device may also perform the first operation.

In a possible implementation of the first aspect, the method further includes: when the first operation meets the modification condition, performing the first operation, and displaying a third desktop interface after the first operation is performed, where a grid of a display area used to lay out a display element in the third desktop interface includes a grid with m rows and n columns, and the target display element is laid out in the grid with m rows and n columns.

In a possible implementation of the first aspect, the method further includes: detecting that a display direction of the electronic device is switched from the first display direction to the second display direction, laying out the target display element in the grid with n rows and m columns of the second desktop interface, and displaying the second desktop interface in the second display direction after layout is completed, where the target display element has the same grid size in the second desktop interface as in the third desktop interface.

In a possible implementation of the first aspect, laying out the target display element in the grid with n rows and m columns of the second desktop interface includes: when the target display element is capable of being completely laid out in the grid with n rows and m columns in a first manner when the grid size of the target display element is not adjusted, laying out the target display element in the grid with n rows and m columns of the second desktop interface in the first manner; and when the target display element is incapable of being completely laid out in the grid with n rows and m columns in the first manner when the grid size of the target display element is not adjusted, completely laying out the target display element in the grid with n rows and m columns of the second desktop interface in a second manner.

In this implementation, the electronic device may preset a plurality of layout manners, for example, a first layout manner, a second layout manner, and a third layout manner below. When the target display element cannot be completely laid out in the grid with n rows and m columns in the first manner, the target display element may be completely laid out in the grid with n rows and m columns in the second manner. In this way, when the target display element cannot be completely laid out in the grid with n rows and m columns in the first manner because the grid size of the target display element is complex, failure to completely display the target display element in the second desktop interface can be avoided.

For example, the first manner may be any manner in the following first layout manner, and the second manner may be any manner in the following third layout manner; or the first manner may be any manner in the following first layout manner, and the second manner may be any manner in the following second layout manner; or the first manner may be any manner in the following second layout manner, and the second manner may be any manner in the following third layout manner; or the first manner may be any manner in the following second layout manner, and the second manner may be any manner in the following first layout manner.

In a possible implementation of the first aspect, laying out the target display element in the grid with n rows and m columns of the second desktop interface in the first manner includes: traversing layout elements in the grid with m rows and n columns of the third desktop interface in a first traversal manner, and determining layout rankings of the layout elements, where a layout element traversed earlier is laid out earlier, and the layout elements include the target display element and an empty grid in the grid with m rows and n columns of the third desktop interface; and sequentially laying out the layout elements into the grid with n rows and m columns of the second desktop interface in the layout rankings of the layout elements, where during layout, any first layout element in the layout elements is laid out into an empty grid area that is first traversed in the first traversal manner and that is in an empty grid area having a same grid size as the first layout element in the grid with n rows and m columns of the second desktop interface, where the first traversal manner is traversing in a first row-column sequence by using a grid in a first corner of the grid with m rows and n columns or the grid with n rows and m columns of the second desktop interface as a traversal start point, the first corner is an upper left corner, a lower left corner, an upper right corner, or a lower right corner, and the first row-column sequence is a sequence of rows then columns or a row-column sequence of columns then rows.

In this implementation, the first manner is any manner in the following first layout manner. When the target display element is laid out in the first manner, relative locations of a part of layout elements in the third desktop interface may be retained, so that the user can quickly find, in the second desktop interface, a display element on which a related operation needs to be performed, to help improve user experience.

In a possible implementation of the first aspect, completely laying out the target display element in the grid with n rows and m columns of the second desktop interface in the second manner includes: sequentially laying out the target display element into the grid with n rows and m columns of the second desktop interface in descending order of the grid size of the target display element, where during layout, any first target display element in the target display element is laid out into an empty grid area that is first traversed in a second traversal manner and that is in an empty grid area having a same grid size as the first target display element in the grid with n rows and m columns of the second desktop interface, where the second traversal manner is traversing in a second row-column sequence by using a grid in a second corner of the grid with n rows and m columns of the second desktop interface as a traversal start point, the second corner is an upper left corner, a lower left corner, an upper right corner, or a lower right corner, and the second row-column sequence is a sequence of rows then columns or a row-column sequence of columns then rows.

In this implementation, the second manner is any manner in the following third layout manner. The third layout manner can ensure that the target display element can be completely laid out in the grid with n rows and m columns, to avoid failure to completely display the target display element in the second desktop interface.

In a possible implementation of the first aspect, laying out the target display element in the grid with n rows and m columns of the second desktop interface in the first manner includes: traversing layout elements in the grid with m rows and n columns of the third desktop interface in a second traversal manner, and determining layout rankings of the layout elements, where a layout element traversed earlier is laid out earlier, and the layout elements include the target display element and an empty grid in the grid with m rows and n columns of the third desktop interface; the second traversal manner is: traversing layout elements row by row in a sequence from a first row to an m^{th} row by using a grid in the first row and a first column in the grid with m rows and n columns of the third desktop interface as a traversal start point, and when traversing layout elements occupying an i^{th} row, traversing layout elements column by column in ascending order of differences between quantities of columns occupied by the layout elements and a quantity of columns of the traversal start point, where i is a positive integer less than or equal to m; and in a process of traversing the layout elements occupying the i^{th} row: when a next untraversed second layout element occupying the i^{th} row further occupies a grid in an (i+1)^{th} row, an untraversed layout element in the (i+1)^{th} row is traversed; and when the second layout element does not occupy the grid in the (i+1)^{th} row, a layout element whose row number of a ranking grid is smallest in an untraversed layout element whose column number of a ranking grid is the same as a column number of a ranking grid of the second layout element and whose row number of the ranking grid is less than or equal to i is traversed, where the ranking grid is a grid in an upper left corner of a grid occupied by a corresponding display element; and sequentially laying out the layout elements into the grid with n rows and m columns of the second desktop interface in the layout rankings of the layout elements.

In this implementation, the first manner is that the target display element is laid out in a ninth layout element traversal manner in the following second layout manner. When the target display element is laid out in the ninth layout element traversal manner, relative locations of a part of layout elements in the third desktop interface may be retained, so that the user can quickly find, in the second desktop interface, a display element on which a related operation needs to be performed, to help improve user experience.

In a possible implementation of the first aspect, sequentially laying out the layout elements into the grid with n rows and m columns of the second desktop interface in the layout rankings of the layout elements includes: laying out a third layout element whose grid size is p rows and q columns (where p and q are positive integers) in the layout elements into the grid with n rows and m columns in the following manners: when at least a part of laid-out elements in a plurality of laid-out elements that have been laid out in a grid area with r rows and s columns are, after locations of the at least part of laid-out elements are adjusted, capable of being laid out in a grid area with p rows and t columns and occupying all grids in the grid area with p rows and t columns, adjusting locations of the plurality of laid-out elements to lay out the plurality of laid-out elements in the grid area with p rows and t columns, and laying out the third layout element in a remaining grid area of a p-row grid in which the grid area with p rows and t columns is located, where r, s, and t are positive integers, p is greater than r, t is less than s, and a sum of q and t is less than m; or when a plurality of laid-out elements that have been laid out in a grid area with r rows and s columns are, after locations of the plurality of laid-out elements are adjusted, capable of being laid out in a grid area with p rows and t columns and occupying all grids in the grid area with p rows and t columns, laying out the third layout element in an empty grid area that is first traversed in a sequence of rows then columns by using a first column in a first row as a start point and that is in an empty grid area having a same grid size as the third layout element in the grid with n rows and m columns.

In a possible implementation of the first aspect, the display element includes at least one of an icon or a service widget.

According to a second aspect, a display method is provided, applied to an electronic device. The method includes: displaying a third desktop interface in a first display direction, where a grid of a display area used to lay out display elements in the third desktop interface includes a grid with m rows and n columns, and a plurality of display elements are laid out in the grid with m rows and n columns; detecting that a display direction of the electronic device is switched from the first display direction to a second display direction; and when the plurality of display elements are capable of being completely laid out in a grid with n rows and m columns in a first manner when grid sizes of the plurality of display elements are not adjusted, laying out the plurality of display elements in the grid with n rows and m columns of a second desktop interface in the first manner, and displaying the second desktop interface in the second display direction, where laying out the plurality of display elements in the grid with n rows and m columns of the second desktop interface in the first manner includes: traversing layout elements in the grid with m rows and n columns of the third desktop interface in a first traversal manner, and determining layout rankings of the layout elements, where a layout element traversed earlier is laid out earlier, and the layout elements include the plurality of display elements and an empty grid in the grid with m rows and n columns of the third desktop interface; and sequentially laying out the layout elements into the grid with n rows and m columns of the second desktop interface in the layout rankings of the layout elements, where during layout, any fourth layout element in the layout elements is laid out into an empty grid area that is first traversed in the first traversal manner and that is in at least one empty grid area having a same grid size as the fourth layout element in the grid with n rows and m columns of the second desktop interface, where the first traversal manner is traversing in a first row-column sequence by using a grid in a first corner of the grid with m rows and n columns or the grid with n rows and m columns as a start point, the first corner is an upper left corner, a lower left corner, an upper right corner, or a lower right corner, and the first row-column sequence is a sequence of rows then columns or a row-column sequence of columns then rows.

In this implementation, the first manner is any manner in the following first layout manner. When the target display element is laid out in the first manner, relative locations of a part of layout elements in the third desktop interface may be retained, so that the user can quickly find, in the second desktop interface, a display element on which a related operation needs to be performed, to help improve user experience.

In a possible implementation of the first aspect, the method further includes: when the plurality of display elements are incapable of being completely laid out in the grid with n rows and m columns in the first manner when the grid sizes of the plurality of display elements are not adjusted, laying out the plurality of display elements in the grid with n rows and m columns of the second desktop interface in a second manner, and displaying the second desktop interface, where completely laying out the plurality of display elements in the grid with n rows and m columns of the second desktop interface in the second manner includes: sequentially laying out the plurality of display elements into the grid with n rows and m columns of the second desktop interface in descending order of the grid sizes of the plurality of display elements, where during layout, any second display element in the plurality of display elements is laid out into an empty grid area that is first traversed in a second traversal manner and that is in an empty grid area having a same grid size as the second display element in the grid with n rows and m columns of the second desktop interface, where the second traversal manner is traversing in a second row-column sequence by using a grid in a second corner of the grid with n rows and m columns as a start point, where the second corner is an upper left corner, a lower left corner, an upper right corner, or a lower right corner, and the second row-column sequence is a sequence of rows then columns or a row-column sequence of columns then rows.

In this implementation, the second manner is any manner in the following third layout manner. The third layout manner can ensure that the target display element can be completely laid out in the grid with n rows and m columns, to avoid failure to completely display the target display element in the second desktop interface.

In a possible implementation of the first aspect, the plurality of display elements and the grid with m rows and n columns meet the following conditions: both m and n are integer multiples of 4; or a remainder b obtained by dividing m by 4 is different from a remainder d obtained by dividing n by 4, both b and d are even numbers, and a sum of quantities of grids occupied by display elements whose grid sizes are greater than two rows and four columns in the plurality of display elements is less than or equal to 16a×c, where a is equal to (m-b)/4, and c is equal to (n-d)/4; or both b and d are 2, and a sum of quantities of grids occupied by display elements whose grid sizes are greater than two rows and four columns in the plurality of display elements is less than or equal to 16a×c+8×e, where e is a minimum value in a and c; or one of b and d is an odd number, the other is an even number, at least one of b and d is less than 2, a sum of quantities of grids occupied by display elements whose grid sizes are greater than two rows and four columns in the plurality of display elements is less than or equal to 16a×c, and a difference obtained by subtracting a sum of quantities of grids occupied by display elements whose grid sizes are greater than one row and one column in the plurality of display elements from a total quantity of grids in the grid with m rows and n columns exists; or one of b and d is an odd number, the other is an even number, both b and d are greater than or equal to 2, a sum of quantities of grids occupied by display elements whose grid sizes are greater than two rows and four columns in the plurality of display elements is less than or equal to 16a×c+8×e, and a difference obtained by subtracting a sum of quantities of grids occupied by display elements whose grid sizes are greater than one row and one column in the plurality of display elements from a total quantity of grids in the grid with m rows and n columns is greater than or equal to an odd number in m and n; or both b and d are odd numbers, at least one of b and d is less than 2, a sum of quantities of grids occupied by display elements whose grid sizes are greater than two rows and four columns in the plurality of display elements is less than or equal to 16a×c, and a difference obtained by subtracting a sum of quantities of grids occupied by display elements whose grid sizes are greater than one row and one column in the plurality of display elements from a total quantity of grids in the grid with m rows and n columns is greater than or equal to a maximum value in m and n; or both b and d are 3, a sum of quantities of grids occupied by display elements whose grid sizes are greater than two rows and four columns in the plurality of display elements is less than or equal to 16a×c+8×e, and a difference obtained by subtracting a sum of quantities of grids occupied by display elements whose grid sizes are greater than one row and one column in the plurality of display elements from a total quantity of grids in the grid with m rows and n columns is greater than or equal to a maximum value in m and n.

In this implementation, when the grid sizes of the plurality of display elements in the third desktop interface remain unchanged, the plurality of display elements in the third desktop interface may be laid out in the grid with n rows and m columns, to avoid failure to completely display the target display element in the second desktop interface.

In a possible implementation of the second aspect, the method further includes: when the plurality of display elements is incapable of being completely laid out in the grid with n rows and m columns in the first manner when the grid sizes of the plurality of display elements are not adjusted, traversing the layout elements in the grid with m rows and n columns of the third desktop interface in the first traversal manner, and determining the layout rankings of the layout elements; and sequentially laying out a plurality of layout elements with higher layout rankings in the layout elements into the grid with n rows and m columns of the second desktop interface in corresponding layout rankings, where during layout, any fifth layout element in the plurality of layout elements is laid out into an empty grid area that is first traversed in the first traversal manner and that is in at least one empty grid area having a same grid size as the fifth layout element in the grid with n rows and m columns of the second desktop interface.

In a possible implementation of the second aspect, the display element includes at least one of an icon or a service widget.

According to a third aspect, a display method is provided, applied to an electronic device. The method includes: displaying a third desktop interface in a first display direction, where a grid of a display area used to lay out display elements in the third desktop interface includes a grid with m rows and n columns, and a plurality of display elements are laid out in the grid with m rows and n columns; detecting that a display direction of the electronic device is switched from the first display direction to a second display direction; and when the plurality of display elements are capable of being completely laid out in a grid with n rows and m columns in a first manner when grid sizes of the plurality of display elements are not adjusted, laying out the plurality of display elements in the grid with n rows and m columns of a second desktop interface in the first manner, and displaying the second desktop interface in the second display direction, where
laying out the plurality of display elements in the grid with n rows and m columns of the second desktop interface in the first manner includes: traversing layout elements in the grid with m rows and n columns of the third desktop interface in a second traversal manner, and determining layout rankings of the layout elements, where a layout element traversed earlier is laid out earlier, and the layout elements include the plurality of display elements and an empty grid in the grid with m rows and n columns of the third desktop interface; and
the second traversal manner is: traversing layout elements row by row in a sequence from a first row to an m^{th} row by using a grid in the first row and a first column in the grid with m rows and n columns of the third desktop interface as a start point, and when traversing layout elements occupying an i^{th} row, traversing layout elements column by column in ascending order of differences between quantities of columns occupied by the layout elements and a quantity of columns of the traversal start point, where i is a positive integer less than or equal to m; and in a process of traversing the layout elements occupying the i^{th} row: when a next untraversed second layout element occupying the i^{th} row further occupies a grid in an (i+1)^{th} row, an untraversed layout element in the (i+1)^{th} row is traversed; and when the second layout element does not occupy the grid in the (i+1)^{th} row, a layout element whose row number of a ranking grid is smallest in an untraversed layout element whose column number of a ranking grid is the same as a column number of a ranking grid of the second layout element and whose row number of the ranking grid is less than or equal to i is traversed, where the ranking grid is a grid in an upper left corner of a grid occupied by a corresponding display element; and
sequentially laying out the layout elements into the grid with n rows and m columns of the second desktop interface in the layout rankings of the layout elements, and laying out a sixth layout element whose grid size is p rows and q columns (where p and q are positive integers) in the layout elements into the grid with n rows and m columns in the following manners: when there are a plurality of laid-out elements that have been laid out in a grid area with r rows and s columns and that are, after locations of the plurality of laid-out elements are adjusted, capable of being laid out in a grid area with p rows and t columns and occupying all grids in the grid area with p rows and t columns, adjusting locations of the plurality of laid-out elements to lay out the plurality of laid-out elements in the grid area with p rows and t columns, and laying out the sixth layout element in an empty grid area of a p-row grid in which the grid area with p rows and t columns is located, where r, s, and t are positive integers, p is greater than r, t is less than s, and a sum of q and t is less than m; or when there is no plurality of laid-out elements that have been laid out in a grid area with r rows and s columns and that are, after locations of the plurality of laid-out elements are adjusted, capable of being laid out in a grid area with p rows and t columns and occupying all grids in the grid area with p rows and t columns, laying out the sixth layout element in an empty grid area that is first traversed in a sequence of rows then columns by using a first column in a first row as a start point and that is in an empty grid area having a same grid size as the sixth layout element in the grid with n rows and m columns.

In this implementation, the first manner is that the target display element is laid out in a ninth layout element traversal manner (a second traversal manner) in the following second layout manner. When the target display element is laid out in the ninth layout element traversal manner, relative locations of a part of layout elements in the third desktop interface may be retained, so that the user can quickly find, in the second desktop interface, a display element on which a related operation needs to be performed, to help improve user experience.

In a possible implementation of the third aspect, the method further includes: when the plurality of display elements are incapable of being completely laid out in the grid with n rows and m columns in the first manner when the grid sizes of the plurality of display elements are not adjusted, laying out the plurality of display elements in the grid with n rows and m columns of the second desktop interface in a second manner, and displaying the second desktop interface, where completely laying out the plurality of display elements in the grid with n rows and m columns of the second desktop interface in the second manner includes: sequentially laying out the plurality of display elements into the grid with n rows and m columns of the second desktop interface in descending order of the grid sizes of the plurality of display elements, where during layout, any third display element in the plurality of display elements is laid out into an empty grid area that is first traversed in a second traversal manner and that is in an empty grid area having a same grid size as the third display element in the grid with n rows and m columns of the second desktop interface, where the second traversal manner is traversing in a second row-column sequence by using a grid in a second corner of the grid with n rows and m columns as a start point, where the second corner is an upper left corner, a lower left corner, an upper right corner, or a lower right corner, and the second row-column sequence is a sequence of rows then columns or a row-column sequence of columns then rows.

In this implementation, the second manner is any manner in the following third layout manner. The third layout manner can ensure that the target display element can be completely laid out in the grid with n rows and m columns, to avoid failure to completely display the target display element in the second desktop interface.

In a possible implementation of the third aspect, the plurality of display elements and the grid with m rows and n columns meet the following conditions: both m and n are integer multiples of 4; or a remainder b obtained by dividing m by 4 is different from a remainder d obtained by dividing n by 4, both b and d are even numbers, and a sum of quantities of grids occupied by display elements whose grid sizes are greater than two rows and four columns in the plurality of display elements is less than or equal to 16a×c, where a is equal to (m-b)/4, and c is equal to (n-d)/4; or both b and d are 2, and a sum of quantities of grids occupied by display elements whose grid sizes are greater than two rows and four columns in the plurality of display elements is less than or equal to 16a×c+8×e, where e is a minimum value in a and c; or one of b and d is an odd number, the other is an even number, at least one of b and d is less than 2, a sum of quantities of grids occupied by display elements whose grid sizes are greater than two rows and four columns in the plurality of display elements is less than or equal to 16a×c, and a difference obtained by subtracting a sum of quantities of grids occupied by display elements whose grid sizes are greater than one row and one column in the plurality of display elements from a total quantity of grids in the grid with m rows and n columns exists; or one of b and d is an odd number, the other is an even number, both b and d are greater than or equal to 2, a sum of quantities of grids occupied by display elements whose grid sizes are greater than two rows and four columns in the plurality of display elements is less than or equal to 16a×c+8×e, and a difference obtained by subtracting a sum of quantities of grids occupied by display elements whose grid sizes are greater than one row and one column in the plurality of display elements from a total quantity of grids in the grid with m rows and n columns is greater than or equal to an odd number in m and n; or both b and d are odd numbers, at least one of b and d is less than 2, a sum of quantities of grids occupied by display elements whose grid sizes are greater than two rows and four columns in the plurality of display elements is less than or equal to 16a×c, and a difference obtained by subtracting a sum of quantities of grids occupied by display elements whose grid sizes are greater than one row and one column in the plurality of display elements from a total quantity of grids in the grid with m rows and n columns is greater than or equal to a maximum value in m and n; or both b and d are 3, a sum of quantities of grids occupied by display elements whose grid sizes are greater than two rows and four columns in the plurality of display elements is less than or equal to 16a×c+8×e, and a difference obtained by subtracting a sum of quantities of grids occupied by display elements whose grid sizes are greater than one row and one column in the plurality of display elements from a total quantity of grids in the grid with m rows and n columns is greater than or equal to a maximum value in m and n.

In a possible implementation of the third aspect, the display element includes at least one of an icon or a service widget.

According to a fourth aspect, an electronic device is provided. The electronic device includes: a memory, configured to store one or more programs; and a processor, configured to execute one or more programs, so that the electronic device implements any display method according to any one of the first aspect and the possible implementations of the first aspect, any one of the second aspect and the possible implementations of the second aspect, and any one of the third aspect and the possible implementations of the third aspect.

According to a fifth aspect, a readable storage medium is provided. The readable storage medium includes one or more programs. When the one or more programs are executed on an electronic device, the electronic device is enabled to implement any display method according to any one of the first aspect and the possible implementations of the first aspect, any one of the second aspect and the possible implementations of the second aspect, and any one of the third aspect and the possible implementations of the third aspect.

According to a sixth aspect, a program product is provided. When the program product runs on an electronic device, the electronic device is enabled to implement any display method according to any one of the first aspect and the possible implementations of the first aspect, any one of the second aspect and the possible implementations of the second aspect, and any one of the third aspect and the possible implementations of the third aspect.

For beneficial effects of the fourth aspect to the sixth aspect, refer to content of the first aspect to the third aspect. Details are not described herein again.

### BRIEF DESCRIPTION OF DRAWINGS

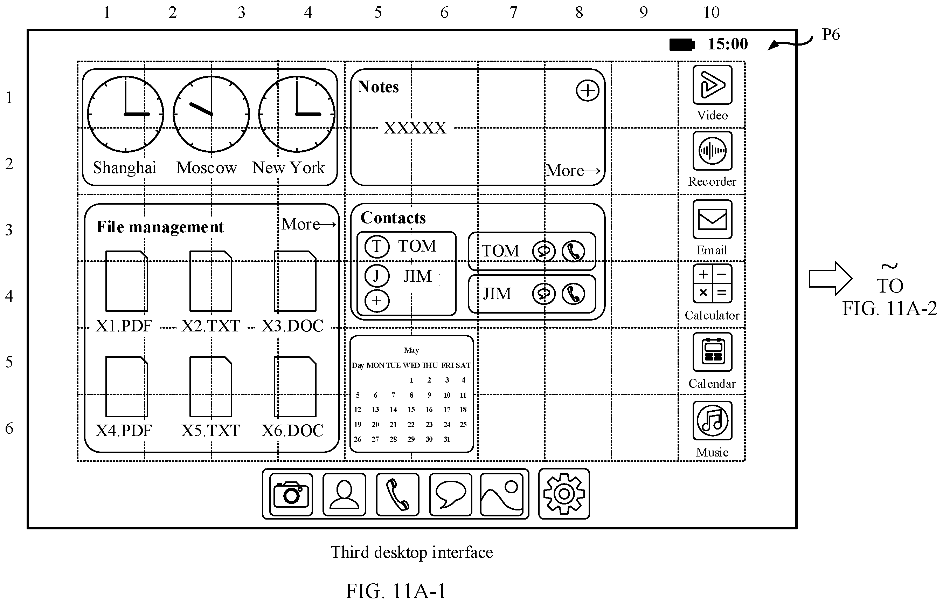

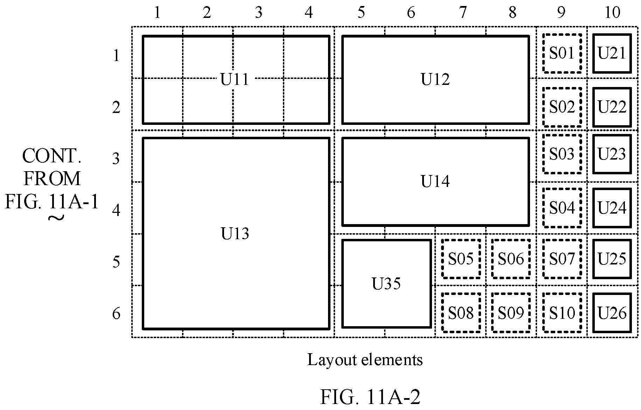

FIG. 1A and FIG. 1B are a diagram of desktop interfaces displayed by an electronic device before and after the electronic device adjusts a display direction according to some embodiments of this application;
FIG. 2 is a diagram of grid division manners of a tablet computer 10 in different display directions according to some embodiments of this application;
FIG. 3A and FIG. 3B are a diagram of displaying a desktop interface P1 shown in FIG. 1A and FIG. 1B in a grid by a tablet computer 10;
FIG. 4A-1 to FIG. 4A-3 are a diagram of a display interface of a tablet computer 10 in a process in which a user adds a display element to a desktop interface P3 according to some embodiments of this application;
FIG. 4B-1 and FIG. 4B-2 are a diagram of comparison between a desktop interface P6 and a desktop interface P7 displayed before and after a display direction of a tablet computer 10 is adjusted according to some embodiments of this application;
FIG. 4C-1 to FIG. 4C-3 are a diagram of a display interface of a tablet computer 10 in a process in which a user modifies a size of a display element in a desktop interface P3 according to some embodiments of this application;

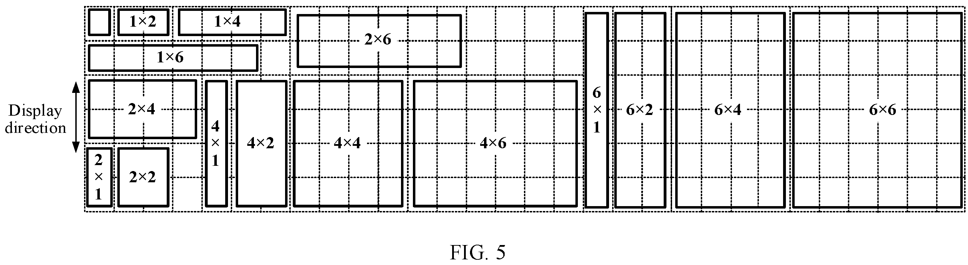

FIG. 5 is a diagram of a grid size of a display element according to some embodiments of this application;

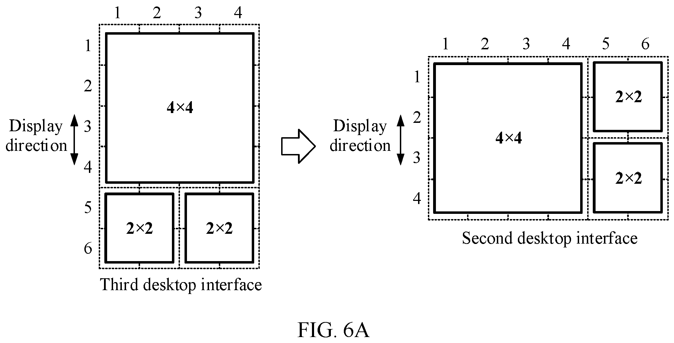

FIG. 6A is a diagram of a display interface that meets Condition A.2 according to some embodiments of this application;

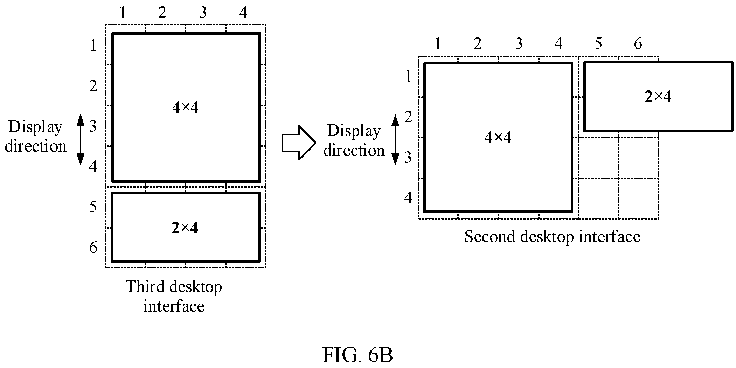

FIG. 6B is a diagram of a display interface that does not meet Condition A.2 according to some embodiments of this application;

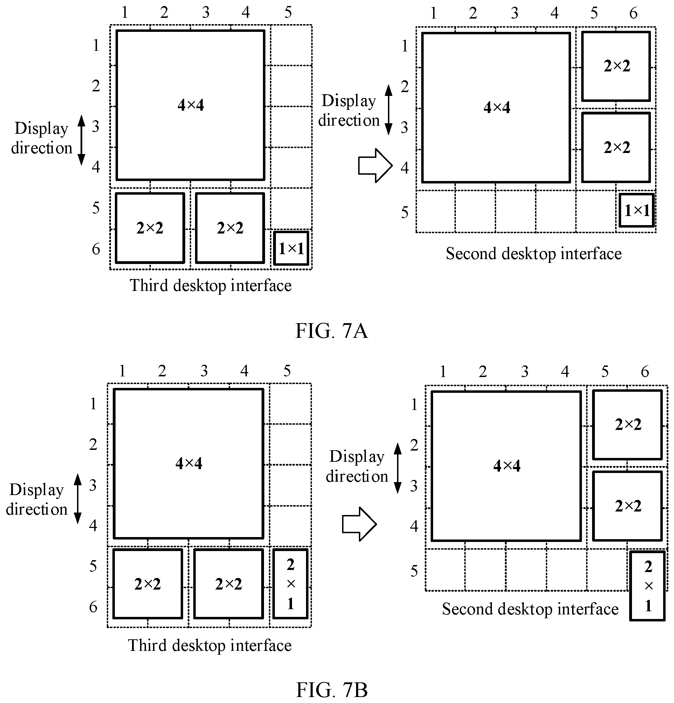

FIG. 7A is a diagram of a display interface that meets Condition A.4 according to some embodiments of this application;
FIG. 7B is a diagram of a display interface that does not meet Condition A.4 according to some embodiments of this application;

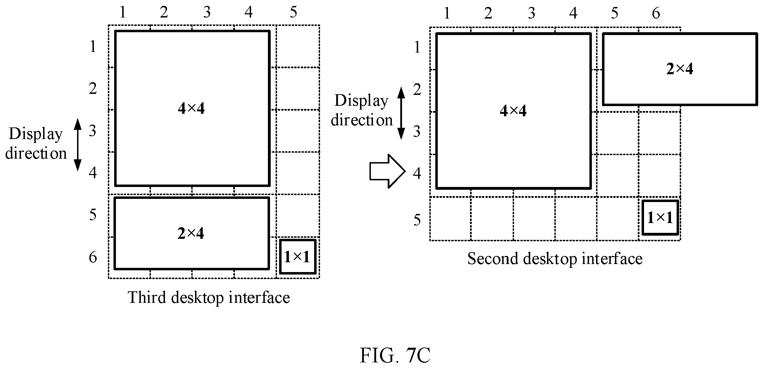

FIG. 7C is a diagram of another display interface that does not meet Condition A.4 according to some embodiments of this application;

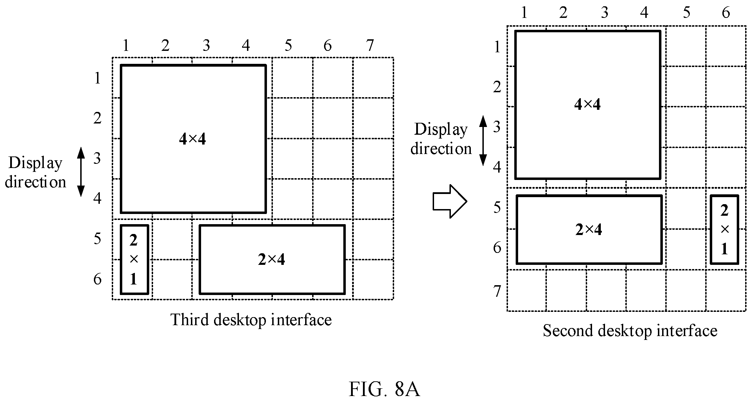

FIG. 8A is a diagram of a display interface that meets Condition A.5 according to some embodiments of this application;

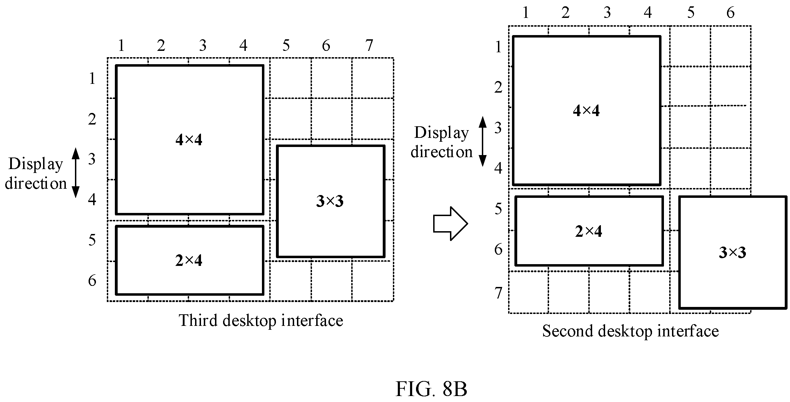

FIG. 8B is a diagram of a display interface that does not meet Condition A.5 according to some embodiments of this application;

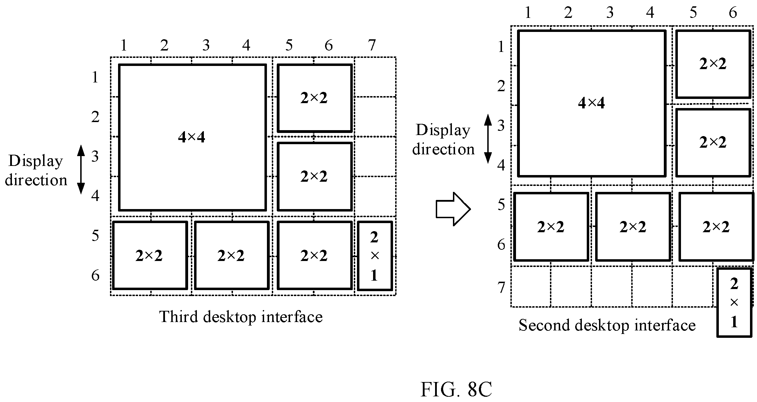

FIG. 8C is a diagram of another display interface that does not meet Condition A.5 according to some embodiments of this application;

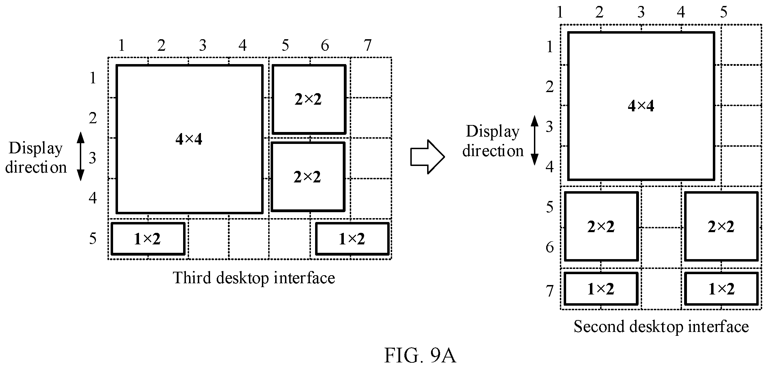

FIG. 9A is a diagram of a display interface that meets Condition A.6 according to some embodiments of this application;

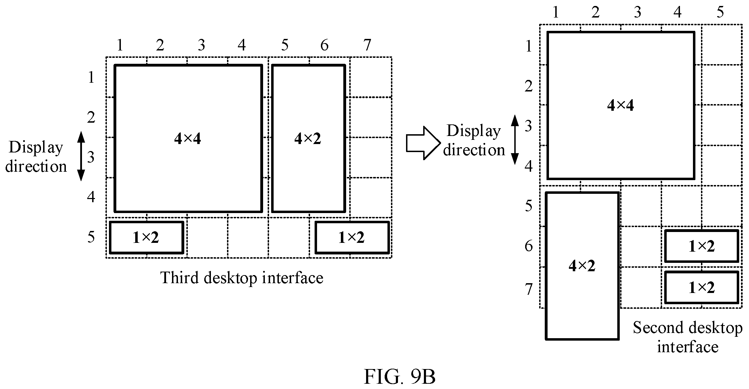

FIG. 9B is a diagram of a display interface that does not meet Condition A.6 according to some embodiments of this application;

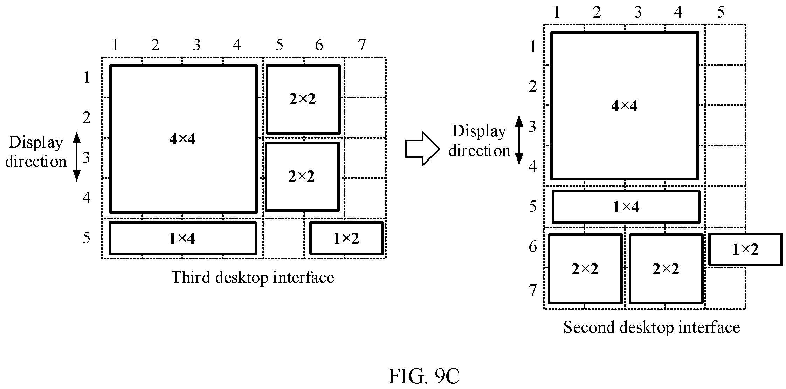

FIG. 9C is a diagram of another display interface that does not meet Condition A.6 according to some embodiments of this application;

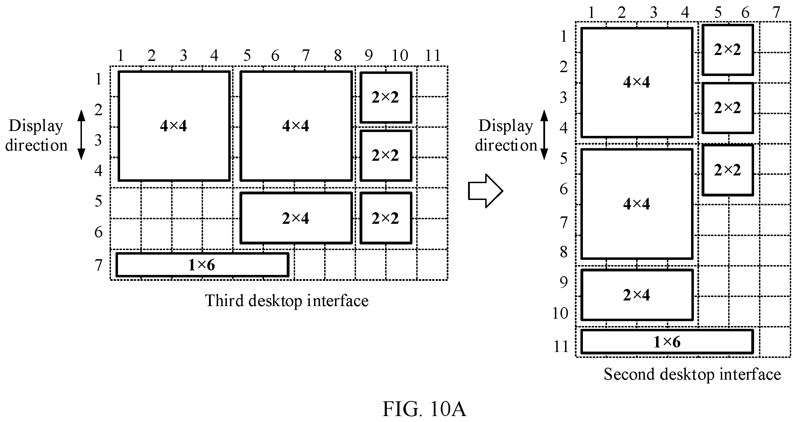

FIG. 10A is a diagram of a display interface that meets Condition A.7 according to some embodiments of this application;

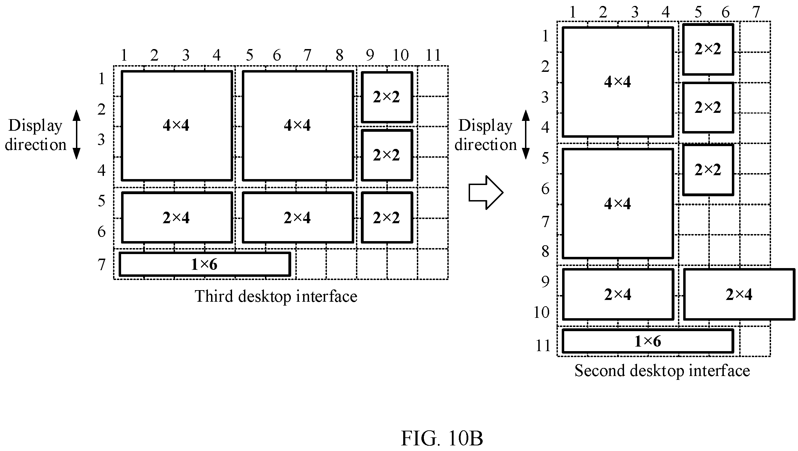

FIG. 10B is a diagram of a display interface that does not meet Condition A.7 according to some embodiments of this application;

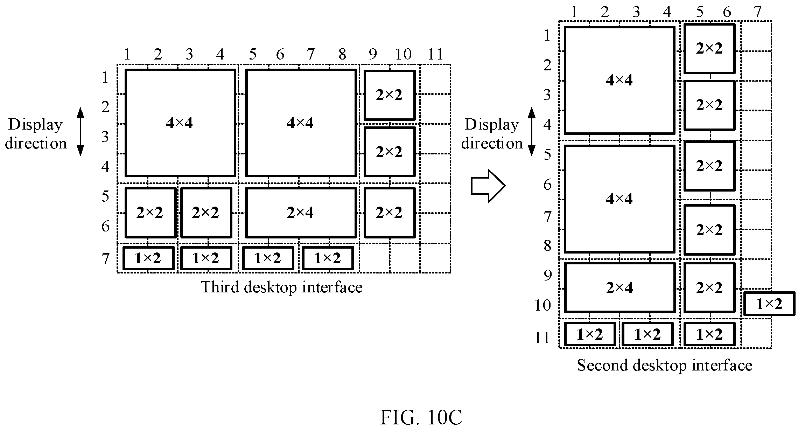

FIG. 10C is a diagram of another display interface that does not meet Condition A.7 according to some embodiments of this application;
11A-1 and FIG. 11A-2 are a diagram of layout elements in a desktop interface P6 according to some embodiments of this application;

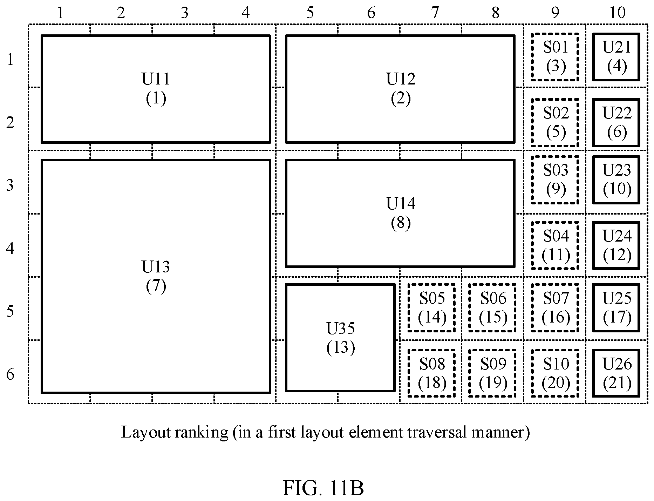

FIG. 11B is a diagram of a layout ranking of a layout element in a desktop interface P6 determined in a first layout element traversal manner according to some embodiments of this application;

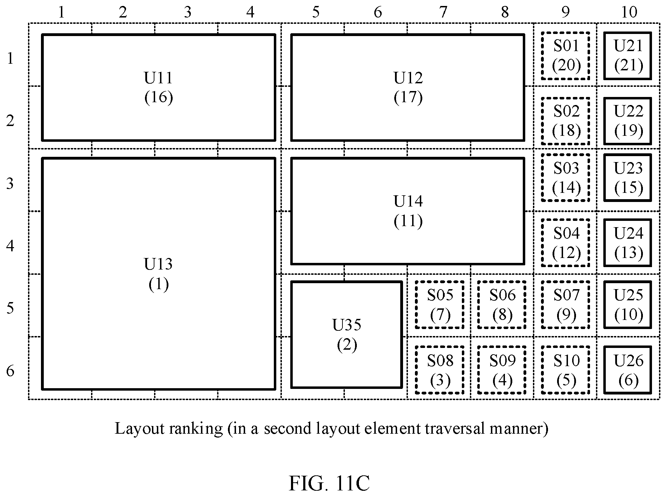

FIG. 11C is a diagram of a layout ranking of a layout element in a desktop interface P6 determined in a second layout element traversal manner according to some embodiments of this application;

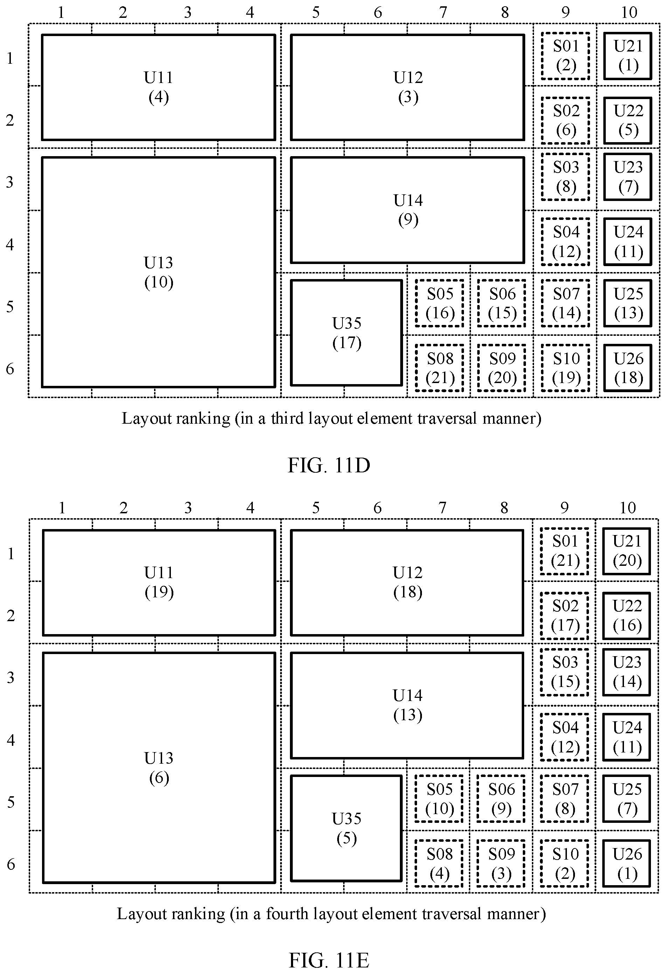

FIG. 11D is a diagram of a layout ranking of a layout element in a desktop interface P6 determined in a third layout element traversal manner according to some embodiments of this application;
FIG. 11E is a diagram of a layout ranking of a layout element in a desktop interface P6 determined in a fourth layout element traversal manner according to some embodiments of this application;

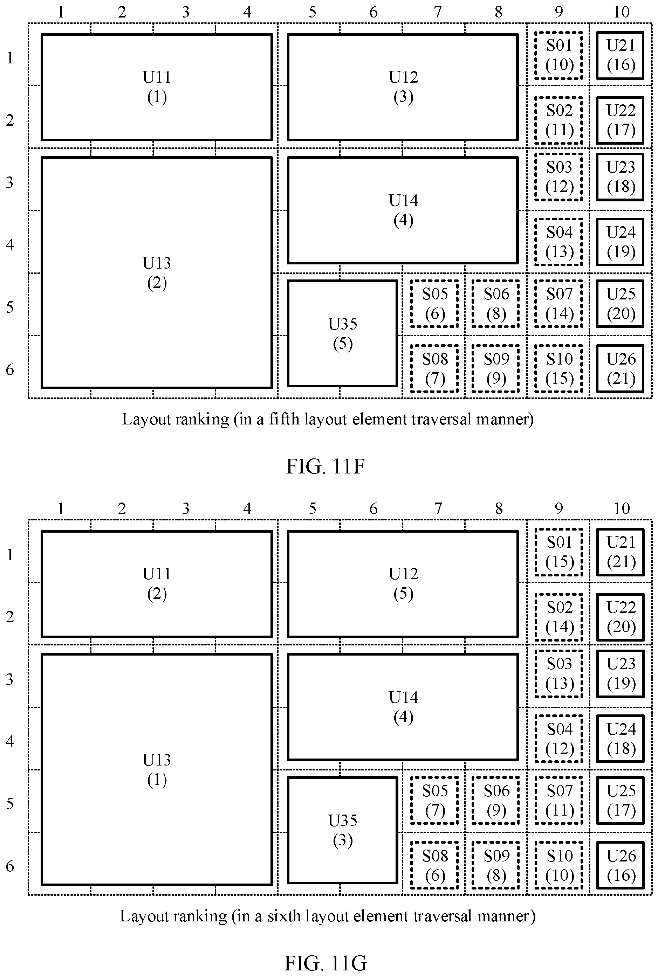

FIG. 11F is a diagram of a layout ranking of a layout element in a desktop interface P6 determined in a fifth layout element traversal manner according to some embodiments of this application;
FIG. 11G is a diagram of a layout ranking of a layout element in a desktop interface P6 determined in a sixth layout element traversal manner according to some embodiments of this application;

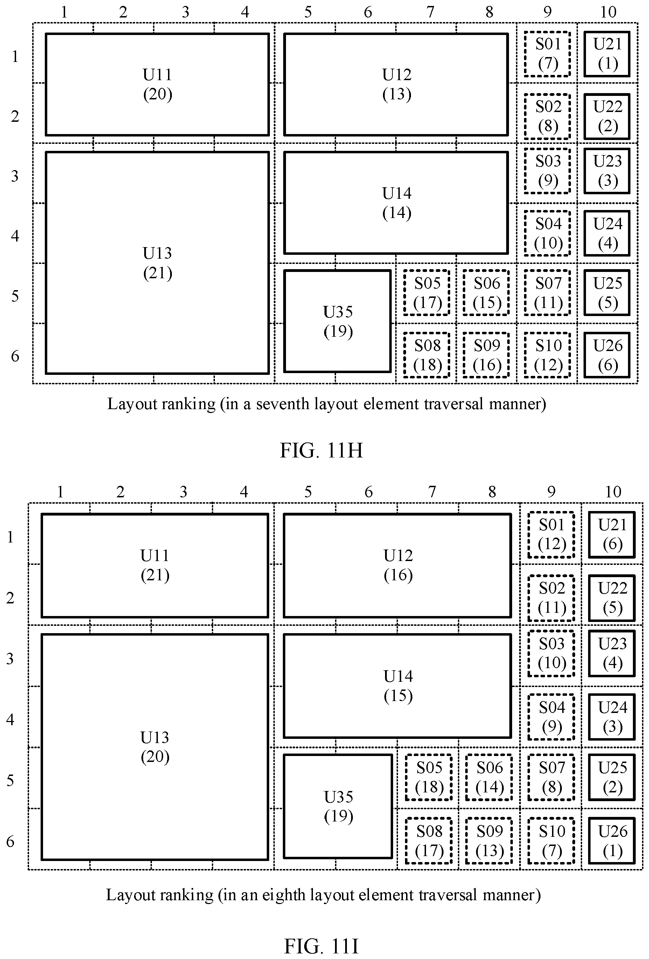

FIG. 11H is a diagram of a layout ranking of a layout element in a desktop interface P6 determined in a seventh layout element traversal manner according to some embodiments of this application;
FIG. 11I is a diagram of a layout ranking of a layout element in a desktop interface P6 determined in an eighth layout element traversal manner according to some embodiments of this application;

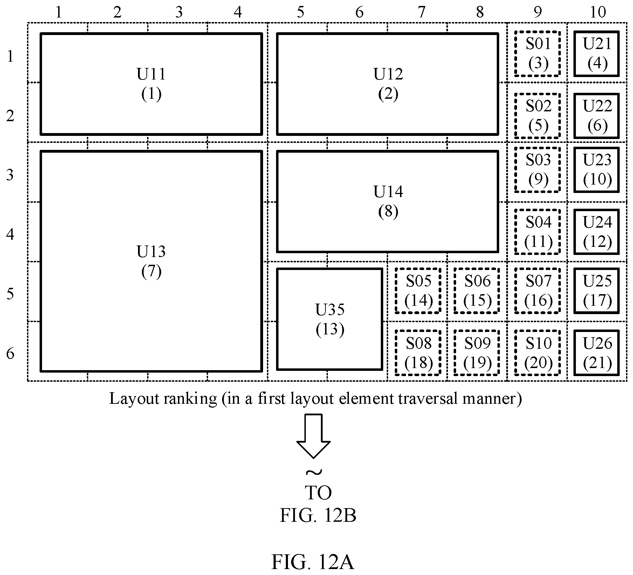

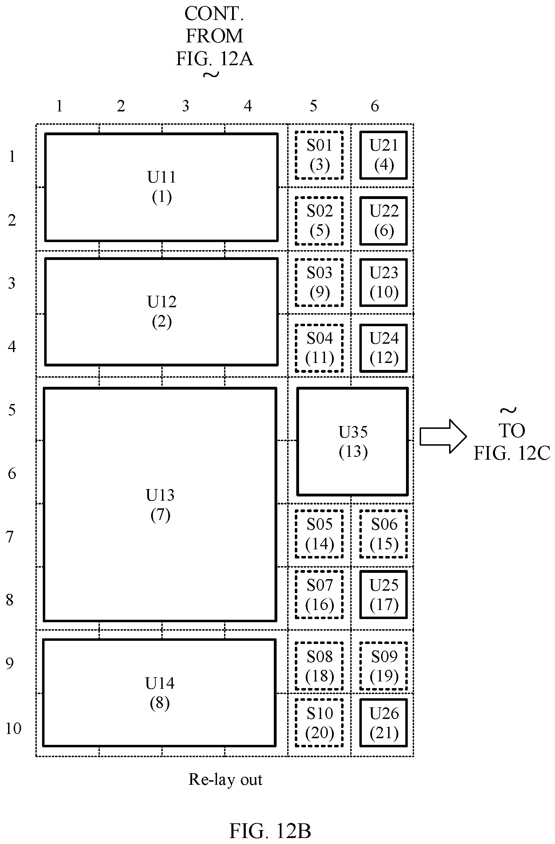

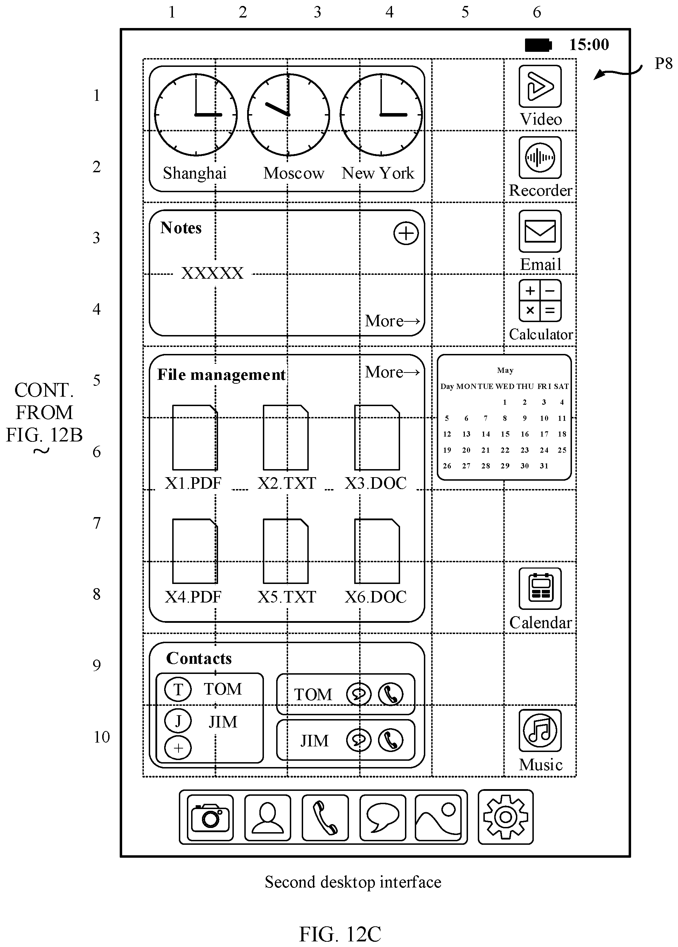

FIG. 12A to FIG. 12C are a diagram of laying out a layout element in a desktop interface P6 into a desktop interface P8 in a layout ranking determined in a first layout element traversal manner according to some embodiments of this application;

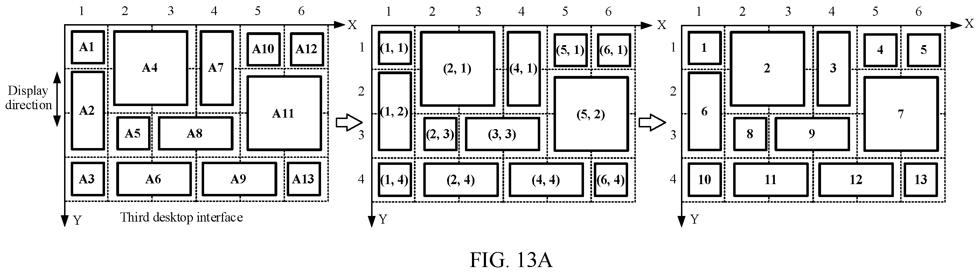

FIG. 13A is a diagram of determining layout rankings of layout elements A1 to A13 in a first layout element traversal manner according to some embodiments of this application;

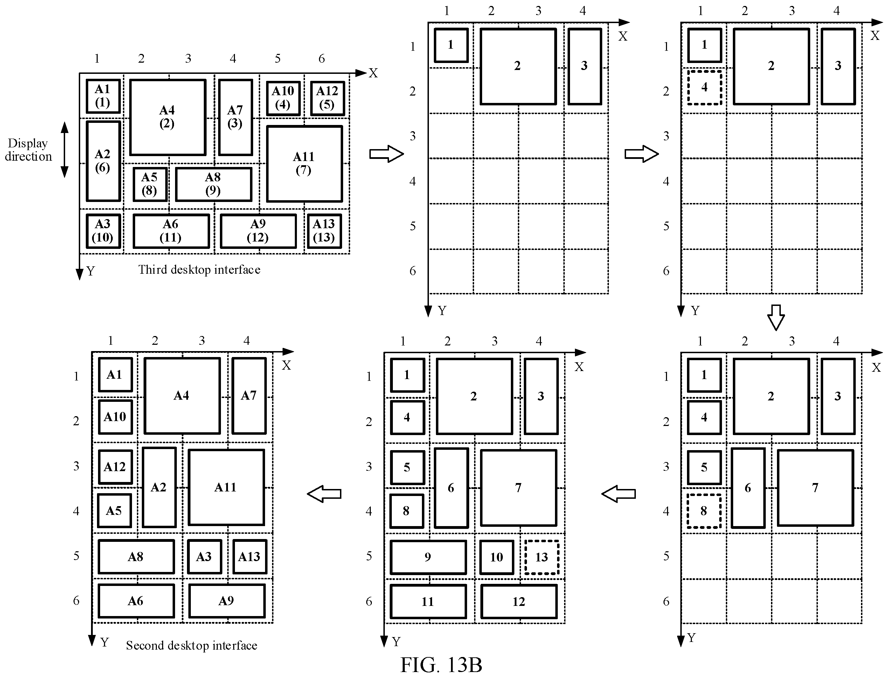

FIG. 13B is a diagram of a process of laying out layout elements A1 to A13 into a second desktop interface in layout rankings determined in a first layout element traversal manner according to some embodiments of this application;

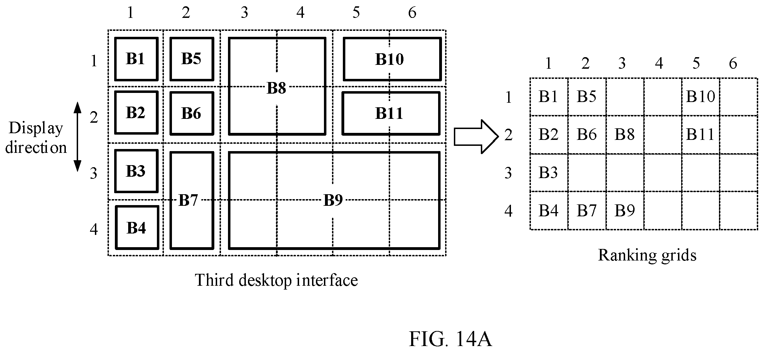

FIG. 14A is a diagram of ranking grids of layout elements B1 to B11 according to some embodiments of this application;

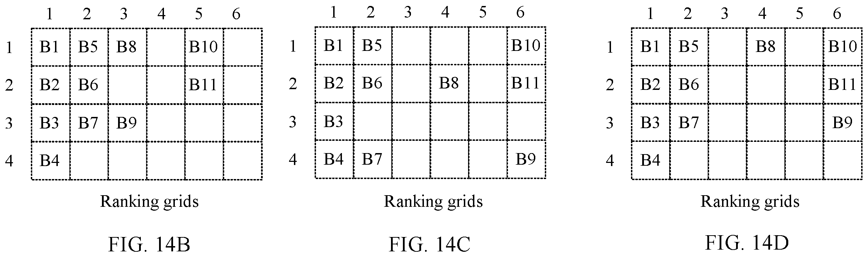

FIG. 14B is a diagram of other ranking grids of layout elements B1 to B11 according to some embodiments of this application;
FIG. 14C is a diagram of other ranking grids of layout elements B1 to B11 according to some embodiments of this application;
FIG. 14D is a diagram of other ranking grids of layout elements B1 to B11 according to some embodiments of this application;

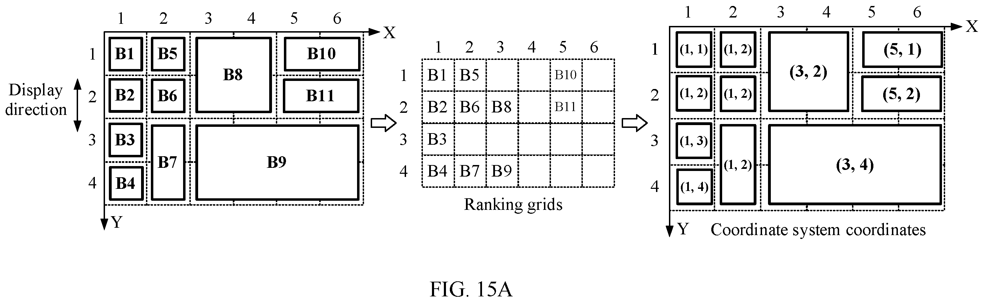

FIG. 15A is a diagram of determining layout rankings of layout elements B1 to B11 in a ninth layout element traversal manner according to some embodiments of this application;

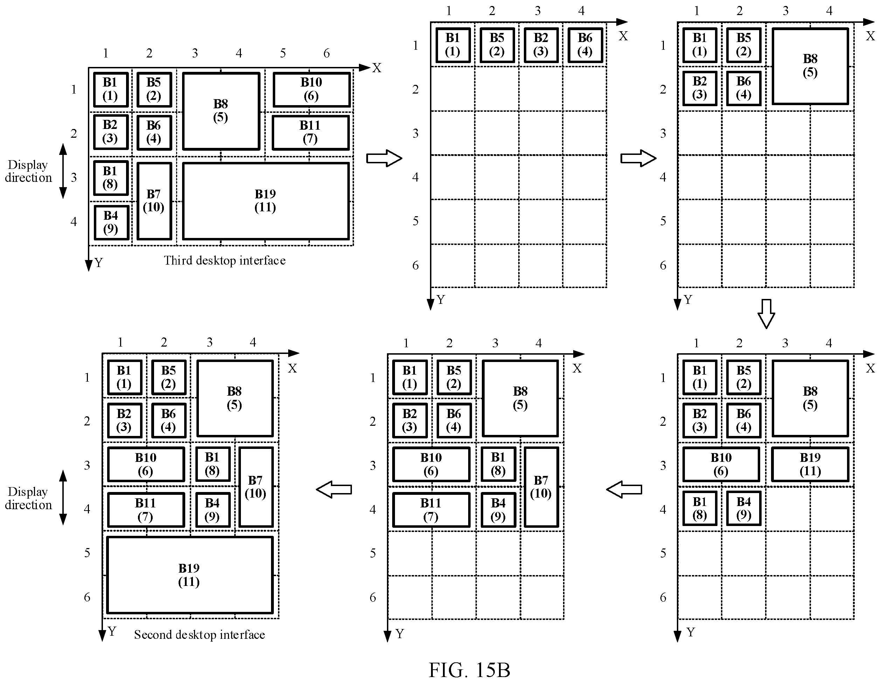

FIG. 15B is a diagram of a process of laying out layout elements B1 to B11 into a second desktop interface in layout rankings determined in a ninth layout element traversal manner according to some embodiments of this application;

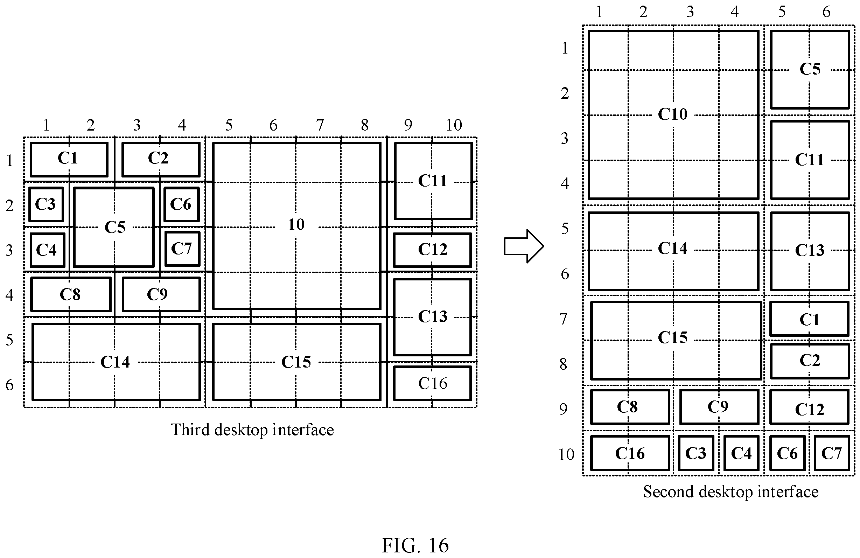

FIG. 16 is a diagram of a process of laying out layout elements C1 to C11 into a second desktop interface in a third layout manner according to some embodiments of this application;

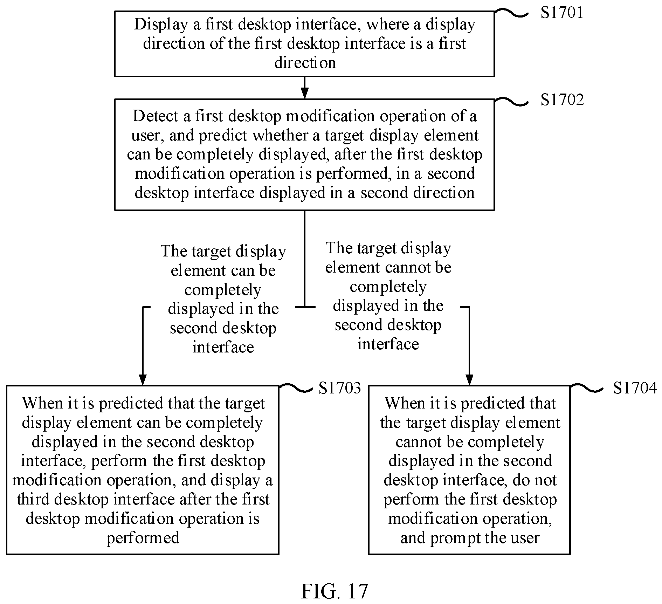

FIG. 17 is a schematic flowchart of a display method according to some embodiments of this application;

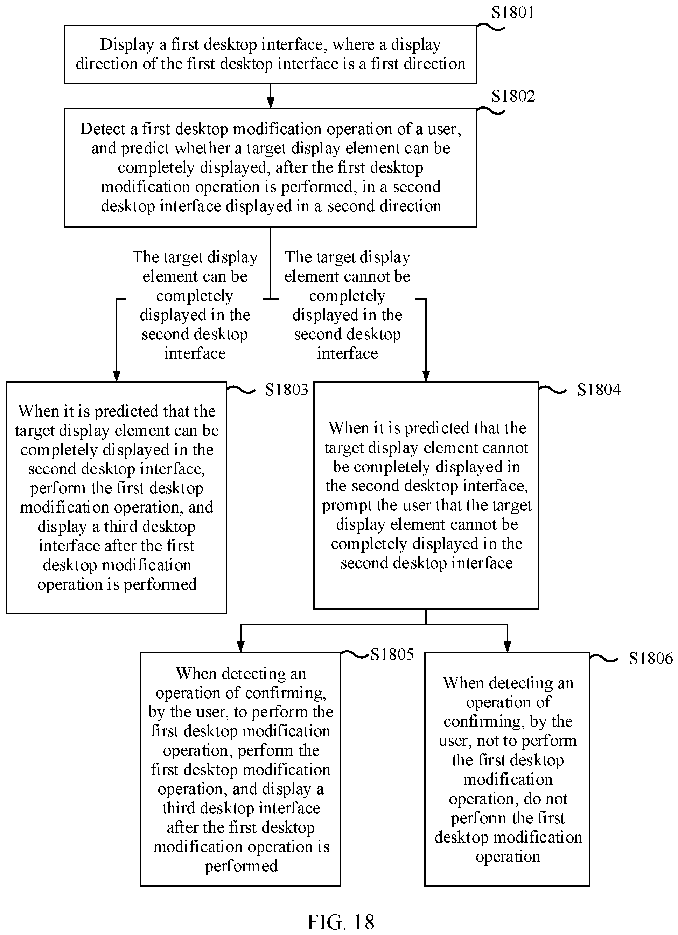

FIG. 18 is a schematic flowchart of another display method according to some embodiments of this application;

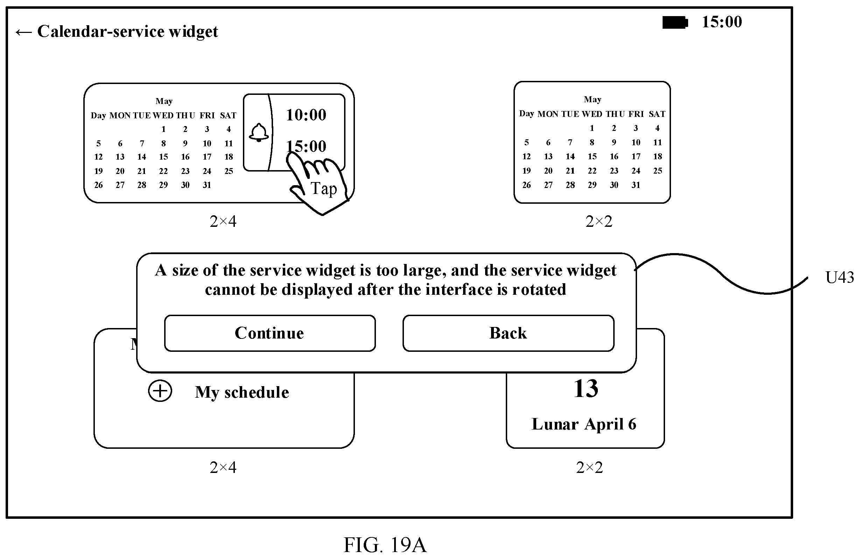

FIG. 19A is a diagram of an interface in which a tablet computer 10 displays prompt information according to some embodiments of this application;

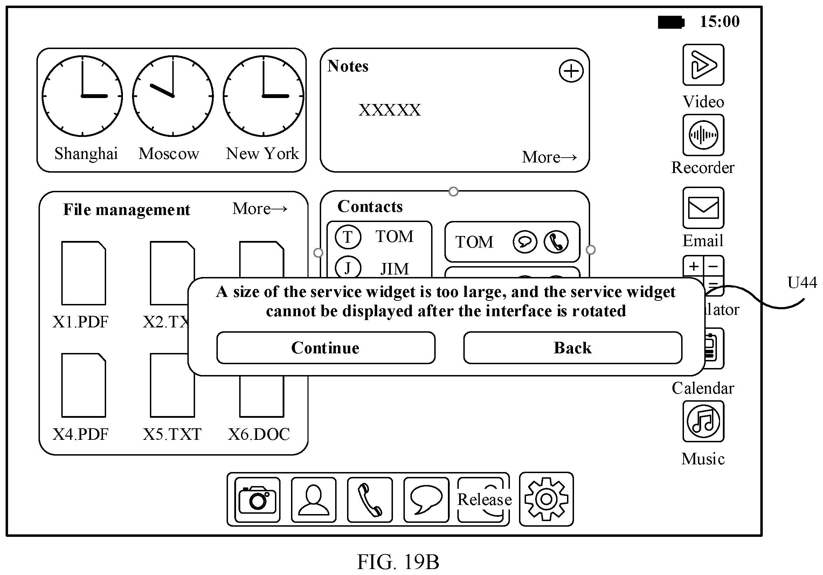

FIG. 19B is a diagram of another interface in which a tablet computer 10 displays prompt information according to some embodiments of this application;

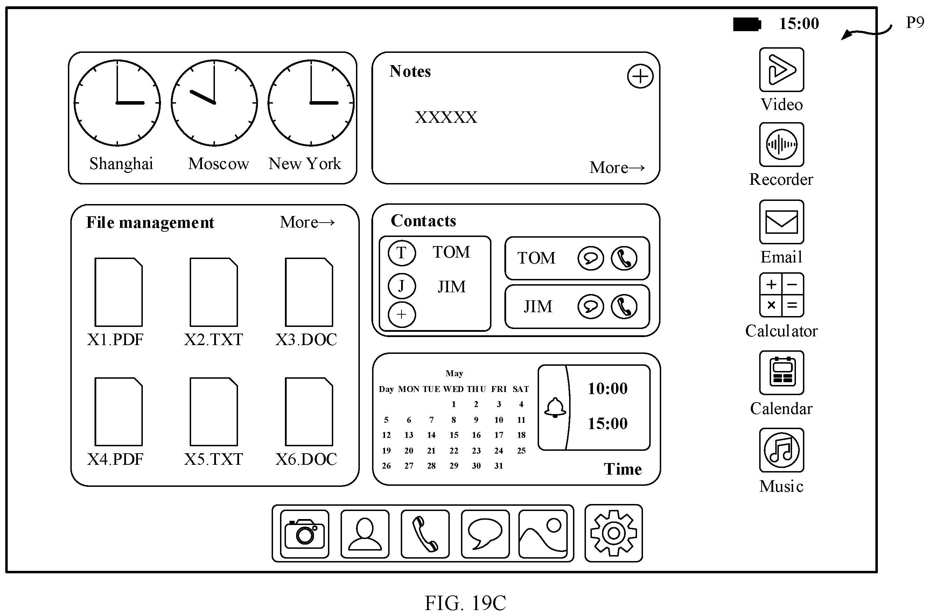

FIG. 19C is a diagram of an interface P9 according to some embodiments of this application;

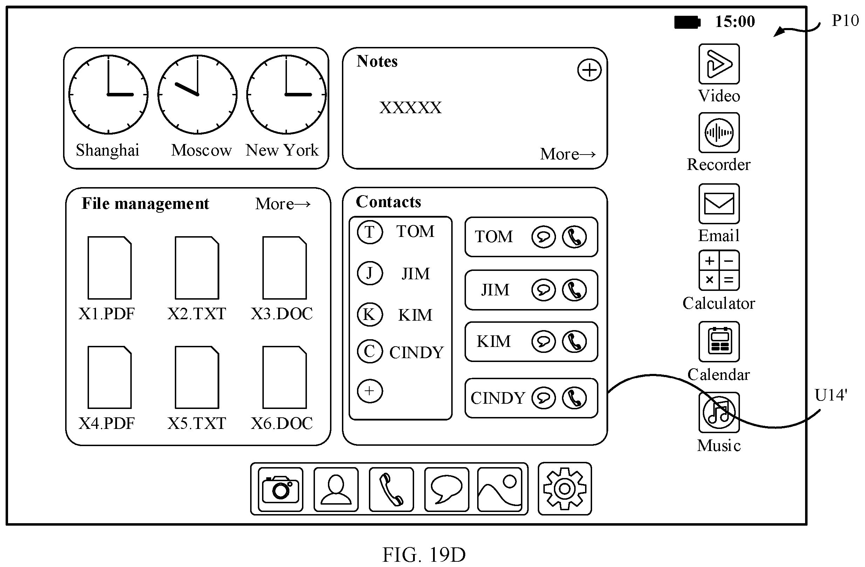

FIG. 19D is a diagram of an interface P10 according to some embodiments of this application;

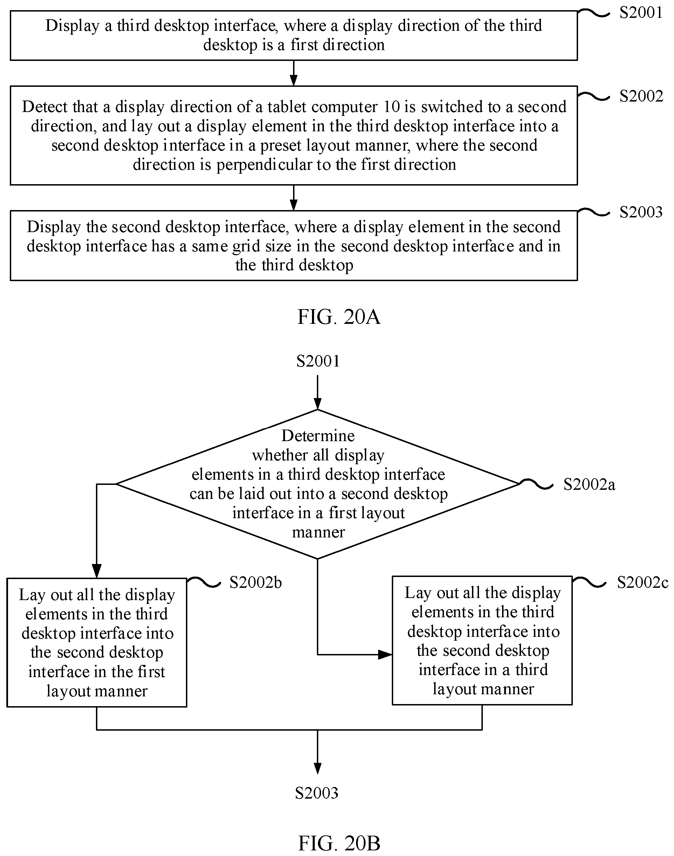

FIG. 20A is a schematic flowchart of another display method according to some embodiments of this application;
FIG. 20B is a schematic flowchart of a process in which a tablet computer 10 lays out a display element in a third desktop interface into a second desktop interface in a preset layout manner according to some embodiments of this application;

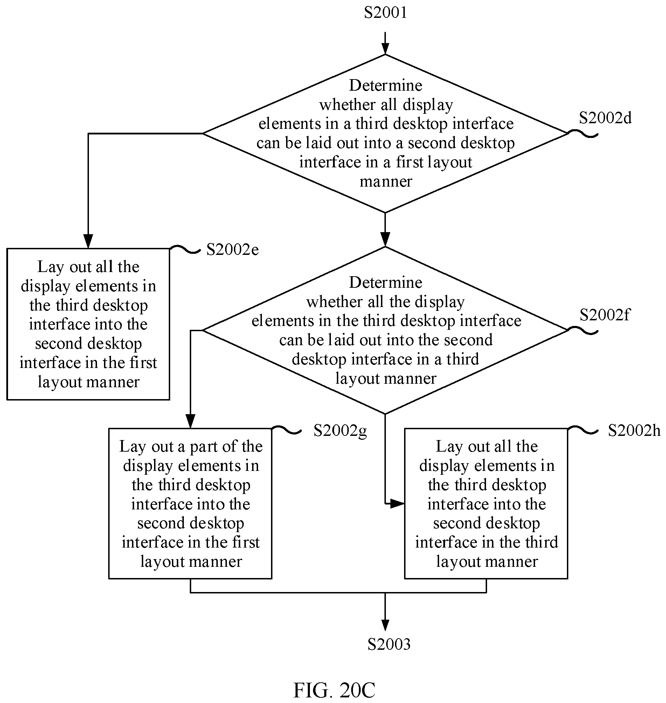

FIG. 20C is a schematic flowchart of another process in which a tablet computer 10 lays out a display element in a third desktop interface into a second desktop interface in a preset layout manner according to some embodiments of this application; and

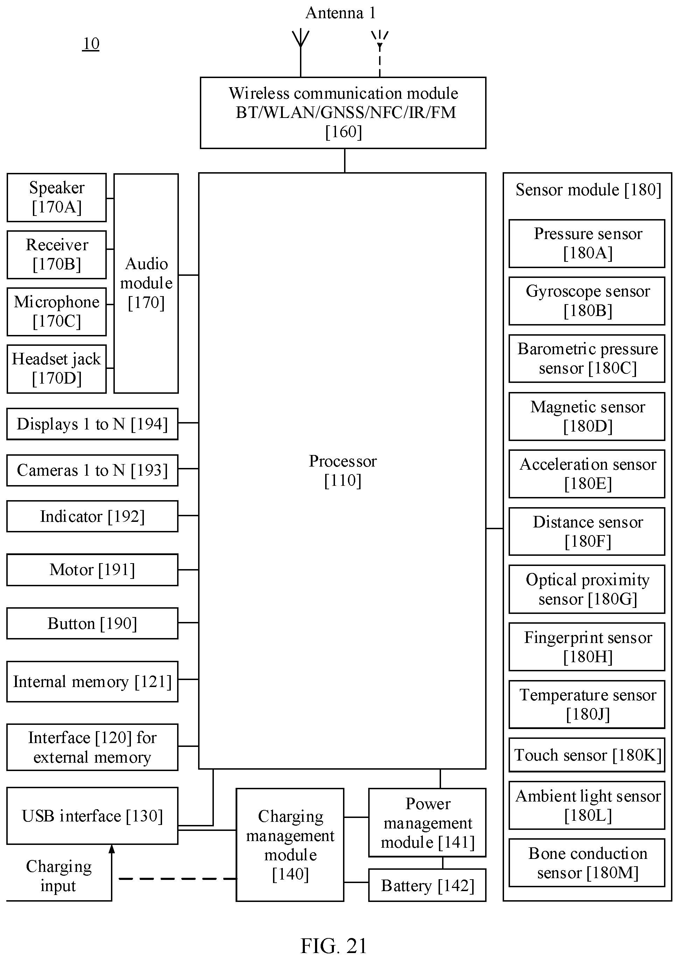

FIG. 21 is a diagram of a structure of a tablet computer 10 according to some embodiments of this application.

### DESCRIPTION OF EMBODIMENTS

Illustrative embodiments of this application include but are not limited to a display method, a readable storage medium, an electronic device, and a program product.

It should be noted that the technical solutions provided in embodiments of this application may be applied to any electronic device that can display a user interface based on a theme resource, including but not limited to user equipment (user equipment, UE), a mobile station (mobile station, MS), a mobile terminal (mobile terminal, MT), and the like. For example, the electronic device may be a mobile phone (mobile phone), a wearable device, a tablet computer (Pad), a laptop computer, an industrial control (industrial control) device, a head unit, a terminal device in a smart grid (smart grid), a terminal device in transportation safety (transportation safety), a terminal device in a smart city (smart city), or the like. For description, the following describes the technical solutions of this application by using an example in which the electronic device is a tablet computer 10.

In some embodiments, an application (for example, a setting application or a desktop application) used to manage desktop display in the electronic device usually uses a part of a display area of the desktop interface to display a display element like an icon or a function control (the part of the display area is referred to as an icon display area below), and divides the icon display area into grids of a same size. In addition, each display element (for example, the icon or the function control) displayed in the desktop interface may occupy one or more grids, and each display element is generally aligned with a preset location (for example, a center, an upper left corner, an upper right corner, a lower left corner, or a lower right corner) in the occupied one or more grids.

For ease of description, in the following, a direction in which a size of a display of the electronic device is large is defined as a length direction, and a direction in which a size of the display of the electronic device is small is defined as a width direction. A display area used to display an application icon, a service widget, and another display element in the electronic device is referred to as an icon display area. The icon display area is divided into rows in the display direction, and the icon display area is divided into columns in a direction perpendicular to the display direction. A grid with m rows and n columns is referred to as an m×n grid, where m and n are integers greater than 1. A quantity of rows and a quantity of columns of a grid occupied by a display element are referred to as a grid size of the display element. For example, a size of a display element that occupies a grid with i rows and j columns is denoted as i×j. A column number and a row number of a grid are used as grid coordinates of the grid. For example, grid coordinates of a grid with a row number of x and a column number of y are denoted as (y, x).

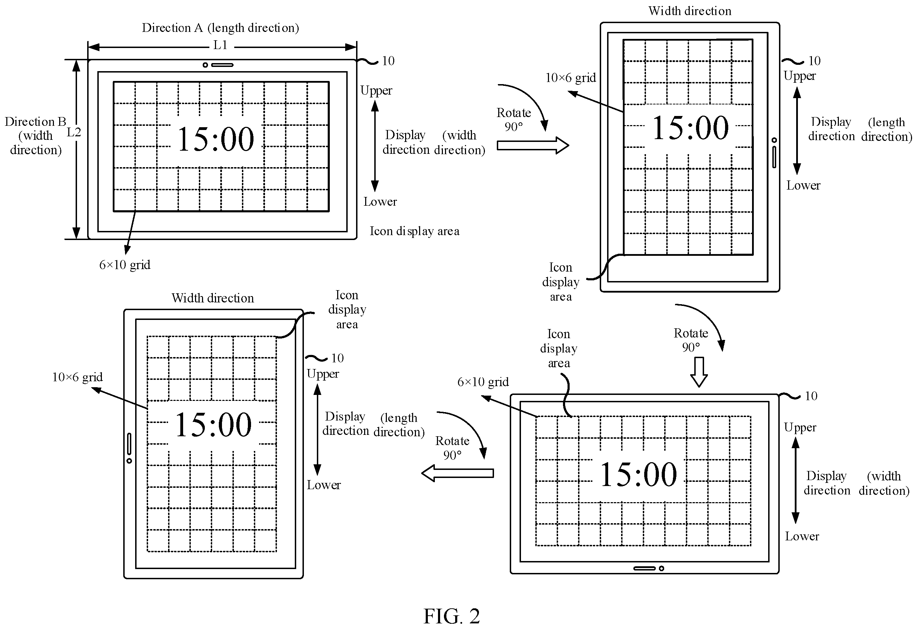

For example, refer to FIG. 2. If a size L1 of a display of a tablet computer 10 in a direction A is greater than a size L2 in a direction B, the direction A is referred to as a length direction of the tablet computer 10, and the direction B is referred to as a width direction of the tablet computer 10. When the tablet computer 10 uses the width direction as a display direction, a grid division manner of an icon display area is 6 rows and 10 columns (namely, a 6×10 grid). When the tablet computer 10 uses the length direction as the display direction, a grid division manner of the icon display area on a desktop is 10 rows and 6 columns (namely, a 10×6 grid). An upper part of a display interface of the tablet computer 10 may be any one of four edges of the tablet computer 10. The tablet computer 10 may automatically select any one of the manners shown in FIG. 2 to display an interface based on an included angle between the electronic device and a horizontal plane.

In some embodiments, that the display direction of the tablet computer 10 is the width direction may also be referred to as landscape display, and that the display direction of the tablet computer 10 is the length direction may also be referred to as portrait display.

It should be noted that, generally, if a grid division manner of the electronic device is an m×n grid when the electronic device displays the desktop interface in the length direction, a grid division manner of the electronic device may be an n×m grid when the electronic device displays the desktop interface in the width direction.

It should be noted that the grid division manners of the tablet computer 10 shown in FIG. 2 are merely examples. In some other embodiments, through grid division on the icon display area of the electronic device, more or fewer rows or columns may be included. This is not limited herein.

The following describes the technical solutions of this application based on the grid division manners shown in FIG. 2.

As described in the background, because a length and a width of the display of the electronic device are usually different, a layout manner of display elements in a desktop interface displayed in a display direction may not be suitable for a desktop interface displayed in another display direction. As a result, after the display direction of the electronic device is switched, the display elements displayed in the desktop interface before the display direction is switched may not be completely displayed in the desktop interface after the display direction is switched, affecting user experience.

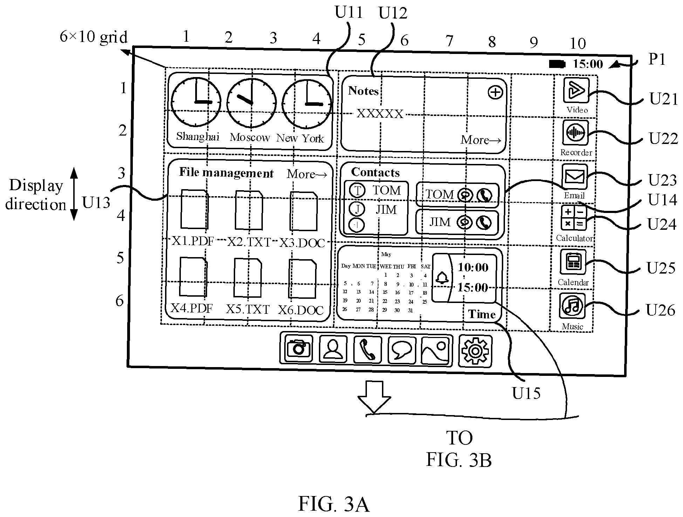

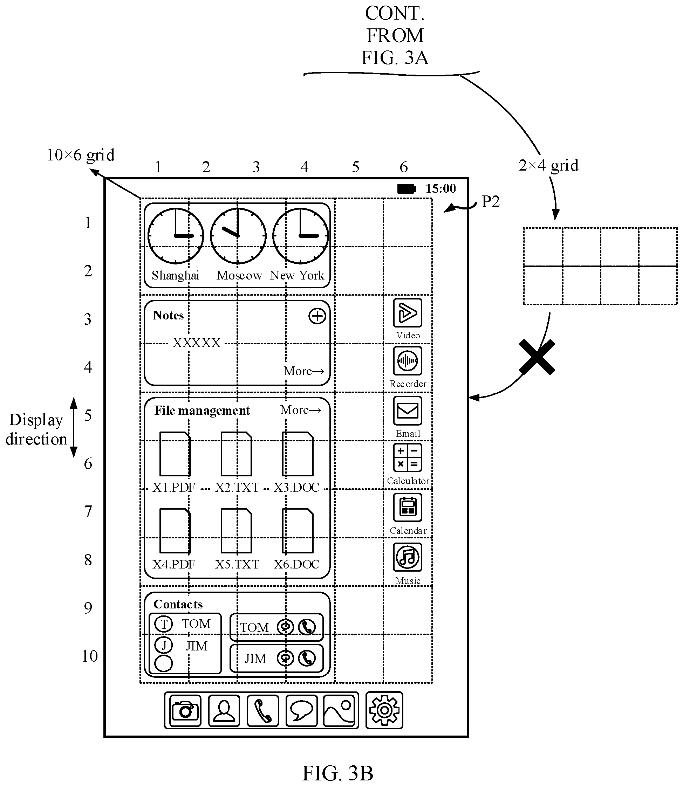

For example, FIG. 3A and FIG. 3B are a diagram of displaying the desktop interface P1 in FIG. 1A and FIG. 1B in a grid by the tablet computer 10.

Refer to FIG. 3A and FIG. 3B. The tablet computer 10 displays the desktop interface P1 by using the width direction as the display direction, and the grid division manner is a 6×10 grid. The desktop interface P1 includes a service widget of a clock control (referred to as a clock widget U11 below), a service widget of a notes control (referred to as a notes widget U12 below), a service widget of a file management control (referred to as a file widget U13 below), a service widget of a contacts control (referred to as a contacts widget U14 below), a service widget of a time control (referred to as a time widget U15 below), an icon of a video application (referred to as a video icon U21 below), an icon of a recorder application (referred to as a recorder icon U22 below), an icon of an email application (referred to as an email icon U23 below), an icon of a calculator application (referred to as a calculator icon U24 below), an icon of a calendar application (referred to as a calendar icon U25 below), and an icon of a music application (referred to as an audio icon U26 below). A grid size of each of the clock widget U11, the notes widget U12, the contacts widget U14, and the time widget U15 is 2×4, a grid size of the file widget U13 is 4×4, and a grid size of each of the video icon U21, the recorder icon U22, the email icon U23, the calculator icon U24, the calendar icon U25, and the music icon U26 is 1×1.

After the display direction of the tablet computer 10 is switched from the width direction to the length direction, a grid division manner of the desktop interface displayed by the tablet computer 10 is a 10×6 grid. The electronic device may adjust locations of the display elements in the desktop P1 according to a preset rule (for example, a rule of arranging the display elements in descending order of sizes of the display elements, or another rule), to display the display elements in the desktop interface P1 in the desktop interface with the 10×6 grid. After some display elements are laid out in the 10×6 grid, if there is no sufficient empty grid to lay out display elements that are not laid out, the tablet computer 10 does not display the display elements that are not laid out. Still refer to FIG. 3A and FIG. 3B. After the tablet computer 10 lays out the clock widget U11, the notes widget U12, the file widget U13, the contacts widget U14, the video icon U21, the recorder icon U22, the email icon U23, the calculator icon U24, and the calendar icon U25 in a desktop interface P2, there is no empty grid that meets the grid size (2×4) of the time widget U15. The tablet computer 10 does not display the time widget U15 in the desktop interface P2, affecting user experience.

In view of this, embodiments of this application provide a display method. In the method, when detecting a modification operation (referred to as a desktop modification operation below, for example, an operation of adding a first display element to a first desktop interface, or an operation of increasing a size of a first display interface in a first desktop interface) performed by a user on a display element in the first desktop interface displayed by using a first direction (for example, a length direction or a width direction) as a display direction, an electronic device may first predict whether a target display element (when the desktop modification operation is the operation of adding the first display element to the first desktop interface, the target display element includes the display element in the first desktop interface and the first display element; and when the desktop modification operation is the operation of increasing the size of the first display element, the target display element includes a display element other than the first display element in the first desktop interface and the first display element whose size is increased) can be completely displayed, after the desktop modification operation of the user is performed, in a second desktop interface displayed in a second direction (for example, the width direction or the length direction). If it is predicted that the target display element can be completely displayed in the second desktop interface after the desktop modification operation of the user is performed, the desktop modification operation of the user is performed (for example, the first display element is added to the first desktop interface, or the size of the first display interface in the first desktop interface is increased), and a third desktop interface is displayed; otherwise, the desktop modification operation of the user is not performed.

When the electronic device displays the third desktop interface of the desktop by using the first direction as the display direction, if the electronic device detects that the display direction of the electronic device is switched to the second direction, the electronic device may adjust locations of display elements in the third desktop interface in a grid division manner in which the display direction is the second direction, to obtain and display the second desktop interface displayed by using the second direction as the display direction. The second desktop interface includes all the display elements in the third desktop interface, and each display element has the same grid size in the third desktop interface as in the first desktop interface.

For example, refer to FIG. 4A-1 to FIG. 4A-3. It is assumed that a desktop interface before the time widget U15 is added to the desktop interface P1 is a desktop interface P3 (as the first desktop interface, where a grid division manner is a 10×6 grid). After detecting a touch and hold operation performed by the user on the calendar icon U25 in the desktop interface P3, the tablet computer 10 may display a menu U31 in a desktop interface P4, where the menu U31 may include a "service widget" option U32. After detecting a tap operation performed by the user on the "service widget" option U32, the tablet computer 10 may display a calendar-service widget interface P5. The calendar-service widget interface P5 includes a plurality of service widgets corresponding to the calendar application, for example, a service widget U33 (namely, the time widget U15 in the desktop interface P1) with a grid size of 2×4, a service widget U34 with a grid size of 2×4, a service widget U35 with a grid size of 2×2, and a service widget U36 with a grid size of 2×2.

When detecting a selection operation performed by the user on any one of the service widget U33, the service widget U34, the service widget U35, and the service widget U36, the tablet computer 10 may detect the desktop modification operation. Then, the tablet computer 10 may determine whether the target display element can be completely displayed, after a service widget selected by the user is added to the desktop interface P3, and when a grid size of a target display element (all display elements in the desktop interface P3 and the selected service widget) remains unchanged, in a desktop interface whose grid division manner is a 6×10 grid. Based on a determining result, the tablet computer 10 choose to perform or not to perform the desktop modification operation of the user.

For example, still refer to FIG. 4A-1 to FIG. 4A-3. When detecting that the user selects the service widget U33 (as the first display element), the tablet computer 10 may determine that after the service widget U33 (or the service widget U34) is added, and when the grid size of the target display element (displaying all the display elements in the desktop interface P3 and the service widget U33) is not adjusted, the target display element cannot be completely displayed in the desktop interface whose grid division manner is the 6×10 grid. Therefore, although a grid size of an empty grid area in the tablet computer 10 is greater than the grid size of the service widget U33, the tablet computer 10 does not perform the desktop modification operation of the user. In addition, the tablet computer 10 may display a prompt box U37 in the calendar-service widget interface P5 to prompt the user that "A size of the service widget is too large, and the service widget cannot be displayed after the interface is rotated. Please select another size", and the tablet computer 10 may not perform the desktop modification operation of the user.

In some other embodiments, when the target display element cannot be completely displayed in the second desktop interface, the tablet computer 10 may further display prompt information for choosing, by the user, to perform the desktop modification operation, and perform or not perform the desktop modification operation of the user based on selection of the user.

For another example, refer to FIG. 4B-1 and FIG. 4B-2. When detecting that the user selects the service widget U35 (as the first display element), the tablet computer 10 may determine that after the service widget U35 is added, and when the grid size of the target display element (displaying all the display elements in the desktop interface P3 and the service widget U35) is not adjusted, the target display element can be completely displayed in the desktop interface whose grid division manner is the 6×10 grid, perform the desktop modification operation of the user, and display a desktop interface P6 (as the third desktop interface) obtained after the service widget U35 is added to the desktop interface P3. In the desktop interface P6, the service widget U35 occupies the fifth and sixth columns in the fifth row, and the fifth and sixth columns in the sixth row.

Still refer to FIG. 4B-1 and FIG. 4B-2. After detecting that the display direction changes from the width direction to the length direction, the tablet computer 10 may adjust locations of all display elements in the interface P6, to obtain and display a desktop interface P7. As shown in FIG. 4B-1 and FIG. 4B-2, the desktop interface P7 includes all the display elements in the desktop interface P6, and each display element has the same grid size in the desktop interface P7 as in the desktop interface P6.

For another example, refer to FIG. 4C-1 to FIG. 4C-3. After detecting an operation of touching and holding the contacts widget U14 by the user in the desktop interface P3, the tablet computer 10 may display a control U41 for adjusting a size of the contacts widget U14. The tablet computer 10 detects an operation of dragging the control U41 to a point D shown in FIG. 4C-1 to FIG. 4C-3 and releasing the control U41 (that is, the grid size of the contacts widget U14 is increased to 4×4) by the user. Then, the tablet computer 10 may predict that after the grid size of the contacts widget U14 is increased to 4×4, the target display element (display elements other than the contacts widget U14 in the desktop interface P3 and a contacts widget U1 whose size is increased) cannot be completely displayed in the desktop interface whose grid division manner is the 6×10 grid. Therefore, although a grid size of an empty grid area in the tablet computer 10 is greater than 4×4, the tablet computer 10 does not perform the desktop modification operation of the user, and displays prompt information U42 to prompt the user that "A size obtained after adjustment is too large, and the service widget cannot be displayed after the interface is rotated. Please adjust again".

In some embodiments, for a desktop interface of an m×n grid, a grid size of a display element in the desktop interface may be any size in which both a quantity of occupied rows and a quantity of occupied columns are less than or equal to a minimum value of m and n (denoted as min(m, n)). Grid sizes supported by different tablet computers 10 may be some or all of grid sizes in which both a quantity of occupied rows and a quantity of occupied columns are less than or equal to min(m, n), and may be specifically set by a developer based on an application corresponding to a display element or an operating system of the tablet computer 10.

For example, refer to FIG. 5. The grid size of the display element may be at least one of the following sizes: 1×1, 1×2, 1×4, 1×6, 2×1, 2×4, 2×6, 4×1, 4×2, 4×4, 4×6, 6×1, 6×2, 6×4, 6×6, and the like.

It should be understood that, in some other embodiments, the grid size of the display element may alternatively be another size, for example, 3×3, 5×5, 1×3, 1×5, 5×1, 3×1, 2×3, 3×2, 2×5, 5×2, 3×4, 4×3, 3×5, 5×3, 4×5, 5×4, 3×6, 6×3, 5×6 or 6×5. This is not limited herein.

For ease of description, in the following embodiments, a display element whose grid size is greater than or equal to 2×4 or whose grid size is greater than or equal to 4×2 is referred to as a large-size display element.

In some embodiments, the tablet computer 10 may limit, in the grid division manner of the icon display area in the desktop interface, a total quantity of grids occupied by a display element with a large grid size in the icon display area and a quantity of empty grids in the icon display area, to ensure that after the desktop modification operation of the user is performed on the desktop interface whose display direction is the first direction, the target display element can be completely displayed in the second desktop interface displayed in the second direction.

For example, for the third desktop interface (a desktop interface that may be obtained by performing the desktop modification operation of the user on the first desktop interface) whose grid division manner is an m×n grid, after detecting the desktop modification operation of the user, the tablet computer 10 may determine, based on the grid size of the target display element, values of m and n, a quantity of empty grids in the third desktop interface, and the like, whether the target display element meets a first condition. If the target display element meets the first condition, it indicates that the target display element can be completely displayed in the second desktop interface whose grid division manner is the n×m grid without changing the grid size of the target display element.

For example, m may be represented as 4a+b, and n may be represented as 4c+d, where a and c are integers greater than or equal to 0, b=0, 1, 2, or 3 (that is, b is a remainder of m divided by 4), and d=0, 1, 2, or 3 (that is, d is a remainder of n divided by 4). When both b and d are 0, the grid size of the target display element does not need to be limited. When both b and d are even numbers, the first condition may include a condition of limiting a quantity of grids occupied by a large-size display element in the target display element. When at least one of b and d is an odd number, the first condition may include a condition of limiting a quantity of grids occupied by a large-size display element in the target display element, and a condition of limiting a quantity of display elements whose grid sizes are 1×1 and a quantity of empty grids in the target display element. Specifically, the first condition may include Condition A.1 to Condition A.7.

Condition A.1: Both b and d are 0.

To be specific, when m and n are integer multiples of 4, a plurality of display elements that can be displayed in a desktop interface of an n×m grid can also be displayed in a desktop interface of an m×n grid. It should be understood that each of grid sizes of the plurality of display elements is any one of the foregoing sizes.

Condition A.2: Both b and d are even numbers, b and d are different, and the quantity of grids occupied by the large-size display element in the target display element is less than or equal to 16a×c.

For example, refer to FIG. 6A. A grid division manner of the third desktop interface is a 6×4 grid, a=c=1, b=2, d=0, and the target display element includes one display element whose grid size is 4×4 and two display elements whose grid sizes are 2×2. A quantity of grids occupied by a large-size display element in the target display element is 16=(16a×c=16), and the target display element can be completely displayed in a second desktop interface whose grid division manner is a 4×6 grid.

Refer to FIG. 6B. A grid division manner of the third desktop interface is a 6×4 grid, a=c=1, b=2, d=0, and the target display element includes one display element whose grid size is 4×4 and one display element whose grid size is 2×4. A quantity of grids occupied by large-size display elements in the target display element is (16+8=24)>(16a×c=16), Condition A.2 is not met, and the target display element cannot be completely displayed in a second desktop interface whose grid division manner is a 4×6 grid.

Condition A.3: Both b and d are 2, and a quantity of grids occupied by a large-size display element in the target display element is less than or equal to 16a×c+8×min(a, c), where min(a, c) is a minimum value in a and c.

For example, for the case shown in FIG. 4A-1 to FIG. 4A-3, the third desktop interface may be the desktop interface P3, the desktop modification operation of the user may be a selection operation performed by the user on the service widget U33, and the target display element may include: the clock widget U11, the notes widget U12, the contacts widget U14, the file widget U13, the video icon U21, the recorder icon U22, the email icon U23, the calculator icon U24, the calendar icon U25, the music icon U26, and the service widget U33 added by the user (as the first display element). A quantity of grids occupied by large-size display elements (the clock widget U11, the notes widget U12, the contacts widget U14, the file widget U13, and the service widget U33) in the target display element is 48. Because the grid division manner of the desktop interface P3 is the 6×10 grid (m=6, n=10), 6=1 ×4+2, 10=2×4+2, a=1, c=2, and b=d=2. The quantity of the grids occupied by the large-size display elements in the target display element is 48>(16a×c+8×min(a, c), that is, 16×1×2+8×min(1, 2)=40), Condition A.3 is met, and the target display element cannot be completely displayed in a second desktop interface whose grid division manner is a 6×10 grid.

For another example, corresponding to the case shown in FIG. 4B-1 and FIG. 4B-2, compared with the case shown in FIG. 4A-1 to FIG. 4A-3, the first display element changes from the service widget U33 to the service widget U35. A quantity of grids occupied by large-size display elements (the clock widget U11, the notes widget U12, the contacts widget U14, and the file widget U13) in the target display element is 40=(16a×c+8×min(a, c), that is, 16×1 ×2+8×min(1, 2)=40), Condition A.3 is met, and the target display element can be completely displayed in a second desktop interface whose grid division manner is a 6×10 grid.

For another example, corresponding to the case shown in FIG. 4C-1 to FIG. 4C-3, a quantity of grids occupied by large-size display elements (the clock widget U11, the notes widget U12, the file widget U13, and the contacts widget U14 whose size is increased) in the target display element is 48>(16a×c+8×min(a, c), that is, 16×1×2+8×min(1, 2)=40), Condition A.3 is not met, and the target display element can be completely displayed in a second desktop interface whose grid division manner is a 6×10 grid.

Condition A.4: One of b and d is an odd number, the other is an even number, and at least one of b and d is less than 2. In addition, a quantity of grids occupied by a large-size display element in the target display element is less than or equal to 16a×c, and a difference obtained by subtracting a sum of quantities of grids occupied by display elements whose grid sizes are greater than 1×1 in the target display element from a total quantity (mn) of grids in the third desktop interface is greater than or equal to odd(m, n), where odd(m, n) represents an odd number in m and n.

For example, refer to FIG. 7A. A grid division manner of the third desktop interface is a 6×5 grid, a=c=1, b=2, d=1, and the target display element includes one display element whose grid size is 4×4, two display elements whose grid sizes are 2×2, and one display element whose grid size is 1×1. A quantity of grids occupied by a large-size display element in the target display element is 16=(16a×c=16), and a quantity of empty grids in the third desktop interface and a quantity of display elements whose grid sizes are 1×1 in the target display element are 5=(odd(m, n)=5). The target display element can be completely displayed in a second desktop interface whose grid division manner is a 5×6 grid.

Refer to FIG. 7B. A grid division manner of the third desktop interface is a 6×5 grid, a=c=1, b=2, d=1, and the target display element includes one display element whose grid size is 4×4, two display elements whose grid sizes are 2×2, and one display element whose grid size is 2×1. A quantity of grids occupied by a large-size display element in the target display element is 16=(16a×c=16), and a quantity of empty grids in the third desktop interface and a quantity of display elements whose grid sizes are 1×1 in the target display element are 4<(odd(m, n)=5). The target display element cannot be completely displayed in a second desktop interface whose grid division manner is a 5×6 grid.

Refer to FIG. 7C. A grid division manner of the third desktop interface is a 6×5 grid, a=c=1, b=2, d=1, and the target display element includes one display element whose grid size is 4×4, one display element whose grid size is 2×4, and one display element whose grid size is 1×1. A quantity of grids occupied by large-size display elements in the target display element is (16+8=24)>(16a×c=16), and a quantity of empty grids in the third desktop interface and a quantity of display elements whose grid sizes are 1×1 in the target display element are 5<(odd(m, n)=5). The target display element cannot be completely displayed in a second desktop interface whose grid division manner is a 5×6 grid.

Condition A.5: One of b and d is an odd number, the other is an even number, and both b and d are greater than or equal to 2. In addition, a quantity of grids occupied by a large-size display element in the target display element is less than or equal to 16a×c+8×min(a, c), and a difference obtained by subtracting a sum of quantities of grids occupied by display elements whose grid sizes are greater than 1×1 in the target display element from a total quantity (mn) of grids in the third desktop interface is greater than or equal to odd(m, n).

For example, refer to FIG. 8A. A grid division manner of the third desktop interface is a 6×7 grid, a=c=1, b=2, d=3, and the target display element includes one display element whose grid size is 4×4, one display element whose grid size is 2×1, and one display element whose grid size is 2×4. A quantity of grids occupied by large-size display elements in the target display element is 24=(16a×c+8×min(a, c)=24), and a quantity of empty grids in the third desktop interface and a quantity of display elements whose grid sizes are 1×1 in the target display element are 16>(odd(m, n)=7). The target display element can be completely displayed in a second desktop interface whose grid division manner is a 7×6 grid.

Refer to FIG. 8B. A grid division manner of the third desktop interface is a 6×7 grid, a=c=1, b=2, d=3, and the target display element includes one display element whose grid size is 4×4, one display element whose grid size is 3×3, and one display element whose grid size is 2×4. A quantity of grids occupied by large-size display elements in the target display element is 33>(16a×c+8×min(a, c)=24), and a quantity of empty grids in the third desktop interface and a quantity of display elements whose grid sizes are 1×1 in the target display element are 16>(odd(m, n)=7). The target display element can be completely displayed in a second desktop interface whose grid division manner is a 7×6 grid.

Refer to FIG. 8C. A grid division manner of the third desktop interface is a 6×7 grid, a=c=1, b=2, d=3, and the target display element includes one display element whose grid size is 4×4, five display elements whose grid sizes are 2×2, and one display element whose grid size is 2×1. A quantity of grids occupied by a large-size display element in the target display element is 16<(16a×c+8×min(a, c)=24), and a quantity of empty grids in the third desktop interface and a quantity of display elements whose grid sizes are 1×1 in the target display element are 4<(odd(m, n)=7). The target display element cannot be completely displayed in a second desktop interface whose grid division manner is a 6×7 grid.

Condition A.6: Both b and d are odd numbers, and at least one of b and d is less than 2. In addition, a quantity of grids occupied by a large-size display element in the target display element is less than or equal to 16a×c, and a difference obtained by subtracting a sum of quantities of grids occupied by display elements whose grid sizes are greater than 1×1 in the target display element from a total quantity (mn) of grids in the third desktop interface is greater than or equal to a maximum value in m and n (denoted as max(m, n)).

For example, refer to FIG. 9A. A grid division manner of the third desktop interface is a 5×7 grid, a=c=1, b=1, d=3, and the target display element includes one display element whose grid size is 4×4, two display elements whose grid sizes are 2×2, and two display elements whose grid sizes are 1×2. A quantity of grids occupied by a large-size display element in the target display element is 16=(16a×c=16), and a quantity of empty grids in the third desktop interface and a quantity of display elements whose grid sizes are 1×1 in the target display element are 7=(max(m, n)=7). The target display element can be completely displayed in a second desktop interface whose grid division manner is a 7×5 grid.

For another example, refer to FIG. 9B. A grid division manner of the third desktop interface is a 5×7 grid, a=c=1, b=1, d=3, and the target display element includes one display element whose grid size is 4×4, a display element whose grid size is 4×2, and two display elements whose grid sizes are 1×2. A quantity of grids occupied by large-size display elements in the target display element is (16+8=24)>(16a×c=16), and a quantity of empty grids in the third desktop interface and a quantity of display elements whose grid sizes are 1×1 in the target display element are 7=(max(m, n)=7). The target display element cannot be completely displayed in a second desktop interface whose grid division manner is a 7×5 grid.

For another example, refer to FIG. 9C. A grid division manner of the third desktop interface is a 5×7 grid, a=c=1, b=1, d=3, and the target display element includes one display element whose grid size is 4×4, two display elements whose grid sizes are 2×2, one display element whose grid size is 1×4, and one display element whose grid size is 1×2. A quantity of grids occupied by a large-size display element in the target display element is 16=(16a×c=16), and a quantity of empty grids in the third desktop interface and a quantity of display elements whose grid sizes are 1×1 in the target display element are 5<(max(m, n)=7). The target display element cannot be completely displayed in a second desktop interface whose grid division manner is a 7×5 grid.

Condition A.7: Both b and d are 3. In addition, a quantity of grids occupied by a large-size display element in the target display element is less than or equal to 16a×c+8×min(a, c), and a difference obtained by subtracting a sum of quantities of grids occupied by display elements whose grid sizes are greater than 1×1 in the target display element from a total quantity (mn) of grids in the third desktop interface is greater than or equal to max(m, n).

For example, refer to FIG. 10A. A grid division manner of the third desktop interface is a 7×11 grid, a=1, c=2, b=d=3, and the target display element includes two display elements whose grid sizes are 4×4, one display element whose grid size is 2×4, three display elements whose grid sizes are 2×2, and one display element whose grid size is 1×6. A quantity of grids occupied by large-size display elements in the target display element is (16+16+8=40)=(16a×c+8×min(a, c)=40), and a quantity of empty grids in the third desktop interface and a quantity of display elements whose grid sizes are 1×1 in the target display element are 19>(max(m, n)=11). The target display element can be completely displayed in a second desktop interface whose grid division manner is an 11×7 grid.

Refer to FIG. 10B. A grid division manner of the third desktop interface is a 7×11 grid, a=1, c=2, b=d=3, and the target display element includes two display elements whose grid sizes are 4×4, two display elements whose grid sizes are 2×4, three display elements whose grid sizes are 2×2, and one display element whose grid size is 1×6. A quantity of grids occupied by large-size display elements in the target display element is (16+16+8+8=48)>(16a×c+8×min(a, c)=40), and a quantity of empty grids in the third desktop interface and a quantity of display elements whose grid sizes are 1×1 in the target display element are 11=(max(m, n)=11). The target display element cannot be completely displayed in a second desktop interface whose grid division manner is an 11×7 grid.

Refer to FIG. 10C. A grid division manner of the third desktop interface is a 7×11 grid, a=1, c=2, b=d=3, and the target display element includes two display elements whose grid sizes are 4×4, one display element whose grid size is 2×4, five display elements whose grid sizes are 2×2, and four display elements whose grid sizes are 1×2. A quantity of grids occupied by large-size display elements in the target display element is (16+16+8=40)=(16a×c+8×min(a, c)=40), and a quantity of empty grids in the third desktop interface and a quantity of display elements whose grid sizes are 1×1 in the target display element are 9<(max(m, n)=11). The target display element cannot be completely displayed in a second desktop interface whose grid division manner is an 11×7 grid.

It should be noted that a mathematical representation manner in the foregoing conditions is merely an example. In some other embodiments, the first condition may alternatively be another condition equivalent to each of the foregoing conditions. This is not limited herein.

Based on the first condition, if the tablet computer 10 determines that the target display element and the grid division manner of the third desktop interface meet the first condition, the tablet computer 10 may perform the desktop modification operation of the user; otherwise, the tablet computer 10 does not perform the desktop modification operation of the user.

For example, for the case shown in FIG. 4A-1 to FIG. 4A-3, the third desktop interface may be the desktop interface P3, the desktop modification operation of the user may be the selection operation performed by the user on the service widget U33, and the tablet computer 10 may determine that the target display element does not meet Condition A.3 in the foregoing first condition, and does not perform the desktop modification operation of the user.

For another example, corresponding to the case shown in FIG. 4B-1 and FIG. 4B-2, compared with the case shown in FIG. 4A-1 to FIG. 4A-3, the first display element changes from the service widget U33 to the service widget U35. The tablet computer 10 may determine that the target display element meets Condition A.3 in the foregoing first condition, and perform the desktop modification operation of the user.

In some embodiments, the tablet computer 10 pre-lays out the target display element in one or more preset layout manners based on a grid division manner of the second desktop interface. If the tablet computer 10 can completely lay out the target display element in the second desktop interface in any one of the preset layout manners, it is determined that the target display element can be displayed in the second desktop interface, and the desktop modification operation of the user is performed. The preset layout manners are described below, and are not limited herein.

In some embodiments, after the tablet computer 10 displays the third desktop interface, if it is detected that the display direction is switched from the first direction to the second direction, the tablet computer 10 may further re-lay out the display element in the third desktop interface in a preset layout manner, to obtain the second desktop interface displayed in the second direction. In a process of re-laying out the display element in the third desktop interface, a layout manner (for example, a relative location relationship of display elements) of each display element in the third desktop interface may be considered, so that in the second desktop interface displayed by the tablet computer 10, the user can more quickly find a display element (for example, a display element corresponding to an application or a service that the user needs to view/run/access) on which a related operation needs to be performed. This helps improve user experience.

For example, the tablet computer 10 may first obtain a layout ranking of each layout element based on location relationships of layout elements (including a display element and an empty grid) of the third desktop interface, and then sequentially lay out, in the layout ranking of each layout element, each layout element into a display interface whose grid division manner corresponds to the display interface displayed in the second direction.

It should be noted that each empty grid in the third desktop interface may be considered as a layout element whose grid size is 1×1.

The following describes layout manners provided in embodiments of this application.

First layout manner:

The tablet computer 10 may traverse, in a row-column sequence of rows then columns (or columns then rows) by using a grid in a corner (for example, a grid in an upper left corner, a grid in an upper right corner, a grid in a lower left corner, or a grid in a lower right corner) of a grid of the third desktop interface as a traversal start point, layout elements occupying all grids, where a ranking in which each layout element is traversed is used as a layout ranking of the layout element. For a layout element occupying a plurality of rows (or columns) of grids, if the layout element is traversed in a process of traversing a row (or a column), the layout element is not traversed in the other rows (or columns). In some embodiments, the row-column sequence of rows then columns is traversing row by row in ascending order of differences between row numbers of the grids and a row number of a traversal start point, and traversing grids in one row column by column in ascending order of differences between column numbers of the grids and a column number of the traversal start point. The row-column sequence of columns then rows is traversing column by column in ascending order of differences between column numbers of the grids and a column number of a traversal start point, and traversing grids in one column row by row in ascending order of differences between row numbers of the grids and a row number of the traversal start point.

Then, the tablet computer 10 may lay out each layout element in a grid of the second desktop interface in the layout ranking of each layout element. When a layout element is laid out, the layout element is always laid out in an empty grid area that is first traversed during traversing by using a traversal start point and a row-column sequence that are used to determine the layout ranking, and that is in an empty grid area having a same grid size as the layout element in the grid of the second desktop interface.

For example, the tablet computer 10 may first determine a ranking grid of each layout element (indicating a grid representing each layout element in a layout element traversing process). A ranking grid of a layout element (including an empty grid and a display element whose grid size is 1×1) that occupies one grid is the one grid occupied by the layout element. A ranking grid of a display element (namely, a display element whose grid size is greater than 1×1) that occupies a plurality of grids is one of the plurality of grids (for example, a grid in an upper left corner, an upper right corner, a lower left corner, or a lower right corner of the plurality of grids) occupied by the display element. Then, the tablet computer 10 may traverse a ranking grid of a layout element in each grid by using a vertex (for example, an upper left corner, an upper right corner, a lower left corner, or a lower right corner) of the grid of the third desktop interface as a traversal start point and in a manner of rows then columns or columns then rows, where a ranking in which a ranking grid of each layout element is traversed is used as a layout ranking of the layout element. The manner of rows then columns is traversing grids row by row in ascending order of distances between the grids in each row and the traversal start point, and traversing grids in one row column by column in ascending order of distances between the grids and the traversal start point. The manner of columns then rows is traversing grids column by column in ascending order of distances between the grids in each column and the traversal start point, and traversing grids in one column column by column in ascending order of distances between the grids and the traversal start point.

In some embodiments, the ranking grid of the display element that occupies the plurality of grids corresponds to a traversal start point for traversing relative to locations of the plurality grids occupied by the display element. For example, if the traversal start point is the upper left corner, the ranking grid of the display element that occupies the plurality of grids is a grid in the upper left corner of the plurality of grids occupied by the display element; if the traversal start point is the upper right corner, the ranking grid of the display element that occupies the plurality of grids is a grid in the upper right corner of the plurality of grids occupied by the display element; if the traversal start point is the lower left corner, the ranking grid of the display element that occupies the plurality of grids is a grid in the lower left corner of the plurality of grids occupied by the display element; and if the traversal start point is the lower right corner, the ranking grid of the display element that occupies the plurality of grids is a grid in the lower right corner of the plurality of grids occupied by the display element.

Then, the tablet computer 10 may lay out each layout element into the grid of the second desktop interface in the layout ranking of each layout element based on each tablet computer 10. When a layout element is laid out, the layout element is always laid out in an empty grid area that is first traversed in a layout element traversal manner and that is in an empty grid area having a same grid size as the layout element in the grid of the second desktop interface. In this way, it can be ensured that when the layout element is laid out, a relative location of the layout element in the third desktop interface can be retained as much as possible, to help the user quickly find a display element on which a related operation needs to be performed.

In some embodiments, an m×n grid is used as an example, and there may be a plurality of preset layout element traversal manners.

A first layout element traversal manner is traversing layout elements in a sequence of rows then columns by using a grid in an upper left corner of a grid as a traversal start point. The tablet computer 10 may first traverse, in ascending order of quantities of columns occupied by layout elements, an untraversed layout element in layout elements that occupy grids in the first row, then traverse, in ascending order of quantities of columns occupied by layout elements, an untraversed layout element in layout elements that occupy grids in the second row, and the like, until all the layout elements are traversed.

For example, refer to FIG. 11A-1 and FIG. 11A-2. For the desktop interface P6 (as the third desktop interface), layout elements may include the clock widget U11, the notes widget U12, the file widget U13, the contacts widget U14, the video icon U21, the recorder icon U22, the email icon U23, the calculator icon U24, the calendar icon U25, the music icon U26, the calendar widget U35, and an empty grid S01 to an empty grid S10.

Refer to FIG. 11B. In the first layout element traversal manner, the tablet computer 10 may traverse each layout element in a sequence of rows then columns by using an upper left corner as a traversal start point: traversing, in ascending order of quantities of columns occupied by layout elements, layout elements that are not traversed in layout elements that occupy grids in the first row: clock widget U11→notes widget U12→empty grid S01→video icon U21; traversing, in ascending order of quantities of columns occupied by layout elements, layout elements that are not traversed in layout elements that occupy grids in the second row: empty grid S02→recorder icon U22; traversing, in ascending order of quantities of columns occupied by layout elements, layout elements that are not traversed in layout elements that occupy grids in the third row: file widget U13→contacts widget U14→empty grid S03→email icon U23; traversing, in ascending order of quantities of columns occupied by layout elements, layout elements that are not traversed in layout elements that occupy grids in the fourth row: empty grid S04→calculator icon U24; traversing, in ascending order of quantities of columns occupied by layout elements, layout elements that are not traversed in layout elements that occupy grids in the fifth row: calendar widget U35→empty grid S05→empty grid S06→empty grid S07→calendar icon U25; and traversing, in ascending order of quantities of columns occupied by layout elements, layout elements that are not traversed in layout elements that occupy grids in the sixth row: empty grid S08→empty grid S09→empty grid S10→music icon U26. In this case, all the layout elements of the desktop interface P6 are traversed. Based on the foregoing process, layout rankings of the layout elements of the desktop interface P6 are from 1 to 21 as follows: clock widget U11 →notes widget U12→empty grid S01→video icon U21→empty grid S02→recorder icon U22→file widget U13→contacts widget U14→empty grid S03→email icon U23→empty grid S04→calculator icon U24→calendar widget U35→empty grid S05→empty grid S06→empty grid S07→calendar icon U25→empty grid S08→empty grid S09→empty grid S10→music icon U26.

A second layout element traversal manner is traversing layout elements in a row-column sequence of rows then columns by using a grid in a lower left corner of a grid as a traversal start point. The tablet computer 10 may first traverse, in ascending order of quantities of columns occupied by layout elements, an untraversed layout element in layout elements that occupy grids in the m^{th} row, then traverse, in ascending order of quantities of columns occupied by layout elements, an untraversed layout element in layout elements that occupy grids in the (m-1)^{th} row, and the like, until all the layout elements are traversed.

For example, refer to FIG. 11C. In the second layout element traversal manner, the tablet computer 10 may traverse each layout element in a sequence of rows then columns by using a lower left corner as a traversal start point. A specific process is not described again. In the second layout element traversal manner, layout rankings of the layout elements of the desktop interface P6 are from 1 to 21 as follows: file widget U13→calendar widget U35→empty grid S08→empty grid S09→empty grid S10→music icon U26→empty grid S05→empty grid S06→empty grid S07→calendar icon U25→contacts widget U14→empty grid S04→calculator icon U24→empty grid S03→email icon U23→clock widget U11→notes widget U12→empty grid S02→recorder icon U22→empty grid S01→video icon U21.

A third layout element traversal manner is traversing layout elements in a row-column sequence of rows then columns by using a grid in an upper right corner of a grid as a traversal start point.

The tablet computer 10 may first traverse, in descending order of quantities of columns occupied by layout elements, an untraversed layout element in layout elements that occupy grids in the first row, then traverse, in descending order of quantities of columns occupied by layout elements, an untraversed layout element in layout elements that occupy grids in the second row, and the like, until all the layout elements are traversed.

For example, refer to FIG. 11D. In the third layout element traversal manner, the tablet computer 10 may traverse each layout element in a sequence of rows then columns by using an upper right corner as a traversal start point. A specific process is not described again. In the third layout element traversal manner, layout rankings of the layout elements of the desktop interface P6 are from 1 to 21 as follows: video icon U21→empty grid S01→notes widget U12→clock widget U11→recorder icon U22→empty grid S02→email icon U23→empty grid S03→contacts widget U14→file widget U13→calculator icon U24→empty grid S04→calendar icon U25→empty grid S07→empty grid S06→empty grid S05→calendar widget U35→music icon U26→empty grid S10→empty grid S09→empty grid S08.

A fourth layout element traversal manner is traversing layout elements in a row-column sequence of rows then columns by using a grid in a lower right corner of a grid as a traversal start point. The tablet computer 10 may first traverse, in descending order of quantities of columns occupied by layout elements, an untraversed layout element in layout elements that occupy grids in the m^{th} row, then traverse, in ascending order of quantities of columns occupied by layout elements, an untraversed layout element in layout elements that occupy grids in the (m-1)^{th} row, and the like, until all the layout elements are traversed.

For example, refer to FIG. 11E. In the fourth layout element traversal manner, the tablet computer 10 may traverse each layout element in a sequence of rows then columns by using a lower right corner as a traversal start point. A specific process is not described again. In the fourth layout element traversal manner, layout rankings of the layout elements of the desktop interface P6 are from 1 to 21 as follows: music icon U26→empty grid S10→empty grid S09→empty grid S08→calendar widget U35→file widget U13→calendar icon U25→empty grid S07→empty grid S06→empty grid S05→calculator icon U24→empty grid S04→contacts widget U14→email icon U23→empty grid S03→recorder icon U22→empty grid S02→notes widget U12→clock widget U11→video icon U21→empty grid S01.

A fifth layout element traversal manner is traversing layout elements in a row-column sequence of columns then rows by using a grid in an upper left corner of a grid as a traversal start point. The tablet computer 10 may first traverse, in ascending order of quantities of rows occupied by the layout elements, an untraversed layout element in layout elements that occupy grids in the first column, then traverse, in ascending order of quantities of rows occupied by layout elements, an untraversed layout element in layout elements that occupy grids in the second column, and the like, until all the layout elements are traversed.

Refer to FIG. 11F. In the fifth layout element traversal manner, the tablet computer 10 may traverse each layout element in a sequence of columns then rows by using an upper left corner as a traversal start point: traversing, in ascending order of quantities of rows occupied by layout elements, untraversed layout elements in layout elements that occupy grids in the first column: clock widget U11→file widget U13; because there is no untraversed layout element in the second column to the fourth column, traversing, in ascending order of quantities of rows occupied by layout elements, untraversed layout elements in layout elements that occupy grids in the fifth column: notes widget U12→contacts widget U14→calendar widget U35; because there is no untraversed layout element in the sixth column, traversing, in ascending order of quantities of rows occupied by layout elements, untraversed layout elements in layout elements that occupy grids in the seventh column: empty grid S05→empty grid S08; traversing, in ascending order of quantities of rows occupied by layout elements, untraversed layout elements in layout elements that occupy grids in the eighth column: empty grid S06→empty grid S09; traversing, in ascending order of quantities of rows occupied by layout elements, untraversed layout elements in layout elements that occupy grids in the ninth column: empty grid S01 →empty grid S02→empty grid S03 →empty grid S04→empty grid S07→empty grid S10; and traversing, in ascending order of quantities of rows occupied by layout elements, untraversed layout elements in layout elements that occupy grids in the tenth column: video icon U21→recorder icon U22→email icon U23→calculator icon U24→calendar icon U25→music icon U26. In this case, all the layout elements of the desktop interface P6 are traversed. Based on the foregoing process, layout rankings of the layout elements of the desktop interface P6 are from 1 to 21 as follows: clock widget U11→file widget U13→notes widget U12→contacts widget U14→calendar widget U35→empty grid S05→empty grid S08→empty grid S06→empty grid S09→empty grid S01→empty grid S02→empty grid S03→empty grid S04→empty grid S07→empty grid S10→video icon U21→recorder icon U22→email icon U23→calculator icon U24→calendar icon U25→music icon U26.

A sixth layout element traversal manner is traversing layout elements in a row-column sequence of columns then rows by using a grid in a lower left corner of a grid as a traversal start point. The tablet computer 10 may first traverse, in descending order of quantities of rows occupied by layout elements, an untraversed layout element in layout elements that occupy grids in the first column, then traverse, in descending order of quantities of rows occupied by layout elements, an untraversed layout element in layout elements that occupy grids in the second column, and the like, until all the layout elements are traversed.

Refer to FIG. 11G. In the sixth layout element traversal manner, the tablet computer 10 may traverse each layout element in a sequence of columns then rows by using a lower left corner as a traversal start point. A specific process is not described again. In the sixth layout element traversal manner, layout rankings of the layout elements of the desktop interface P6 are from 1 to 21 as follows: file widget U13→clock widget U11→calendar widget U35→contacts widget U14→notes widget U12→empty grid S08→empty grid S05→empty grid S09→empty grid S06→empty grid S10→empty grid S07→empty grid S04→empty grid S03→empty grid S02→empty grid S01→music icon U26→calendar icon U25→calculator icon U24→email icon U23→recorder icon U22→video icon U21.

A seventh layout element traversal manner is traversing layout elements in a row-column sequence of columns then rows by using a grid in an upper right corner of a grid as a traversal start point. The tablet computer 10 may first traverse, in ascending order of quantities of rows occupied by layout elements, an untraversed layout element in layout elements that occupy grids in the n^{th} column, then traverse, in ascending order of quantities of rows occupied by layout elements, an untraversed layout element in layout elements that occupy grids in the (n-1)^{th} column, and the like, until all the layout elements are traversed.

Refer to FIG. 11H. In the seventh layout element traversal manner, the tablet computer 10 may traverse each layout element in a sequence of columns then rows by using an upper right corner as a traversal start point. A specific process is not described again. In the seventh layout element traversal manner, layout rankings of the layout elements of the desktop interface P6 are from 1 to 21 as follows: video icon U21→recorder icon U22→email icon U23→calculator icon U24→calendar icon U25→music icon U26→empty grid S01→empty grid S02→empty grid S03→empty grid S04→empty grid S07→empty grid S10→notes widget U12→contacts widget U14→empty grid S06→empty grid S09→empty grid S05→empty grid S08→calendar widget U35→clock widget U11→file widget U13.

An eighth layout element traversal manner is traversing layout elements in a row-column sequence of columns then rows by using a grid in a lower right corner of a grid as a traversal start point. The tablet computer 10 may first traverse, in descending order of quantities of rows occupied by layout elements, an untraversed layout element in layout elements that occupy grids in the n^{th} column, then traverse, in descending order of quantities of rows occupied by layout elements, an untraversed layout element in layout elements that occupy grids in the (n-1)^{th} column, and the like, until all the layout elements are traversed.

Refer to FIG. 11I. In the eighth layout element traversal manner, the tablet computer 10 may traverse each layout element in a sequence of columns then rows by using a lower left corner as a traversal start point. A specific process is not described again. In the eighth layout element traversal manner, layout rankings of the layout elements of the desktop interface P6 are from 1 to 21 as follows: music icon U26→calendar icon U25→calculator icon U24→email icon U23→recorder icon U22→video icon U21→empty grid S10→empty grid S07→empty grid S04→empty grid S03→empty grid S02→empty grid S01→empty grid S09→empty grid S06→contacts widget U14→notes widget U12→empty grid S08→empty grid S05→calendar widget U35→file widget U13→clock widget U11.

It should be noted that, in some other embodiments, the layout element traversal manner may alternatively be another manner. This is not limited herein.

After ranking grids of the layout elements in the third desktop interface are traversed in any one of the first layout element traversal manner to the eighth layout element traversal manner, a layout ranking corresponding to each layout element may be obtained. A layout element traversed earlier is laid out earlier.

After obtaining the layout rankings of the layout elements in the third desktop interface, the tablet computer 10 may lay out the layout elements in the third desktop interface into the grid of the second desktop interface in the layout ranking of each layout element by using a traversal start point corresponding to each layout element traversal manner as a layout start point. When a layout element is laid out, the layout element is always laid out in an empty grid area that is first traversed in a corresponding layout element traversal manner and that is in an empty grid area having a same grid size as the layout element in the grid of the second desktop interface.

For ease of description, the following describes the technical solutions of this application by using an example in which a grid traversal manner is the first layout element traversal manner.

For example, for the desktop interface P6 (as the third desktop interface), the layout rankings of the layout elements may be: clock widget U11→notes widget U12→empty grid S01→video icon U21→empty grid S02→recorder icon U22→file widget U13→contacts widget U14→empty grid S03→email icon U23→empty grid S04→calculator icon U24→calendar widget U35→empty grid S05→empty grid S06→empty grid S07→calendar icon U25→empty grid S08→empty grid S09→empty grid S10→music icon U26. Refer to FIG. 12A to FIG. 12C. The tablet computer 10 may start layout by using the traversal start point that is in the first layout element traversal manner. For example, the tablet computer 10 may lay out the clock widget U11 (whose layout ranking is 1) in a 2×4 grid area with grid coordinates of (1, 1) in an upper left corner of a 10×6 grid. After the clock widget U11 is laid out, the tablet computer 10 may determine that a grid area that is first traversed in the first layout element traversal manner (in a sequence of rows then columns by using the upper left corner as a traversal start point) and that is in an empty grid area having a same grid size as the notes widget U12 (whose layout ranking is 2) is a 2×4 grid area with grid coordinates of (1, 3) in the upper left corner, and lay out the notes widget U12 in a grid area D1. Similarly, the tablet computer 10 may sequentially lay out the empty grid S01, the video icon U21, the empty grid S02, and the recorder icon U22 (whose layout rankings are 3, 4, 5, and 6 respectively) into grids with grid coordinates of (5, 1), (6, 1), (5, 2), and (6, 2) respectively, lay out the file widget U13 (whose layout ranking is 7) into a 4×4 grid area with grid coordinates of (1, 5) in the upper left corner of the 10×6 grid, lay out the contacts widget U14 (whose layout ranking is 8) into a 2×4 grid area with grid coordinates of (1, 9) in the upper left corner of the 10×6 grid, lay out the empty grid S03, the email icon U23, the empty grid S04, and the calculator icon U24 (whose layout rankings are 9, 10, 11, and 12 respectively) into grids with grid coordinates of (5, 3), (5, 4), (6, 2), and (6, 4) respectively, lay out the calendar widget U35 (whose layout ranking is 13) into a 2×2 grid area with grid coordinates of (5, 5) in the upper left corner of the 10×6 grid, and sequentially lay out the empty grid S05, the empty grid S06, the empty grid S07, the calendar icon U25, the empty grid S08, the empty grid S09, the empty grid S10, and the music icon U26 (whose layout rankings are 14 to 21 respectively) into grids with grid coordinates of (5, 7), (6, 7), (5, 8), (6, 8), (5, 59), (6, 9), (5, 10), and (6, 10) respectively. In this way, a layout manner of display elements in a desktop interface P8 is similar to that in the desktop interface P6, so that the user can more easily find, in the desktop interface P8, a display element on which a related operation needs to be performed.

The following describes a solution in which the tablet computer 10 determines a layout ranking of each layout element in the first layout element traversal manner, and lays out each display element in the grid of the second desktop interface in the layout ranking of each layout element.

For example, because a traversal start point is an upper left corner of a grid and a row-column sequence is rows then columns in the first layout element traversal manner, the tablet computer 10 may establish an XOY coordinate system by using the traversal start point (the upper left corner of the grid) in the first layout element traversal manner as an origin, a row direction (a row is first traversed in the row-column sequence) as an X axis (because a quantity of columns in the first layout element traversal manner is in ascending order, a positive direction of the X axis is from a left side of a display interface to a right side of the display interface), and a column direction (a column is traversed later in the row-column sequence) as a Y axis (because a quantity of rows in the first layout element traversal manner is in ascending order, a positive direction of the Y axis is from an upper part of the display interface to a lower part of the display interface). Coordinates of an upper left corner grid (which is the same as a location of the traversal start point in the first layout element traversal manner relative to the grid of the third desktop interface) of a layout element in the XOY coordinate system are used as coordinates of the layout element in the XOY coordinate system (referred to as coordinate system coordinates below). In addition, the tablet computer 10 may traverse layout elements in ascending order of Y coordinate values of coordinate system coordinates of the layout elements, and in a process of traversing layout elements with a same Y coordinate value, traverse the layout elements in ascending order of X coordinate values of the coordinate system coordinates of the layout elements. In the traversal process, the tablet computer 10 may determine layout rankings of layout elements in a sequence in which the layout elements are traversed, where a layout element traversed earlier is laid out earlier.

For example, refer to FIG. 13A. The third desktop interface whose grid division manner is a 4×6 grid includes layout elements A1 to A13. Grid sizes of the layout element A1, the layout element A3, the layout element A5, the layout element A10, the layout element A12, and the layout element A13 are 1×1 (a grid in the upper left corner is a grid in which the layout element is located), and coordinates of the grid in which the layout element is located in the XOY coordinate system are coordinate system coordinates of the layout element. Grid sizes of the layout element A2, the layout element A4, the layout element A6, the layout element A7, the layout element A8, the layout element A9, and the layout element A11 are all greater than 1×1, and coordinates of an upper left corner grid in a plurality of grids occupied by each of the layout element A2, the layout element A4, the layout element A6, the layout element A7, the layout element A8, the layout element A9, and the layout element A11 in XOY are used as respective coordinate system coordinates. In this way, coordinate system coordinates of the layout elements A1 to A13 are respectively (1, 1), (1, 2), (1, 4), (2, 1), (2, 3), (2, 4), (4, 1), (3, 3), (4, 4), *(5, 1),* (5, 2), (6, 1) and (6, 4).

Further, the layout elements with Y coordinates of 1 are the layout element A1, the layout element A4, the layout element A7, the layout element A10, and the layout element A12 in ascending order of X coordinates, the layout elements with Y coordinates of 2 are the layout element A2 and the layout element A11 in ascending order of X coordinates, the layout elements with Y coordinates of 3 are the layout element A5 and the layout element A8 in ascending order of X coordinates, and the layout elements with Y coordinates of 4 are the layout element A3, the layout element A6, the layout element A9, and the layout element A13 in ascending order of X coordinates. Based on the foregoing process, refer to FIG. 13. Layout rankings of the layout elements A1 to A13 are the layout element A1, the layout element A4, the layout element A7, the layout element A10, the layout element A12, the layout element A2, the layout element A5, the layout element A8, the layout element A11, the layout element A3, the layout element A6, the layout element A9, and the layout element A13, that is, the layout rankings of the layout elements A1 to A13 are respectively 1, 6, 10, 2, 8, 11, 3, 9, 12, 4, 7, 5, and 13.

Then, the tablet computer 10 may sequentially lay out the layout elements A1 to A13 into the second desktop interface whose grid division manner is a 6×4 grid in the layout rankings of the layout elements A1 to A13. In a layout process, an XOY coordinate system may be established in a same manner as that of the third desktop interface and by using the upper left corner of the 6×4 grid as an origin. Each layout element may be laid out into an empty grid area with a minimum X coordinate in an empty grid area with a minimum Y coordinate in an upper left corner grid (namely, an empty grid area that is first traversed in a row-column sequence of rows then columns by using the upper left corner grid as a traversal start point) in an empty grid area having a same grid size as the layout element in the 6×4 grid.

Refer to FIG. 13B. The tablet computer 10 may sequentially lay out the layout element A1 into a grid in the first row and the first column, lay out the layout element A4 (whose layout ranking is 2) into a 4×4 grid area with coordinate system coordinates of (2, 1) in an upper left corner grid, lay out the layout element A7 (whose layout ranking is 3) into a 2×1 grid area with coordinate system coordinates of (4, 1) in the upper left corner grid, lay out the layout element A10 (whose layout ranking is 4) into a grid with coordinate system coordinates of (1, 2), lay out the layout element A12 (whose layout ranking is 5) into a grid with coordinate system coordinates of (1, 3), lay out the layout element A2 (whose layout ranking is 6) into a 2×1 grid area with coordinate system coordinates of (2, 3) in the upper left corner grid, lay out the layout element A11 (whose layout ranking is 7) into a 4×4 grid area with coordinate system coordinates of (3, 3) in the upper left corner grid, lay out the layout element A5 (whose layout ranking is 8) into a grid with coordinate system coordinates of (1, 4), lay out the layout element A8 (whose layout ranking is 9) into a 1×2 grid area with coordinate system coordinates of (1, 5) in the upper left corner grid, lay out the layout element A3 (whose layout ranking is 10) into a grid with coordinate system coordinates of (3, 5), lay out the layout element A6 (whose layout ranking is 11) into a 1×2 grid area with coordinate system coordinates of (1, 6) in the upper left corner grid, lay out the layout element A9 (whose layout ranking is 12) into a 1×2 grid area with coordinate system coordinates of (3, 6) in the upper left corner grid, and lay out the layout element A13 (whose layout ranking is 13) into a grid with coordinate system coordinates of (4, 5).

It can be seen from FIG. 13A and FIG. 13B that the layout element A1, the layout element A4, the layout element A10, and the layout element A7 are close to each other on desktop interfaces before and after the display direction changes; and the layout element A3, the layout element A6, the layout element A8, the layout element A9, and the layout element A13 are close to each other on the desktop interfaces before and after the display direction changes. In other words, a part of a layout of the desktop interface before the display direction changes is retained in the desktop interface after the display direction changes, to help the user quickly find a layout element that needs to be operated.

Similarly, in the second layout element traversal manner, the tablet computer 10 may establish a coordinate system by using the traversal start point (the lower left corner of the grid) in the second layout element traversal manner as an origin, a row direction (a row is first traversed) as an X axis (because a quantity of columns in the second layout element traversal manner is in ascending order, a positive direction of the X axis is from a left side of a display interface to a right side of the display interface), and a column direction (a column is traversed later) as a Y axis (because a quantity of rows in the second layout element traversal manner is in descending order, a positive direction of the Y axis is from a lower part of the display interface to an upper part of the display interface). Coordinates of a lower left corner grid (whose location is the same as a location of the traversal start point in the second layout element traversal manner relative to the grid of the third desktop interface) of a layout element in the XOY coordinate system are used as coordinate system coordinates of the layout element.

In the third layout element traversal manner, the tablet computer 10 may establish a coordinate system by using the traversal start point (the upper right corner of the grid) in the third layout element traversal manner as an origin, a row direction (a row is first traversed) as an X axis (because a quantity of columns in the third layout element traversal manner is in descending order, a positive direction of the X axis is from a right side of a display interface to a left side of the display interface), and a column direction (a column is traversed later) as a Y axis (because a quantity of rows in the third layout element traversal manner is in ascending order, a positive direction of the Y axis is from an upper part of the display interface to a lower part of the display interface). Coordinates of an upper right corner grid (whose location is the same as a location of the traversal start point in the third layout element traversal manner relative to the grid of the third desktop interface) of a layout element in the XOY coordinate system are used as coordinate system coordinates of the layout element.

In the fourth layout element traversal manner, the tablet computer 10 may establish a coordinate system by using the traversal start point (the lower right corner of the grid) in the fourth layout element traversal manner as an origin, a row direction (a row is first traversed) as an X axis (because a quantity of columns in the fourth layout element traversal manner is in descending order, a positive direction of the X axis is from a right side of a display interface to a left side of the display interface), and a column direction (a column is traversed later) as a Y axis (because a quantity of rows in the fourth layout element traversal manner is in descending order, a positive direction of the Y axis is from a lower part of the display interface to an upper part of the display interface). Coordinates of a lower right corner grid (whose location is the same as a location of the traversal start point in the first layout element traversal manner relative to the grid of the third desktop interface) of a layout element in the XOY coordinate system are used as coordinate system coordinates of the layout element.

Correspondingly, for the second layout element traversal manner to the fourth layout element traversal manner, after the XOY coordinate system is established, the tablet computer 10 may traverse layout elements in ascending order of Y coordinate values of coordinate system coordinates of the layout elements, and in a process of traversing layout elements with a same Y coordinate value, traverse the layout elements in ascending order of X coordinate values of the coordinate system coordinates of the layout elements. In the traversal process, the tablet computer 10 may determine layout rankings of layout elements in a sequence in which the layout elements are traversed, where a layout element traversed earlier is laid out earlier. Then, the tablet computer 10 may sequentially lay out the layout elements in the grid of the second desktop interface in the layout rankings of the layout elements. In a layout process, each layout element may be laid out in an empty grid area with a minimum X coordinate in an empty grid area with a minimum Y coordinate in a grid corresponding to a traversal start point (for example, a grid in the upper left corner of an empty grid area corresponding to the fifth layout element traversal manner in which the traversal start point is the upper left corner) in an empty grid area having a same grid size as the layout element in the grid of the second desktop interface.

In the fifth layout element traversal manner, the tablet computer 10 may establish a coordinate system by using the traversal start point (the upper left corner of the grid) in the fifth layout element traversal manner as an origin, a column direction (a column is first traversed) as an X axis (because a quantity of rows in the fifth layout element traversal manner is in ascending order, a positive direction of the X axis is from an upper part of a display interface to a lower part of the display interface), and a row direction (a row is traversed later) as a Y axis (because a quantity of columns in the fifth layout element traversal manner is in ascending order, a positive direction of the Y axis is from a left side of the display interface to a right side of the display interface). Coordinates of an upper left corner grid (whose location is the same as a location of the traversal start point in the fifth layout element traversal manner relative to the grid of the third desktop interface) of a layout element in the XOY coordinate system are used as coordinate system coordinates of the layout element.

Similarly, in the sixth layout element traversal manner, the tablet computer 10 may establish a coordinate system by using the traversal start point (the lower left corner of the grid) in the sixth layout element traversal manner as an origin, a column direction (a column is first traversed) as an X axis (because a quantity of rows in the fifth layout element traversal manner is in descending order, a positive direction of the X axis is from a lower part of a display interface to an upper part of the display interface), and a row direction (a row is traversed later) as a Y axis (because a quantity of columns in the fifth layout element traversal manner is in ascending order, a positive direction of the Y axis is from a left side of the display interface to a right side of the display interface). Coordinates of a lower left corner grid (whose location is the same as a location of the traversal start point in the sixth layout element traversal manner relative to the grid of the third desktop interface) of a layout element in the XOY coordinate system are used as coordinate system coordinates of the layout element.

In the seventh layout element traversal manner, the tablet computer 10 may establish a coordinate system by using the traversal start point (the upper right corner of the grid) in the seventh layout element traversal manner as an origin, a column direction (a column is first traversed) as an X axis (because a quantity of rows in the fifth layout element traversal manner is in ascending order, a positive direction of the X axis is from an upper part of a display interface to a lower part of the display interface), and a row direction (a row is traversed later) as a Y axis (because a quantity of columns in the fifth layout element traversal manner is in descending order, a positive direction of the Y axis is from a right side of the display interface to a left side of the display interface). Coordinates of an upper right corner grid (whose location is the same as a location of the traversal start point in the seventh layout element traversal manner relative to the grid of the third desktop interface) of a layout element in the XOY coordinate system are used as coordinate system coordinates of the layout element.

In the eighth layout element traversal manner, the tablet computer 10 may establish a coordinate system by using the traversal start point (the lower right corner of the grid) in the eighth layout element traversal manner as an origin, a column direction (a column is first traversed) as an X axis (because a quantity of rows in the fifth layout element traversal manner is in descending order, a positive direction of the X axis is from a lower part of a display interface to an upper part of the display interface), and a row direction (a row is traversed later) as a Y axis (because a quantity of columns in the fifth layout element traversal manner is in descending order, a positive direction of the Y axis is from a right side of the display interface to a left side of the display interface). Coordinates of a ranking grid in a lower right corner grid (whose location is the same as a location of the traversal start point in the eighth layout element traversal manner relative to the grid of the third desktop interface) of a layout element in the XOY coordinate system are used as coordinate system coordinates of the layout element.

Correspondingly, for the fifth layout element traversal manner to the eighth layout element traversal manner, after the XOY coordinate system is established, the tablet computer 10 may traverse layout elements in ascending order of Y coordinate values of coordinate system coordinates of the layout elements, and in a process of traversing layout elements with a same Y coordinate value, traverse the layout elements in ascending order of X coordinate values of the coordinate system coordinates of the layout elements. In the traversal process, the tablet computer 10 may determine layout rankings of layout elements in a sequence in which the layout elements are traversed, where a layout element traversed earlier is laid out earlier. Then, the tablet computer 10 may sequentially lay out the layout elements in the grid of the second desktop interface in the layout rankings of the layout elements. In a layout process, each layout element may be laid out in an empty grid area with a minimum X coordinate in an empty grid area with a minimum Y coordinate in a grid corresponding to a traversal start point (for example, a grid in the upper left corner of an empty grid area corresponding to the fifth layout element traversal manner in which the traversal start point is the upper left corner) in an empty grid area having a same grid size as the layout element in the grid of the second desktop interface.

### Second layout manner:

In comparison with the first layout manner, when traversing the grid in the third desktop interface, the tablet computer 10 may not perform traversal in the first layout element traversal manner to the eighth layout element traversal manner, but consider both a location relationship of layout elements and a size relationship of grids occupied by the layout elements. In this way, when display elements are laid out into the second desktop interface, a layout manner of the display elements in the third desktop interface can be better retained. In addition, in a process in which the tablet computer 10 lays out the display elements into the grid of the second desktop interface in the layout rankings of the display elements, the tablet computer 10 may further adjust a laid-out display element to better retain the layout manner of the display elements in the third desktop interface.

In the second layout manner, the tablet computer 10 may first determine a ranking grid of each layout element (indicating a grid that represents each layout element in a layout element traversal process), and determine a layout ranking of each layout element based on the ranking grid of each layout element and a location relationship of layout elements. For example, if a traversal start point is an upper left corner grid and a row-column sequence is rows then columns, or a traversal start point is a lower right corner grid and a row-column sequence is columns then rows, a ranking grid of a display element that occupies a plurality of grids is a grid in a lower left corner of the plurality of grids occupied by the display element. If a traversal start point is an upper right corner grid and a row-column sequence is rows then columns, or a traversal start point is a lower left corner grid and a row-column sequence is columns then rows, a ranking grid of a display element that occupies a plurality of grids is a grid in a lower right corner of the plurality of grids occupied by the display element. If a traversal start point is a lower left corner grid and a row-column sequence is rows then columns, or a traversal start point is an upper right corner grid and a row-column sequence is columns then rows, a ranking grid of a display element that occupies a plurality of grids is a grid in an upper left corner of the plurality of grids occupied by the display element. If a traversal start point is a lower right corner grid and a row-column sequence is rows then columns, or a traversal start point is an upper left corner grid and a row-column sequence is columns then rows, a ranking grid of a display element that occupies a plurality of grids is a grid in an upper right corner of the plurality of grids occupied by the display element.

In some embodiments, a sequence of rows then columns is traversing row by row in ascending order of differences between row numbers of grids and a row number of a traversal start point. When layout elements occupying a row are traversed, the layout elements are traversed column by column in ascending order of differences between quantities of columns occupied by the layout elements and a quantity of columns of the traversal start point. In addition, if a next untraversed layout element does not meet a row wrap condition, a layout element that has a smallest difference between a row number of a ranking grid of the layout element and a row number of the traversal start point and that is in an untraversed layout element whose column number of a ranking grid is the same as a column number of a ranking grid of the next untraversed layout element and whose difference between a row number of the ranking grid and the row number of the traversal start point is less than or equal to a difference between a row number of the row and the row number of the traversal start point is traversed. If the next untraversed layout element meets the row wrap condition, an untraversed layout element occupying a next row is traversed. The row wrap condition may include: the next untraversed layout element in the row occupies a grid in the next row (a difference between a row number of the next row and the row number of the traversal start point is greater than the difference between the row number of the row and the row number of the traversal start point).

In some embodiments, a sequence of columns then rows is traversing column by column in ascending order of differences between column numbers of grids and a column number of a traversal start point. When layout elements occupying a column are traversed, the layout elements are traversed row by row in ascending order of differences between quantities of rows occupied by the layout elements and a quantity of rows of the traversal start point. In addition, if a next untraversed layout element does not meet a column wrap condition, a layout element that has a smallest difference between a column number of a ranking grid of the layout element and a column number of the traversal start point and that is in untraversed layout elements whose row numbers of ranking grids are the same as a row number of a ranking grid of the next untraversed layout element and whose differences between column numbers of the ranking grids and the column number of the traversal start point are less than or equal to a difference between a column number of the column and the column number of the traversal start point is traversed. If the next untraversed layout element meets the column wrap condition, an untraversed layout element occupying a next column is traversed. The column wrap condition may include: the next untraversed layout element in the column occupies a grid in the next column (a difference between a column number of the next column and the column number of the traversal start point is greater than the difference between the column number of the column and the column number of the traversal start point).

In some embodiments, there may be a plurality of traversal manners for the layout elements in the m×n grid.

A ninth layout element traversal manner is traversing layout elements in a row-column sequence of rows then columns by using an upper left corner of a grid as a traversal start point. The tablet computer 10 traverses each layout element in a sequence from a first row to an m^{th} row. In a process of traversing layout elements occupying an i^{th} row, the layout elements are traversed in ascending order of column numbers of ranking grids of the layout elements. If a next untraversed layout element occupying the i^{th} row further occupies a grid in an (i+1)^{th} row (which is equivalent to meeting the row wrap condition), an untraversed layout element in the (i+1)^{th} row is traversed; otherwise, a layout element whose row number of a ranking grid is smallest in an untraversed layout element whose column number of a ranking grid is the same as a column number of a ranking grid of the next untraversed layout element and whose row number of the ranking grid is less than or equal to i is traversed. After the last layout element occupying the i^{th} row is traversed, the untraversed layout element occupying the (i+1)^{th} row is traversed, and the like.

For example, refer to FIG. 14A. The third desktop interface whose grid division manner is a 4×6 grid includes layout elements B1 to B11. Grid sizes of the layout elements B1 to B6 are 1×1, and then the tablet computer 10 may use a grid occupied by each layout element as a ranking grid of each layout element. Grid sizes of the layout elements B7 to B11 are all greater than 1×1, and then a grid in a lower left corner of a grid occupied by each layout element is used as a ranking grid of each layout element. Grid coordinates of ranking grids of the layout elements B1 to B11 are sequentially (1, 1), (1, 2), (1, 3), (1, 4), (2, 1), (2, 2), (2, 4), (3, 2), (3, 4), (5, 1), and (5, 2). Based on this, a traversal process of the layout elements B1 to B11 may include:

The tablet computer 10 may first traverse, in the ninth layout element traversal manner, a layout element that occupies the first row. Because the layout element B1 that occupies the first column in the first row does not occupy a grid in the second row, the layout element B1 is traversed.

After the layout element B1 is traversed, because the next untraversed layout element B5 that occupies a grid in the first row does not occupy a grid in the second row (the row wrap condition is not met), the tablet computer 10 traverses a layout element (the layout element B5) whose row number of a ranking grid is smallest in an untraversed layout element (the layout element B5) whose column number of a ranking grid is the same as a column number (the second column) of a ranking grid of the layout element B5 and whose row number of the ranking grid is less than or equal to 1.

After the layout element B5 is traversed, the next untraversed layout element B8 that occupies the grid in the first row occupies a grid in the second row (the row wrap condition is met), so that the tablet computer 10 turns to traverse a layout element that occupies a grid in the second row. Because the next untraversed layout element B2 that occupies the grid in the second row does not occupy a grid in the third row, the tablet computer 10 traverses a layout element (the layout element B2) whose row number of a ranking grid is smallest in an untraversed layout element (the layout element B2) whose column number of a ranking grid is the same as a column number (the first column) of a ranking grid of the layout element B2 and whose row number of the ranking grid is less than or equal to 2.

After the layout element B2 is traversed, because the next untraversed layout element B6 that occupies a grid in the second row does not occupy a grid in the third row (the row wrap condition is not met), the tablet computer 10 traverses a layout element (the layout element B6) whose row number of a ranking grid is smallest in an untraversed layout element (the layout element B6) whose column number of a ranking grid is the same as a column number (the second column) of a ranking grid of the layout element B6 and whose row number of the ranking grid is less than or equal to 2.

After the layout element B6 is traversed, because the next untraversed layout element B8 that occupies a grid in the second row does not occupy a grid in the third row (the row wrap condition is not met), the tablet computer 10 traverses a layout element (the layout element B8) whose row number of a ranking grid is smallest in an untraversed layout element (the layout element B8) whose column number of a ranking grid is the same as a column number (the third column) of a ranking grid of the layout element B8 and whose row number of the ranking grid is less than or equal to 2.

After the layout element B8 is traversed, because the next untraversed layout element B11 that occupies a grid in the second row does not occupy a grid in the third row (the row wrap condition is not met), the tablet computer 10 traverses a layout element (the layout element B10) whose row number of a ranking grid is smallest in untraversed layout elements (the layout elements B10 and B11) whose column numbers of ranking grids are the same as a column number (the fifth column) of a ranking grid of the layout element B11 and whose row numbers of the ranking grids are less than or equal to 2.

After the layout element B10 is traversed, because traversal of the layout elements that occupy the first row is completed, traversal of an untraversed layout element that occupies the second row is performed. Because the next untraversed layout element B11 that occupies the grid in the second row does not occupy a grid in the third row, the tablet computer 10 traverses a layout element (the layout element B11) whose row number of a ranking grid is smallest in an untraversed layout element (the layout element B11) whose column number of a ranking grid is the same as a column number (the fifth column) of a ranking grid of the layout element B11 and whose row number of the ranking grid is less than or equal to 2.

After the layout element B11 is traversed, because traversal of the layout elements that occupy the second row is completed, traversal of an untraversed layout element that occupies the third row is performed. Because the next untraversed layout element B3 that occupies a grid in the third row does not occupy a grid in the fourth row (the row wrap condition is not met), the tablet computer 10 traverses a layout element (the layout element B3) whose row number of a ranking grid is smallest in an untraversed layout element (the layout element B3) whose column number of a ranking grid is the same as a column number (the first column) of a ranking grid of the layout element B3 and whose row number of the ranking grid is less than or equal to 3.

After the layout element B3 is traversed, the next untraversed layout element B7 that occupies a grid in the third row occupies a grid in the fourth row (the row wrap condition is met), so that the tablet computer 10 turns to traverse an untraversed layout element in the fourth row. Because the fourth row is the last row, there is no layout element occupying the next row (there is no layout element that meets the row wrap condition). The tablet computer 10 may traverse a layout element (the layout element B4) whose row number of a ranking grid is smallest in an untraversed layout element (the layout element B4) whose column number of a ranking grid is the same as a column number (the first column) of a ranking grid of the next untraversed layout element B4 occupying a grid in the fourth row and whose row number of the ranking grid is less than or equal to 4.

After traversing the layout element B4, the tablet computer 10 may traverse a layout element (the layout element B7) whose row number of a ranking grid is smallest in an untraversed layout element (the layout element B7) whose column number of a ranking grid is the same as a column number (the second column) of a ranking grid of the next untraversed layout element B7 occupying a grid in the fourth row and whose row number of the ranking grid is less than or equal to 4.

After traversing the layout element B7, the tablet computer 10 may traverse a layout element (the layout element B9) whose row number of a ranking grid is smallest in an untraversed layout element (the layout element B9) whose column number of a ranking grid is the same as a column number (the third column) of a ranking grid of the next untraversed layout element B9 occupying a grid in the fourth row and whose row number of the ranking grid is less than or equal to 4. In this case, traversal of the layout elements in the third desktop interface is completed.

Based on the foregoing process, the layout rankings of the layout elements B1 to B11 are layout element B1→layout element B5→layout element B2→layout element B6→layout element B8→layout element B10→layout element B11→layout element B3→layout element B4→layout element B7→layout element B9.

A tenth layout element traversal manner is traversing layout elements in a row-column sequence of rows then columns by using a lower left corner of a grid as a traversal start point. The tablet computer 10 traverses ranking grids of layout elements in a sequence from an m^{th} row to a first row. In a process of traversing layout elements occupying an i^{th} row, the layout elements are traversed in ascending order of column numbers of ranking grids of the layout elements. If a next untraversed layout element occupying the i^{th} row further occupies a grid in an (i-1)^{th} row (which is equivalent to meeting the row wrap condition), an untraversed layout element in the (i-1)^{th} row is traversed; otherwise, a layout element whose row number of a ranking grid is largest in an untraversed layout element whose column number of a ranking grid is the same as a column number of a ranking grid of the next untraversed layout element and whose row number of the ranking grid is greater than or equal to i is traversed. After the last layout element occupying the i^{th} row is traversed, the untraversed layout element occupying the (i-1)^{th} row is traversed, and the like.

For example, refer to FIG. 14B. For the third desktop interface shown in FIG. 14A, grid sizes of the layout elements B1 to B6 are 1×1, and then the tablet computer 10 may use a grid occupied by each layout element as a ranking grid of each layout element. Grid sizes of the layout elements B7 to B11 are all greater than 1×1, and then a grid in an upper left corner of a grid occupied by each layout element is used as a ranking grid of each layout element. Grid coordinates of ranking grids of the layout elements B1 to B11 are sequentially (1, 1), (1, 2), (1, 3), (1, 4), (2, 1), (2, 2), (2, 3), (3, 1), (3, 3), (5, 1), and (5, 2). In the tenth layout element traversal manner, the layout rankings of the layout elements B1 to B11 are layout element B4→layout element B3→layout element B7→layout element B9→layout element B2→layout element B6→layout element B1→layout element B5→layout element B8→layout element B11→layout element B10.

An eleventh layout element traversal manner is traversing layout elements in a row-column sequence of rows then columns by using an upper right corner of a grid as a traversal start point. The tablet computer 10 traverses ranking grids of layout elements in a sequence from a first row to an m^{th} row. In a process of traversing layout elements occupying an i^{th} row, the layout elements are traversed in descending order of column numbers of ranking grids of the layout elements. If a next untraversed layout element occupying the i^{th} row further occupies a grid in an (i+1)^{th} row (which is equivalent to meeting the row wrap condition), an untraversed layout element in the (i+1)^{th} row is traversed; otherwise, a layout element whose row number of a ranking grid is smallest in an untraversed layout element whose column number of a ranking grid is the same as a column number of a ranking grid of the next untraversed layout element and whose row number of the ranking grid is less than or equal to i is traversed. After the last layout element occupying the i^{th} row is traversed, the untraversed layout element occupying the (i+1)^{th} row is traversed, and the like.

For example, refer to FIG. 14C. For the third desktop interface shown in FIG. 14A, grid sizes of the layout elements B1 to B6 are 1×1, and then the tablet computer 10 may use a grid occupied by each layout element as a ranking grid of each layout element. Grid sizes of the layout elements B7 to B11 are all greater than 1×1, and then a grid in a lower right corner of a grid occupied by each layout element is used as a ranking grid of each layout element. Grid coordinates of ranking grids of the layout elements B1 to B11 are sequentially (1, 1), (1, 2), (1, 3), (1, 4), (2, 1), (2, 2), (2, 4), (4, 2), (6, 4), (6, 1), and (6, 2). In the eleventh layout element traversal manner, the layout rankings of the layout elements B1 to B11 are layout element B10→layout element B11→layout element B8→layout element B5→layout element B1→layout element B6→layout element B2→layout element B9→layout element B7→layout element B3→layout element B4.

A twelfth layout element traversal manner is traversing in a row-column sequence of rows then columns by using a lower right corner of a grid as a traversal start point. The tablet computer 10 traverses ranking grids of layout elements in a sequence from an m^{th} row to a first row. In a process of traversing layout elements occupying an i^{th} row, the layout elements are traversed in descending order of column numbers of ranking grids of the layout elements. If a next untraversed layout element occupying the i^{th} row further occupies a grid in an (i-1)^{th} row (which is equivalent to meeting the row wrap condition), an untraversed layout element in the (i-1)^{th} row is traversed; otherwise, a layout element whose row number of a ranking grid is largest in an untraversed layout element whose column number of a ranking grid is the same as a column number of a ranking grid of the next untraversed layout element and whose row number of the ranking grid is greater than or equal to i is traversed. After the last layout element occupying the i^{th} row is traversed, the untraversed layout element occupying the (i-1)^{th} row is traversed, and the like.

For example, refer to FIG. 14D. For the third desktop interface shown in FIG. 14A, grid sizes of the layout elements B1 to B6 are 1×1, and then the tablet computer 10 may use a grid occupied by each layout element as a ranking grid of each layout element. Grid sizes of the layout elements B7 to B11 are all greater than 1×1, and then a grid in an upper right corner of a grid occupied by each layout element is used as a ranking grid of each layout element. Grid coordinates of ranking grids of the layout elements B1 to B11 are sequentially (1, 1), (1, 2), (1, 3), (1, 4), (2, 1), (2, 2), (2, 3), (4, 1), (6, 3), (6, 1), and (6, 2). In the twelfth layout element traversal manner, the layout rankings of the layout elements B1 to B11 are layout element B9→layout element B7→layout element B4→layout element B3→layout element B11→layout element B10→layout element B8→layout element B6→layout element B2→layout element B5→layout element B1.

A thirteenth layout element traversal manner is traversing in a row-column sequence of columns then rows by using an upper left corner of a grid as a traversal start point. The tablet computer 10 traverses ranking grids of layout elements in a sequence from a first column to an n^{th} column. In a process of traversing layout elements occupying an i^{th} column, the layout elements are traversed in ascending order of row numbers of ranking grids of the layout elements. If a next untraversed layout element occupying the i^{th} column further occupies a grid in an (i+1)^{th} column (which is equivalent to meeting the column wrap condition), an untraversed layout element in the (i+1)^{th} column is traversed; otherwise, a layout element whose column number of a ranking grid is smallest in an untraversed layout element whose row number of a ranking grid is the same as a row number of a ranking grid of the next untraversed layout element and whose column number of the ranking grid is less than or equal to i is traversed. After the last layout element occupying the i^{th} column is traversed, the untraversed layout element occupying the (i+1)^{th} column is traversed, and the like.

For example, for the third desktop interface shown in FIG. 14A, grid sizes of the layout elements B1 to B6 are 1×1, and then the tablet computer 10 may use a grid occupied by each layout element as a ranking grid of each layout element. Grid sizes of the layout elements B7 to B11 are all greater than 1×1, and then a grid in an upper right corner of a grid occupied by each layout element is used as a ranking grid of each layout element. Refer to FIG. 14D. Grid coordinates of ranking grids of the layout elements B1 to B11 are sequentially (1, 1), (1, 2), (1, 3), (1, 4), (2, 1), (2, 2), (2, 3), (4, 1), (6, 3), (6, 1), and (6, 2). In the thirteenth layout element traversal manner, the layout rankings of the layout elements B1 to B11 are layout element B1→layout element B2→layout element B3→layout element B4→layout element B5→layout element B6→layout element B7→layout element B8→layout element B10→layout element B11→layout element B9.

A fourteenth layout element traversal manner is traversing in a row-column sequence of columns then rows by using an upper right corner of a grid as a traversal start point. The tablet computer 10 traverses ranking grids of layout elements in a sequence from an n^{th} column to a first column. In a process of traversing layout elements occupying an i^{th} column, the layout elements are traversed in ascending order of row numbers of ranking grids of the layout elements. If a next untraversed layout element occupying the i^{th} column further occupies a grid in an (i-1)^{th} column (which is equivalent to meeting the column wrap condition), an untraversed layout element in the (i-1)^{th} column is traversed; otherwise, a layout element whose column number of a ranking grid is largest in an untraversed layout element whose row number of a ranking grid is the same as a row number of a ranking grid of the next untraversed layout element and whose column number of the ranking grid is greater than or equal to i is traversed. After the last layout element occupying the i^{th} column is traversed, the untraversed layout element occupying the (i-1)^{th} column is traversed, and the like.

For example, for the third desktop interface shown in FIG. 14A, grid sizes of the layout elements B1 to B6 are 1×1, and then the tablet computer 10 may use a grid occupied by each layout element as a ranking grid of each layout element. Grid sizes of the layout elements B7 to B11 are all greater than 1×1, and then a grid in an upper left corner of a grid occupied by each layout element is used as a ranking grid of each layout element. Refer to FIG. 14B. Grid coordinates of ranking grids of the layout elements B1 to B11 are sequentially (1, 1), (1, 2), (1, 3), (1, 4), (2, 1), (2, 2), (2, 3), (4, 1), (6, 3), (6, 1), and (6, 2). In the fourteenth layout element traversal manner, the layout rankings of the layout elements B1 to B11 are layout element B10→layout element B11→layout element B8→layout element B9→layout element B5→layout element B6→layout element B7→layout element B1→layout element B2→layout element B3→layout element B4.

A fifteenth layout element traversal manner is traversing in a row-column sequence of columns then rows by using a lower left corner of a grid as a traversal start point. The tablet computer 10 traverses ranking grids of layout elements in a sequence from a first column to an n^{th} column. In a process of traversing layout elements occupying an i^{th} column, the layout elements are traversed in descending order of row numbers of ranking grids of the layout elements. If a next untraversed layout element occupying the i^{th} column further occupies a grid in an (i+1)^{th} column (which is equivalent to meeting the column wrap condition), an untraversed layout element in the (i+1)^{th} column is traversed; otherwise, a layout element whose column number of a ranking grid is smallest in an untraversed layout element whose row number of a ranking grid is the same as a row number of a ranking grid of the next untraversed layout element and whose column number of the ranking grid is less than or equal to i is traversed. After the last layout element occupying the i^{th} column is traversed, the untraversed layout element occupying the (i+1)^{th} column is traversed, and the like.

For example, for the third desktop interface shown in FIG. 14A, grid sizes of the layout elements B1 to B6 are 1×1, and then the tablet computer 10 may use a grid occupied by each layout element as a ranking grid of each layout element. Grid sizes of the layout elements B7 to B11 are all greater than 1×1, and then a grid in a lower right corner of a grid occupied by each layout element is used as a ranking grid of each layout element. Refer to FIG. 14C. Grid coordinates of ranking grids of the layout elements B1 to B11 are sequentially (1, 1), (1, 2), (1, 3), (1, 4), (2, 1), (2, 2), (2, 3), (4, 1), (6, 3), (6, 1), and (6, 2). In the fifteenth layout element traversal manner, the layout rankings of the layout elements B1 to B11 are layout element B4→layout element B3→layout element B2→layout element B1→layout element B7→layout element B6→layout element B5→layout element B9→layout element B8→layout element B11→layout element B10.

A sixteenth layout element traversal manner is traversing in a row-column sequence of columns then rows by using a lower right corner of a grid as a traversal start point. The tablet computer 10 traverses ranking grids of layout elements in a sequence from an n^{th} column to a first column. In a process of traversing layout elements occupying an i^{th} column, the layout elements are traversed in descending order of row numbers of ranking grids of the layout elements. If a next untraversed layout element occupying the i^{th} column further occupies a grid in an (i-1)^{th} column (which is equivalent to meeting the column wrap condition), an untraversed layout element in the (i-1)^{th} column is traversed; otherwise, a layout element whose column number of a ranking grid is largest in an untraversed layout element whose row number of a ranking grid is the same as a row number of a ranking grid of the next untraversed layout element and whose column number of the ranking grid is greater than or equal to i is traversed. After the last layout element occupying the i^{th} column is traversed, the untraversed layout element occupying the (i-1)^{th} column is traversed, and the like.

For example, for the third desktop interface shown in FIG. 14A, grid sizes of the layout elements B1 to B6 are 1×1, and then the tablet computer 10 may use a grid occupied by each layout element as a ranking grid of each layout element. Grid sizes of the layout elements B7 to B11 are all greater than 1×1, and then a grid in a lower left corner of a grid occupied by each layout element is used as a ranking grid of each layout element. Refer to FIG. 14A. Grid coordinates of ranking grids of the layout elements B1 to B11 are sequentially (1, 1), (1, 2), (1, 3), (1, 4), (2, 1), (2, 2), (2, 3), (4, 1), (6, 3), (6, 1), and (6, 2). In the sixteenth layout element traversal manner, the layout rankings of the layout elements B1 to B11 are layout element B9→layout element B11→layout element B10→layout element B8→layout element B7→layout element B6→layout element B5→layout element B4→layout element B3→layout element B2→layout element B1.

After the layout ranking corresponding to each layout element is obtained in any one of the ninth layout element traversal manner to the sixteenth layout element traversal manner, the tablet computer 10 may lay out the layout elements in the third desktop interface into the grid of the second desktop interface in the layout ranking of each layout element by using a traversal start point corresponding to each layout element traversal manner as a layout start point. When a layout element is laid out, if there are a plurality of laid-out layout elements that meet a push and shift condition in the layout elements that have been laid out in the grid of the second desktop, the layout element is laid out after a push and shift operation is performed on the plurality of laid-out layout elements; and if there is no layout element that meets the push and shift condition in the layout elements that have been laid out in the grid of the second desktop, the layout element is laid out in a grid area that is first traversed in a corresponding layout element traversal manner and that is in an empty grid area having a same grid size as the layout element in the grid of the second desktop.

For a to-be-laid-out layout element whose grid size is p×q, the push and shift condition may include:
For the ninth layout element traversal manner to the twelfth layout element traversal manner: After a push and shift operation is performed on a plurality of laid-out layout elements laid out in an r×s grid area, the plurality of laid-out layout elements may be laid out together with the to-be-laid-out layout element in p rows of grids in the grid of the second desktop interface, and there is no empty grid in a p×t grid area (t is less than s) in which the plurality of laid-out layout elements are located, where t+p is less than or equal to a quantity m of columns of the grid of the second desktop interface. In addition, the push and shift operation includes: laying out the plurality of laid-out layout elements in the p×t grid area that is first traversed in the corresponding layout element traversal manner.

For the thirteenth layout element traversal manner to the sixteenth layout element traversal manner: After a push and shift operation is performed on a plurality of laid-out layout elements laid out in an r×s grid area, the plurality of laid-out layout elements may be laid out together with the to-be-laid-out layout element in q rows of grids in the grid of the second desktop interface, and there is no empty grid in an u×q grid area (u is less than r) in which the plurality of laid-out layout elements are located, where u+q is less than or equal to a quantity n of columns of the grid of the second desktop interface. In addition, the push and shift operation includes: laying out the plurality of laid-out layout elements in the u×q grid area in the p×t grid area that is first traversed in the corresponding layout element traversal manner.

In some embodiments, corresponding to the ninth layout element traversal manner, the traversal start point is the upper left corner, and the row-column sequence of rows then columns is used. The first traversed grid area may be a grid area whose upper left corner grid has a smallest column number in a grid area whose upper left corner grid has a smallest row number in one or more grid areas. Corresponding to the tenth layout element traversal manner, the traversal start point is the lower left corner, and the row-column sequence of rows then columns is used. The first traversed grid area may be a grid area whose lower left corner grid has a smallest column number in a grid area whose lower left corner grid has a largest row number in one or more grid areas. Corresponding to the eleventh layout element traversal manner, the traversal start point is the upper right corner, and the row-column sequence of rows then columns is used. The first traversed grid area may be a grid area whose upper right corner grid has a largest column number in a grid area whose upper right corner grid has a smallest row number in one or more grid areas. Corresponding to the twelfth layout element traversal manner, the traversal start point is the lower right corner, and the row-column sequence of rows then columns is used. The first traversed grid area may be a grid area whose lower right corner grid has a largest column number in a grid area whose lower right corner grid has a largest row number in one or more grid areas. Corresponding to the thirteenth layout element traversal manner, the traversal start point is the upper left corner, and the row-column sequence of columns then rows is used. The first traversed grid area may be a grid area whose upper left corner grid has a smallest row number in a grid area whose upper left corner grid has a smallest column number in one or more grid areas. Corresponding to the fourteenth layout element traversal manner, the traversal start point is the upper right corner, and the row-column sequence of columns then rows is used. The first traversed grid area may be a grid area whose upper right corner grid has a smallest row number in a grid area whose upper right corner grid has a largest column number in one or more grid areas. Corresponding to the fifteenth layout element traversal manner, the traversal start point is the lower left corner, and the row-column sequence of columns then rows is used. The first traversed grid area may be a grid area whose lower left corner grid has a largest row number in a grid area whose lower left corner grid has a smallest column number in one or more grid areas. Corresponding to the sixteenth layout element traversal manner, the traversal start point is the lower right corner, and the row-column sequence of columns then rows is used. The first traversed grid area may be a grid area whose lower right corner grid has a largest row number in a grid area whose lower right corner grid has a largest column number in one or more grid areas.

The following describes a solution in which the tablet computer 10 determines a layout ranking of each layout element in the third desktop interface in the ninth layout element traversal manner, and lays out each display element in the grid of the second desktop interface in the layout ranking of each layout element.

For example, because a traversal start point is an upper left corner of a grid and a row-column sequence of rows then columns is used for traversing in the ninth layout element traversal manner, the tablet computer 10 may establish an XOY coordinate system by using the traversal start point (the upper left corner of the grid) in the ninth layout element traversal manner as an origin, a row direction (a row is first) as an X axis (because a quantity of columns in the ninth layout element traversal manner is in ascending order, a positive direction of the X axis is from a left side of a display interface to a right side of the display interface), and a column direction (a column is traversed later) as a Y axis (because a quantity of rows in the ninth layout element traversal manner is in ascending order, a positive direction of the Y axis is from an upper part of the display interface to a lower part of the display interface). Coordinates of a ranking grid of a layout element in the XOY coordinate system are used as coordinate system coordinates of the layout element.

For example, refer to FIG. 15A. Corresponding to the third desktop interface shown in FIG. 14A, the layout elements include the layout elements B1 to B11. Grid sizes of the layout elements B1 to B6 are 1×1, and then the tablet computer 10 may use grid coordinates of a grid occupied by each layout element as coordinates of each layout element in the XOY coordinate system. Grid sizes of the layout elements B7 to B11 are all greater than 1×1, and then a grid with a maximum Y coordinate in a grid with a minimum X coordinate in a grid occupied by each layout element are used as coordinates of each layout element in the XOY coordinate system (namely, coordinates of a lower left corner grid in the grid occupied by each layout element in the XOY coordinate system). Based on this, coordinate system coordinates of the layout elements B1 to B11 are respectively (1, 1), (1, 2), (1, 3), (1, 4), (2, 1), (2, 2), (2, 4), (3, 2), (3, 4), (5, 1), and (5, 2).

After determining the coordinate system coordinates of each layout element, the tablet computer 10 may traverse each layout element in a sequence of X coordinates then Y coordinates by using the coordinate system coordinates (1, 1) as a start point. In a process of traversing layout elements occupying an i^{th} row, the layout elements are traversed in ascending order of X coordinates of the layout elements. If a Y coordinate of a next untraversed layout element occupying the i^{th} row is greater than i, an untraversed layout element in an (i+1)^{th} row is traversed; otherwise, a layout element with a minimum Y coordinate in an untraversed layout element whose X coordinate is the same as an X coordinate of the next untraversed layout element and whose Y coordinate is less than or equal to i is traversed. After the last layout element occupying the i^{th} row is traversed, the untraversed layout element occupying the (i+1)^{th} row is traversed, and the like.

### Details are as follows:

The tablet computer 10 may first traverse layout elements occupying a first row. Because the Y coordinate (1) of the layout element B1 occupying a first column in a first row is equal to 1, the layout element B1 is traversed.

After the layout element B1 is traversed, because a Y coordinate (1) of a next untraversed layout element that occupies a grid in the first row is equal to 1, the tablet computer 10 traverses a layout element (the layout element B5) with a minimum Y coordinate in an untraversed layout element (the layout element B5) whose X coordinate is the same as the X coordinate (2) of the layout element B5 and whose Y coordinate is less than or equal to 1.

After the layout element B5 is traversed, because the Y coordinate (2) of the next untraversed layout element B8 that occupies a grid in the first row is greater than 1, the tablet computer 10 turns to traverse a layout element that occupies a grid in a second row. Because the Y coordinate (2) of the next untraversed layout element B2 that occupies a grid in the second row is equal to 2, the tablet computer 10 traverses a layout element (the layout element B2) with a minimum Y coordinate in an untraversed layout element (the layout element B2) whose X coordinate is the same as the X coordinate (1) of the layout element B2 and whose Y coordinate is less than or equal to 2.

After the layout element B2 is traversed, because the Y coordinate (2) of the next untraversed layout element B6 that occupies a grid in the second row is equal to 2, the tablet computer 10 traverses a layout element (the layout element B6) with a minimum Y coordinate in an untraversed layout element (the layout element B6) whose X coordinate is the same as the X coordinate (2) of the layout element B6 and whose Y coordinate is less than or equal to 2.

After the layout element B6 is traversed, because the Y coordinate (2) of the next untraversed layout element B8 that occupies a grid in the second row is equal to 2, the tablet computer 10 traverses a layout element (the layout element B8) with a minimum Y coordinate in an untraversed layout element (the layout element B8) whose X coordinate is the same as the X coordinate (3) of the layout element B8 and whose Y coordinate is less than or equal to 2.

After the layout element B8 is traversed, because the Y coordinate (2) of the next untraversed layout element B11 that occupies a grid in the second row is equal to 2, the tablet computer 10 traverses a layout element (the layout element B10) with a minimum Y coordinate in untraversed layout elements (the layout element B10 and the layout element B11) whose X coordinates are the same as the X coordinate (5) of the layout element B11 and whose Y coordinates are less than or equal to 2.

After the layout element B10 is traversed, because traversal of the layout elements that occupy the first row is completed, traversal of an untraversed layout element that occupies the second row is performed. Because the Y coordinate (2) of the next untraversed layout element B11 that occupies a grid in the second row is equal to 2, the tablet computer 10 traverses a layout element (the layout element B11) with a minimum Y coordinate in an untraversed layout element (the layout element B11) whose X coordinate is the same as the X coordinate (5) of the layout element B11 and whose Y coordinate is less than or equal to 2.

After the layout element B11 is traversed, because traversal of the layout elements that occupy the second row is completed, traversal of an untraversed layout element that occupies the third row is performed. Because the Y coordinate (3) of the next untraversed layout element B3 that occupies a grid in the third row is equal to 3, the tablet computer 10 traverses a layout element (the layout element B3) with a minimum Y coordinate in an untraversed layout element (the layout element B3) whose X coordinate is the same as the X coordinate (1) of the layout element B3 and whose Y coordinate is less than or equal to 3.

After the layout element B3 is traversed, because the Y coordinate (4) of the next untraversed layout element B7 that occupies a grid in the third row is greater than 3, the tablet computer 10 turns to traverse an untraversed layout element in the fourth row. Because the fourth row is the last row, there is no layout element whose Y coordinate is greater than 4, the tablet computer 10 traverses a layout element (the layout element B4) with a minimum Y coordinate in an untraversed layout element (the layout element B4) whose X coordinate is the same as the X coordinate (1) of the layout element B4 and whose Y coordinate is less than or equal to 4.

After the layout element B4 is traversed, the tablet computer 10 traverses a layout element (the layout element B7) with a minimum Y coordinate in an untraversed layout element (the layout element B7) whose X coordinate is the same as the X coordinate (2) of the next untraversed layout element B7 in the fourth row and whose Y coordinate is less than or equal to 4.

After the layout element B7 is traversed, the tablet computer 10 traverses a layout element (the layout element B9) with a minimum Y coordinate in an untraversed layout element (the layout element B9) whose X coordinate is the same as the X coordinate (3) of the next untraversed layout element B9 in the fourth row and whose Y coordinate is less than or equal to 4. In this case, traversal of the layout elements in the third desktop interface is completed.

Based on the foregoing process, layout rankings of the layout elements B1 to B11 are layout element B1→layout element B5→layout element B2→layout element B6→layout element B8→layout element B10→layout element B11→layout element B3→layout element B4→layout element B7→layout element B9, that is, the layout rankings of the layout elements B1 to B11 are respectively 1, 3, 8, 9, 2, 4, 10, 5, 11, 6, and 7.

Then, the tablet computer 10 may sequentially lay out the layout elements B1 to B11 into the second desktop interface whose grid division manner is a 6×4 grid in the layout rankings of the layout elements B1 to B11. In a layout process, an XOY coordinate system may be established in a manner the same as that of the third desktop interface. When a layout element is laid out, if there are a plurality of laid-out layout elements that meet a push and shift condition in layout elements that have been laid out in the 6×4 grid, the layout element is laid out after a push and shift operation is performed on the plurality of laid-out layout elements; and if there is no layout element that meets the push and shift condition in the layout elements that have been laid out in the 6×4 grid, the layout element is laid out in an empty grid area with a minimum X coordinate in an empty grid area with a minimum Y coordinate in a grid corresponding to a traversal start point (for example, a grid in the upper left corner of an empty grid area corresponding to the first layout element traversal manner in which the traversal start point is the upper left corner) in an empty grid area having a same grid size as the layout element in the 6×4 grid.

Refer to FIG. 15B. The tablet computer 10 may sequentially lay out the layout element B1 (whose layout ranking is 1), the layout element B5 (whose layout ranking is 2), the layout element B2 (whose layout ranking is 3), and the layout element B6 (whose layout ranking is 4) into a grid in the first column in the first row to a grid in the fourth column in the first row. When the layout element B8 (whose layout ranking is 5) is laid out, the tablet computer 10 may detect that the layout element B1, the layout element B5, the layout element B2, and the layout element B6 meet the push and shift condition (after the layout element B1, the layout element B5, the layout element B2, and the layout element B6 are laid out in a 2×2 grid area, the layout element B1, the layout element B5, the layout element B2, the layout element B6, and the layout element B8 may be simultaneously laid out in two rows of grids). Then, the tablet computer 10 may perform a push and shift operation on the layout element B1, the layout element B5, the layout element B2, and the layout element B6, lay out the layout element B1, the layout element B5, the layout element B10, and the layout element B2 in a 2×2 grid area corresponding to four grids in the first column in the first row, the second column in the first row, the first column in the second row, and the second column in the second row, and then lay out the layout element B6 in a 2×2 grid area corresponding to four grids in the third column in the first row, the fourth column in the first row, the third column in the second row, and the fourth column in the second row.

Then, the tablet computer 10 may sequentially lay out the layout element B10 (whose layout ranking is 6) in a 1×2 grid area in which grid coordinates of an upper left corner grid are (1, 3), lay out the layout element B11 (whose layout ranking is 7) in a 1×2 grid area in which grid coordinates of an upper left corner grid are (3, 3), lay out the layout element B3 (whose layout ranking is 8) in a grid with grid coordinates of (1, 4), and lay out the layout element B4 (whose layout ranking is 9) in a grid in which grid coordinates of an upper left corner grid are (2, 4). When the layout element B7 (whose layout ranking is 10) is laid out, the tablet computer 10 may detect that the layout element B10, the layout element B11, the layout element B3, and the layout element B4 meet the push and shift condition (after the layout element B10, the layout element B11, the layout element B3, and the layout element B4 are laid out in a 2×3 grid area, the layout element B10, the layout element B11, the layout element B3, the layout element B4, and the layout element B7 may be simultaneously laid out in two rows of grids). Then, the tablet computer 10 may perform a push and shift operation on the layout element B10, the layout element B11, the layout element B3, and the layout element B4, remain a location of the layout element B10 unchanged, lay out the layout element B11 in a 1×2 grid area in which grid coordinates of an upper left corner grid are (1, 4), and separately lay out the layout element B3 and the layout element B4 in grids in the third column in the third row and in the third column in the fourth row. Then, the tablet computer 10 may lay out the layout element B7 in a 2×1 grid area with grid coordinates of (4, 3) in the upper left corner grid.

Finally, the tablet computer 10 may sequentially lay out the layout element B9 in a 2×4 grid area with grid coordinates of (1, 5) in the upper left corner grid, and display the second desktop interface after the layout is completed.

It can be seen from FIG. 15B that relative locations of the layout element B1, the layout element B5, the layout element B2, the layout element B6, and the layout element B8 in the third desktop interface and the second desktop interface are the same, relative locations of the layout element B10 and the layout element B11 in the third desktop interface and the second desktop interface are the same, and relative locations of the layout element B3, the layout element B4, and the layout element B7 in the third desktop interface and the second desktop interface are the same. The second desktop interface retains a layout of at least a part of layout elements in the third desktop interface, to help the user quickly find a layout element that needs to be operated.

### Third layout manner:

In some scenarios, for example, in a scenario in which display elements in the third desktop interface are complex, all the display elements in the third desktop interface cannot be displayed in the second desktop interface in the foregoing first layout manner and/or the foregoing second layout manner, and then the tablet computer 10 may further lay out all the display elements in the third desktop interface into the second desktop interface in the third layout manner.

Specifically, the tablet computer 10 lays out the display elements in the grid of the second desktop interface based on the grid sizes of the display elements in the third desktop interface by using a corner (an upper left corner, a lower left corner, an upper right corner, or a lower right corner) of the grid of the second desktop interface as a layout start point in descending order of the grid sizes. When each display element is laid out, the display element is always laid out in a grid area that is first traversed in a row-column sequence (rows then columns or columns then rows) by using the layout start point as a traversal start point and that is in an empty grid area having a same grid size as the display element in the grid the second desktop interface.

It should be understood that, for display elements with a same grid size, when the third layout manner is used to lay out the display elements, layout rankings of the display elements with a same grid size may be exchanged with each other.

The following describes the third layout manner by using an example in which a layout start point is a grid in an upper left corner of the grid of the second desktop interface.

For example, refer to FIG. 16. The third desktop interface whose grid division manner is a 6×10 grid includes a display element C1 to a display element C16. The display element C1 to the display element C16 are ranked in a descending order of grid sizes as follows: a display element C10, a display element C14, a display element C15, a display element C5, a display element C11, a display element C13, the display element C1, a display element C2, a display element C8, a display element C9, a display element C12, the display element C16, a display element C3, a display element C4, a display element C5, and a display element C6. The tablet computer 10 may: lay out the display element C10 in a 4×4 grid area with grid coordinates of (1, 1) in an upper left corner grid of the second desktop interface whose grid division manner is a 10×6 grid; respectively lay out the display element C14 and the display element C15 in 2×4 grid areas with grid coordinates of (1, 5) and (1, 7) in the upper left corner grid of the 10×6 grid; respectively lay out the display element C5, the display element C11, and the display element C13 in 2×2 grid areas with grid coordinates of (5, 1), (5, 3), and (5, 5) in the upper left corner grid of the 10×6 grid; respectively lay out the display element C1, the display element C2, the display element C8, the display element C9, the display element C12, and the display element C16 in 1×2 grid areas with grid coordinates of (5, 7), (5, 8), (1, 9), (3, 9), (5, 9), and (1, 10) in the upper left corner grid of the 10×6 grid; and respectively lay out the display element C3, the display element C4, the display element C5, and the display element C6 in grids with grid coordinates of (3, 10), (4, 10), (5, 10), and (6, 10) in the upper left corner grid of the 10×6 grid.

In some embodiments, for the case shown in FIG. 16, layout rankings of display elements with a same grid size may be exchanged with each other. For example, locations of the display element C14 and the display element C15 may be exchanged with each other, locations of the display element C5, the display element C11, and the display element C13 may be exchanged with each other, locations of the display element C1, the display element C2, the display element C8, the display element C9, the display element C12, and the display element C16 may be exchanged with each other, and locations of the display element C3, the display element C4, the display element C5, and the display element C6 may be exchanged with each other.

Based on the first layout manner, the second layout manner, and the third layout manner, a layout manner preset in the tablet computer 10 may include any one or more manners in the first layout manner, one or more manners in the second layout manner, and one or more manners in the third layout manner. When detecting that the display direction of the tablet computer 10 changes, the tablet computer 10 may first lay out the display elements in the third desktop interface in the second layout manner. If the display elements in the third desktop interface cannot be laid out into the second desktop interface in the second layout manner, the tablet computer 10 may lay out the display elements in the third desktop interface in the first layout manner. If the display elements in the third desktop interface cannot be laid out into the second desktop interface in the first layout manner, the tablet computer 10 may lay out the display elements in the third desktop interface into the second desktop interface in the third layout manner.

In some embodiments, the layout manner preset in the tablet computer 10 may include any one or more manners in the foregoing first layout manner and one or more manners in the foregoing third layout manner. When detecting that the display direction of the tablet computer 10 changes, the tablet computer 10 may first lay out the display elements in the third desktop interface in the first layout manner. If the display elements in the third desktop interface cannot be laid out into the second desktop interface in the first layout manner, the tablet computer 10 may lay out the display elements in the third desktop interface into the second desktop interface in the third layout manner.

In some embodiments, the layout manner preset in the tablet computer 10 may include any one or more manners in the foregoing second layout manner and one or more manners in the foregoing third layout manner. When detecting that the display direction of the tablet computer 10 changes, the tablet computer 10 may first lay out the display elements in the third desktop interface in the second layout manner. If the display elements in the third desktop interface cannot be laid out into the second desktop interface in the second layout manner, the tablet computer 10 may lay out the display elements in the third desktop interface into the second desktop interface in the third layout manner.

In some embodiments, the layout manner preset in the tablet computer 10 may include one or more of the foregoing first layout manner, second layout manner, and third layout manner. When detecting that the display direction of the tablet computer 10 changes, the tablet computer 10 may select different layout manners based on complexity of display elements in a currently displayed third desktop interface, to lay out the display elements in the third desktop interface into the second desktop interface. For example, when complexity of display elements in the second desktop interface is low, the first layout manner or the second layout manner is used to lay out the display elements in the second desktop interface into the third desktop interface; or when complexity of display elements in the second desktop interface is high, the third layout manner is used to lay out the display elements in the third desktop interface into the second desktop interface.

In some embodiments, the complexity of the display elements may be determined based on types of grid sizes of the display elements, a quantity of large-size display elements, and the like in the second desktop interface. A larger quantity of the types of the grid sizes of the display elements indicates higher complexity, and a larger quantity of large-size display elements indicates higher complexity.

Based on the foregoing first layout manner, second layout manner, and third layout manner, in some embodiments, the layout manner preset in the tablet computer 10 may include one or more of the foregoing first layout manner, second layout manner, and third layout manner. After detecting the desktop modification operation of the user, the tablet computer 10 pre-lays out, in the preset layout manner, the target display element after the user modification operation is performed. If the target display element can be laid out into the second desktop interface in any preset layout manner, it is determined that the target display element can be laid out into the second desktop interface, and the desktop modification operation of the user is performed; otherwise, the desktop modification operation of the user is not performed.

For example, one or more manners in the first layout manner and one or more manners in the third layout manner, or one or more manners in the second layout manner and one or more manners in the third layout manner, or one or more manners in the first layout manner, one or more manners in the second layout manner, and one or more manners in the third layout manner can be preset in the tablet computer 10. After detecting the desktop modification operation of the user, the tablet computer 10 may pre-lay out, in the third layout manner, the target display element after the user modification operation is performed. If the target display element can be laid out into the second desktop interface in any manner in the third layout manner, it is determined that the target display element can be laid out into the second desktop interface, and the desktop modification operation of the user is performed; otherwise, the desktop modification operation of the user is not performed.

For another example, one or more manners in the first layout manner and one or more manners in the third layout manner, or one or more manners in the second layout manner and one or more manners in the third layout manner, or one or more manners in the first layout manner, one or more manners in the second layout manner, and one or more manners in the third layout manner can be preset in the tablet computer 10. After detecting the desktop modification operation of the user, the tablet computer 10 may pre-lay out, in all preset layout manners, the target display element after the user modification operation is performed. If the target display element can be laid out into the second desktop interface in any preset layout manner, it is determined that the target display element can be laid out into the second desktop interface, and the desktop modification operation of the user is performed; otherwise, the desktop modification operation of the user is not performed.

Based on the foregoing embodiments, embodiments of this application provide a display method.

For example, FIG. 17 is a schematic flowchart of a display method according to some embodiments of this application. The method is performed by the tablet computer 10. As shown in FIG. 17, the method includes the following steps.

S1701: Display a first desktop interface, where a display direction of the first desktop interface is a first direction.

In some embodiments, the first direction may be any display direction in FIG. 2.

In some embodiments, the first desktop interface may include one or more display elements.

S1702: Detect a first desktop modification operation of a user, and predict whether a target display element can be completely displayed, after the first desktop modification operation is performed, in a second desktop interface displayed in a second direction.

In some embodiments, the first desktop modification operation is used to reduce layout space (for example, an empty grid in a grid of the first desktop interface) used to lay out a display element in the first desktop interface. For example, the first desktop modification operation may be an operation of adding a first display element of a first size to the first desktop interface, for example, an operation of adding the service widget U33 or the service widget U35 to the desktop interface P3 shown in FIG. 4A-1 to FIG. 4A-3. The first desktop modification operation may alternatively be used to increase a size of a second display element in the first desktop interface by a first size, for example, an operation of increasing a grid size of the contacts widget U14 shown in FIG. 4C-1 to FIG. 4C-3. In addition, a size of an empty area in the first desktop interface is greater than or equal to the first size, and the second direction is perpendicular to the first direction.

When detecting the first desktop modification operation of adding the first display element to the first desktop interface or increasing the size of the second display element by the user, the tablet computer 10 may predict, after the first desktop modification operation is performed, whether the target display element can be completely displayed in the second desktop interface displayed in the second direction. If it is predicted that after the first desktop modification operation is performed, the target display element can be completely displayed in the second desktop interface displayed in the second direction, step S1703 is performed; otherwise, step S1704 is performed.

In some embodiments, when the first desktop modification operation is adding the first display element of the first size to the first desktop interface, the target display element includes all display elements in the first desktop interface and the first display element; or when the first desktop modification operation is increasing the size of the second display element of the first desktop interface by the first size, the target display element includes a display element other than the second display element in the first desktop interface and the second display element whose size is increased.

In some embodiments, the tablet computer 10 may predict, by determining whether the first desktop modification operation meets a modification condition, whether the target display element can be completely displayed, after the first desktop modification operation is performed, in the second desktop interface displayed in the second direction. For example, the modification condition may include any condition in the first condition, or the target display element may be pre-laid out into the second desktop interface in any preset layout manner.

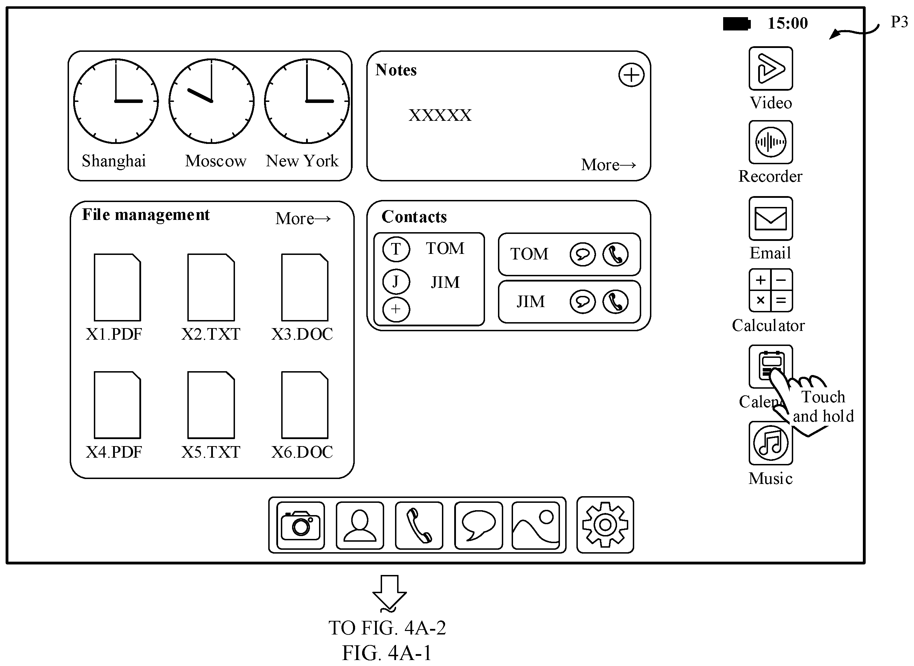

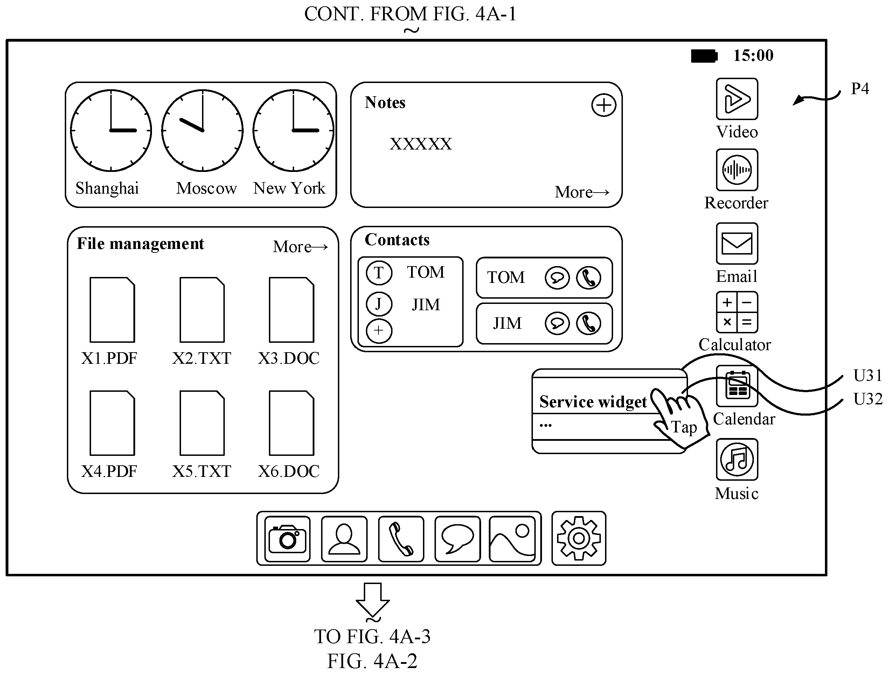

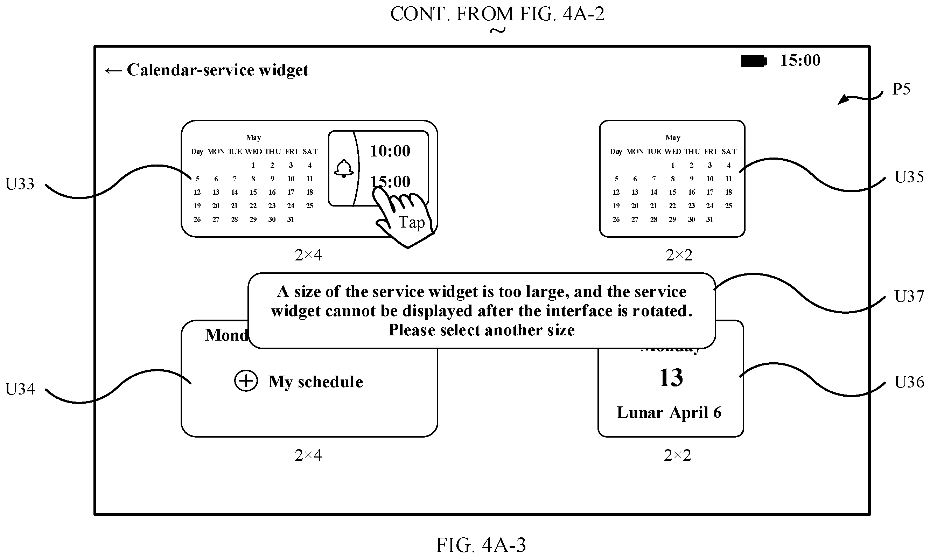

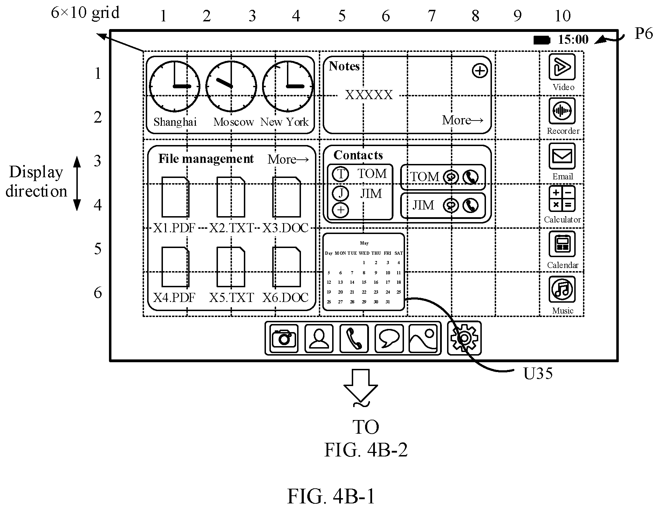

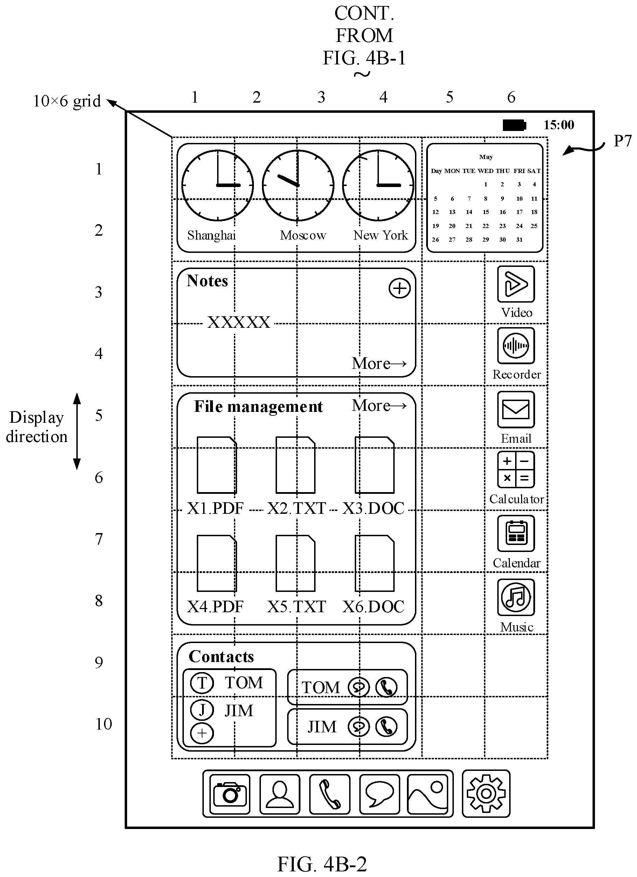

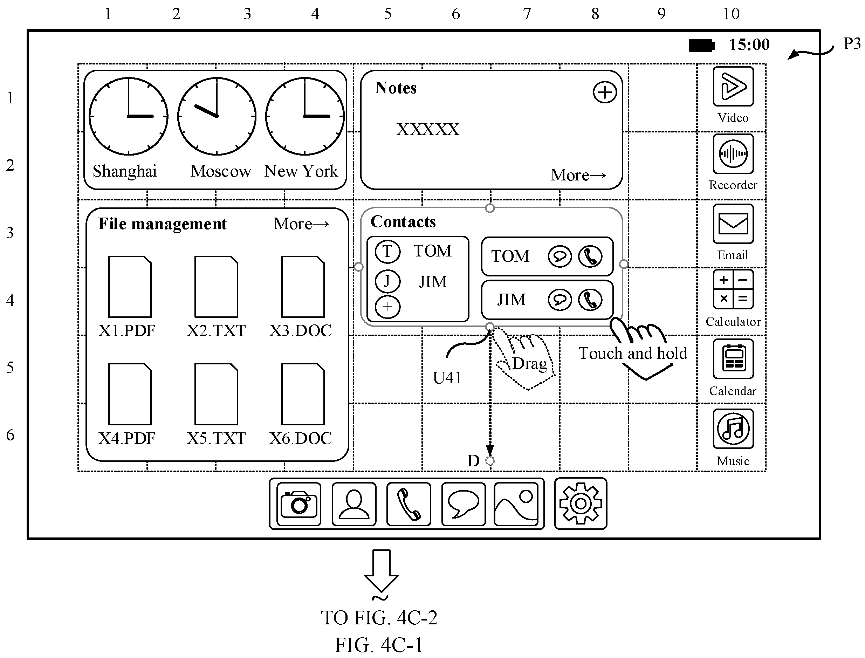

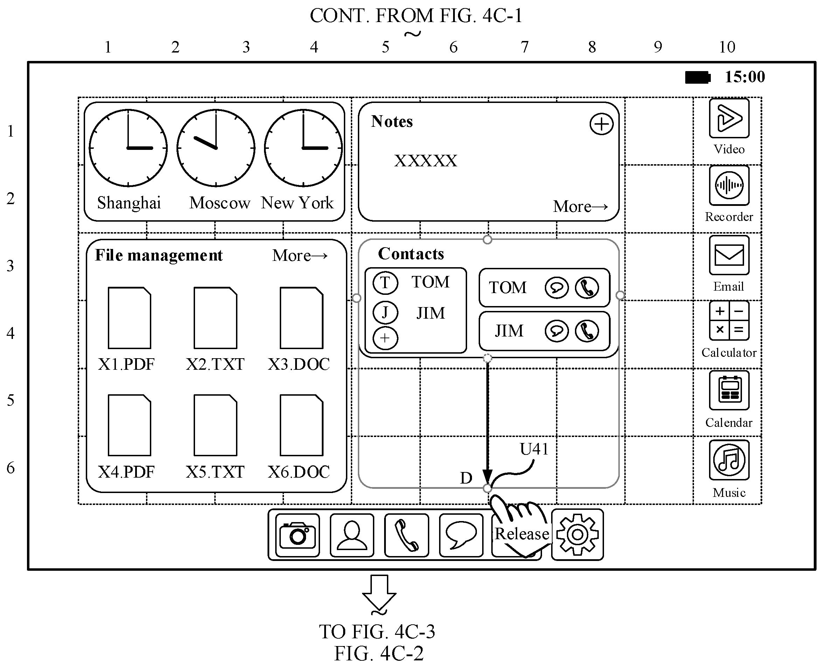

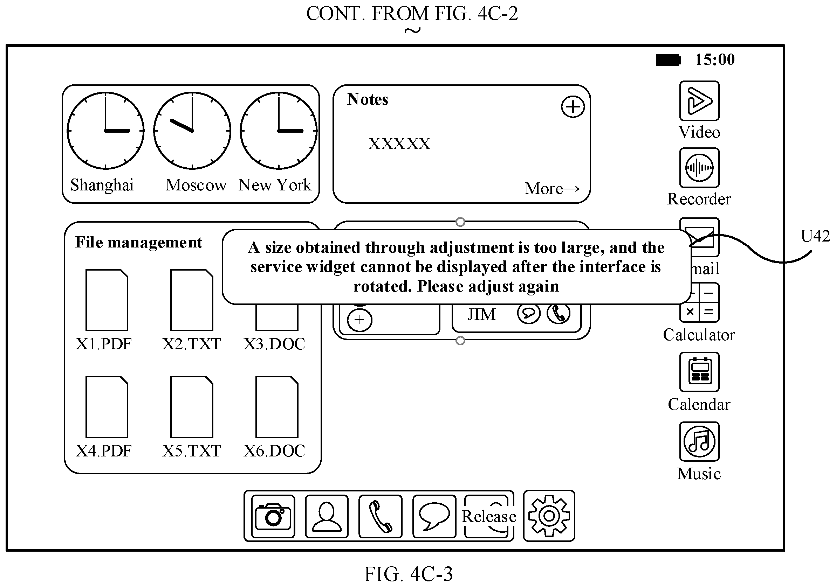

In some embodiments, the first size may be a grid size. In some embodiments, a grid division manner of the first desktop interface may be m×n. The tablet computer 10 may predict, in the grid division manner of the first desktop interface and by determining whether a grid size of each target display element meets the foregoing first condition, whether the target display element can be completely displayed, after the first desktop modification operation is performed, in the second desktop interface displayed in the second direction. When it is determined that the grid division manner of the first desktop interface and the grid size of each target display element meet the first condition, it indicates whether the target display element can be completely displayed in the second desktop interface displayed in the second direction, and step S1703 is performed; otherwise, step S1704 is performed. For specific content of the first condition, refer to the embodiments shown in FIG. 4A-1 to FIG. 10C. Details are not described herein again.

In some embodiments, the tablet computer 10 may also pre-lay out the target display element in the grid of the second desktop interface in a preset layout manner. If the tablet computer 10 may pre-lay out the target display element in the second desktop interface in any preset layout manner, it indicates that the target display element can be completely displayed in the second desktop interface displayed in the second direction, and step S1703 is performed; otherwise, step S1704 is performed.

For example, if the preset layout manner includes one or more manners in the first layout manner and one or more manners in the third layout manner, or one or more manners in the second layout manner and one or more manners in the third layout manner, or one or more manners in the first layout manner, one or more manners in the second layout manner, and one or more manners in the third layout manner. The tablet computer 10 may pre-lay out, in the third layout manner, the target display element after the first desktop modification operation is performed. If any manner in the third layout manner may be used to lay out the target display element in the second desktop interface, it is determined that the target display element can be laid out into the second desktop interface, and step S1703 is performed; otherwise, step S1704 is performed.

For another example, if the preset layout manner includes one or more manners in the first layout manner and one or more manners in the third layout manner, or one or more manners in the second layout manner and one or more manners in the third layout manner, or one or more manners in the first layout manner, one or more manners in the second layout manner, and one or more manners in the third layout manner. The tablet computer 10 may pre-lay out, in all preset layout manners, the target display element after the first desktop modification operation is performed. If any manner in the third layout manner may be used to lay out the target display element in the second desktop interface, it is determined that the target display element can be laid out into the second desktop interface, and step S1703 is performed; otherwise, step S1704 is performed.

In some other embodiments, the tablet computer 10 may also predict, in another manner, whether the target display element can be completely displayed in the second desktop interface displayed in the second direction, which is not limited herein.

S1703: When it is predicted that the target display element can be completely displayed in the second desktop interface, perform the first desktop modification operation, and display a third desktop interface after the first desktop modification operation is performed.

When predicting that the target display element can be completely displayed in the second desktop interface, the tablet computer 10 performs the first desktop modification operation, and displays the third desktop interface after the first desktop modification operation is performed.

For example, when the first desktop modification operation is adding the first display element of the first size to the first desktop interface, the tablet computer 10 may add the first display element to the first desktop interface to obtain the third desktop interface.

For another example, when the first desktop modification operation is increasing the size of the second display element in the first desktop interface by the first size, the tablet computer 10 may increase the size of the second display element by the first size, to obtain the third desktop interface.

S1704: When it is predicted that the target display element cannot be completely displayed in the second desktop interface, do not perform the first desktop modification operation, and prompt the user.

When predicting that the target display element cannot be completely displayed in the second desktop interface, the tablet computer 10 does not perform the first desktop modification operation and prompts the user.

Based on the foregoing method, the tablet computer 10 can ensure that the desktop modification operation performed by the user does not cause a display element in a desktop interface to fail to be displayed in one desktop interface when the display direction changes, to help improve user experience.

An embodiment of this application further provides a display method. In comparison with the method shown in FIG. 17, when predicting that the target display element cannot be completely displayed in the second desktop interface after the first desktop modification operation is performed, the tablet computer 10 may choose, based on a user operation, to perform or not to perform the first desktop modification operation. The method is performed by the tablet computer 10. As shown in FIG. 18, the method includes the following steps.

S1801: Display a first desktop interface, where a display direction of the first desktop interface is a first direction.

S1802: Detect a first desktop modification operation of a user, and predict whether a target display element can be completely displayed, after the first desktop modification operation is performed, in a second desktop interface displayed in a second direction.

In some embodiments, the first desktop modification operation may be an operation of adding a first display element of a first size to the first desktop interface, or an operation of increasing a size of a second display element in the first desktop interface by a first size. In addition, a size of an empty area in the first desktop interface is greater than or equal to the first size.

When detecting the first desktop modification operation of adding the first display element to the first desktop interface or increasing the size of the second display element by the user, the tablet computer 10 may predict, after the first desktop modification operation is performed, whether the target display element can be completely displayed in the second desktop interface displayed in the second direction. If it is predicted that after the first desktop modification operation is performed, the target display element can be completely displayed in the second desktop interface displayed in the second direction, step S1803 is performed; otherwise, step S1804 is performed.

For a specific manner in which the tablet computer 10 predicts whether the target display element can be completely displayed, after the first desktop modification operation is performed, in the second desktop interface displayed in the second direction, refer to step S1702. Details are not described herein again.

S1803: When it is predicted that the target display element can be completely displayed in the second desktop interface, perform the first desktop modification operation, and display a third desktop interface after the first desktop modification operation is performed.

When predicting that the target display element can be completely displayed in the second desktop interface, the tablet computer 10 performs the first desktop modification operation, and displays the third desktop interface after the first desktop modification operation is performed. For details, refer to step S1703. Details are not described herein again.

S1804: When it is predicted that the target display element cannot be completely displayed in the second desktop interface, prompt the user that the target display element cannot be completely displayed in the second desktop interface.

When predicting that the target display element cannot be completely displayed in the second desktop interface, the tablet computer 10 prompts the user that the target display element cannot be completely displayed in the second desktop interface.

For example, for the case shown in FIG. 4A-1 to FIG. 4A-3, after detecting an operation of selecting the service widget U33 by the user, the tablet computer 10 may predict that the target display element cannot be displayed in the second desktop interface. Refer to FIG. 19A. Different from the case shown in FIG. 4A-1 to FIG. 4A-3, the tablet computer 10 may display a prompt control U43, to prompt the user that "A size of the service widget is too large, and the service widget cannot be displayed after the interface is rotated". The prompt control U43 may further include a "Continue" option and a "Back" option.

For another example, for the case shown in FIG. 4C-1 to FIG. 4C-3, after detecting the operation of dragging the control U41 to the point D and releasing the control U41 by the user, the tablet computer 10 may predict that the target display element cannot be displayed in the second desktop interface after the grid size of the contacts widget U14 is adjusted to 4×4. Refer to FIG. 19B. Different from the case shown in FIG. 4C-1 to FIG. 4C-3, the tablet computer 10 may display a prompt control U44, to prompt the user that "A size of the service widget is too large, and the service widget cannot be displayed after the interface is rotated". The prompt control U44 may further include a "Continue" option and a "Back" option.

S1805: When detecting an operation of confirming, by the user, to perform the first desktop modification operation, perform the first desktop modification operation, and display a third desktop interface after the first desktop modification operation is performed.

For example, for the case shown in FIG. 19A, after detecting an operation of selecting the "Continue" option by the user in the prompt control U43, the tablet computer 10 may detect the operation of confirming, by the user, to perform the first desktop modification operation, add the service widget U33 to the desktop interface P3, and display a desktop interface P9 (as the third desktop interface) shown in FIG. 19C.

For example, for the case shown in FIG. 19B, after detecting an operation of selecting the "Continue" option by the user in the prompt control U44, the tablet computer 10 may detect the operation of confirming, by the user, to perform the first desktop modification operation, adjust the size of the contacts widget U14 to 4×4 to obtain a contacts widget U14', and display a desktop interface P10 (as the third desktop interface) shown in FIG. 19D that includes the contacts widget U14'.

S1806: When detecting an operation of confirming, by the user, not to perform the first desktop modification operation, do not perform the first desktop modification operation.

For example, for the case shown in FIG. 19A, after detecting an operation of selecting the "Back" option by the user in the prompt control U43, the tablet computer 10 may detect the operation of confirming, by the user, not to perform the first desktop modification operation, and re-display the desktop interface P3.

Based on the foregoing method, when a desktop modification operation of the user causes a display element in a desktop interface to fail to be displayed in one desktop interface when the display direction changes, the user may be prompted, and the desktop modification operation of the user is selected to be performed or not to be performed based on a user operation. In this way, more selection space can be provided for the user, and user experience can be improved.

For example, FIG. 20A is a schematic flowchart of a display method according to some embodiments of this application. The method is performed by the tablet computer 10. As shown in FIG. 20A, the method includes the following steps.

S2001: Display a third desktop interface, where a display direction of the third desktop is a first direction.

In some embodiments, a display element in the third desktop interface may be laid out into a desktop interface displayed in a second direction. For example, the third desktop interface may be a third desktop interface (for example, the desktop interface P6) generated based on the instance shown in FIG. 17, or a third desktop interface generated when the user chooses not to perform the first desktop modification operation in the embodiment shown in FIG. 18. In this case, a grid division manner of the third desktop interface and the display element in the third desktop interface meet the foregoing first condition, or in a preset layout manner, the display element in the third desktop interface may be laid out into the desktop interface displayed in the second direction.

In some embodiments, the display element in the third desktop interface may not be laid out into the desktop interface displayed in the second direction. For example, the third desktop interface may be the third desktop interface (for example, the desktop interface P9 and the desktop interface P10) generated when the user confirms to perform the first desktop modification operation in the instance shown in FIG. 18.

In some embodiments, the first direction may be a length direction, or may be a width direction.

S2002: Detect that a display direction of the tablet computer 10 is switched to the second direction, and lay out the display element in the third desktop interface into a second desktop interface in the preset layout manner, where the second direction is perpendicular to the first direction.

In some embodiments, one or more preset layout manners may be preset in the tablet computer 10, and display elements in the third interface are laid out into the second desktop interface in the one or more preset layout manners.

In some embodiments, if the first direction is the length direction (that is, the tablet computer 10 is displayed in portrait mode), the second direction is the width direction (that is, the tablet computer 10 is displayed in landscape mode); or if the first direction is the width direction (that is, the tablet computer 10 is displayed in landscape mode), the second direction is the length direction (that is, the tablet computer 10 is displayed in portrait mode).

In some embodiments, the tablet computer 10 may obtain a posture of the tablet computer 10, to determine the display direction of the tablet computer 10. For example, when a gravity direction of the tablet computer 10 is along the width direction or an included angle between the gravity direction and the width direction is less than a specific angle, it is determined that the width direction is used as the display direction. For another example, when a gravity direction of the tablet computer 10 is along the length direction or an included angle between the gravity direction and the length direction is less than a specific angle, it is determined that the length direction is used as the display direction.

For example, any one or more manners in the foregoing first layout manner, one or more manners in the foregoing second layout manner, and one or more manners in the foregoing third layout manner may be preset in the tablet computer 10. The tablet computer 10 may first lay out display elements in the third desktop interface in the second layout manner. If the display elements in the third desktop interface cannot be laid out into the second desktop interface in the second layout manner, the tablet computer 10 may lay out the display elements in the third desktop interface in the first layout manner. If the display elements in the third desktop interface cannot be laid out into the second desktop interface in the first layout manner, the tablet computer 10 may lay out the display elements in the third desktop interface into the second desktop interface in the third layout manner. In this way, because the second layout manner can retain more relative location relationships of the display elements in the third desktop interface than the first layout manner, and the first layout manner can retain more relative location relationships of the display elements in the third desktop interface than the third layout manner, it can be ensured that the relative location relationships of the display elements in the third desktop interface can be retained as much as possible in the second desktop interface obtained through re-layout, to help the user quickly find a display element on which a related operation is performed.

In some embodiments, if display elements in the third desktop interface cannot be laid out into the second desktop interface in the third layout manner, the tablet computer 10 may determine a layout ranking of each display element in the second layout manner, lay out a part of the display elements that are laid out earlier into the second desktop interface, and lay out a display element that cannot be laid out in the second desktop interface into another desktop interface. In this way, relative location relationships of the display elements in the third desktop interface can be retained as much as possible, to help the user quickly find a display element on which a related operation is performed.

For example, one or more manners in the foregoing first layout manner and one or more manners in the foregoing third layout manner may be preset in the tablet computer 10. The tablet computer 10 may first lay out the display elements in the third desktop interface in the first layout manner. If the display elements in the third desktop interface cannot be laid out into the second desktop interface in the first layout manner, the tablet computer 10 may lay out the display elements in the third desktop interface into the second desktop interface in the third layout manner. In this way, because the first layout manner can retain more relative location relationships of the display elements in the third desktop interface than the third layout manner, it can be ensured that the relative location relationships of the display elements in the third desktop interface can be retained as much as possible in the second desktop interface obtained through re-layout, to help the user quickly find a display element on which a related operation is performed.

In some embodiments, if the display elements in the third desktop interface cannot be laid out into the second desktop interface in the third layout manner, the tablet computer 10 may determine a layout ranking of each display element in the first layout manner, lay out a part of the display elements that are laid out earlier into the second desktop interface, and lay out a display element that cannot be laid out in the second desktop interface into another desktop interface. In this way, relative location relationships of the display elements in the third desktop interface can be retained as much as possible, to help the user quickly find a display element on which a related operation is performed.

For example, FIG. 20B is a schematic flowchart of laying out a display element in a third desktop interface into a second desktop interface by the tablet computer 10 in a preset layout manner. As shown in FIG. 20B, the process includes the following steps.

S2002a: Determine whether all display elements in a third desktop interface can be laid out into a second desktop interface in a first layout manner.

For example, the tablet computer 10 may pre-lay out the display elements in the third desktop interface in the first layout manner. If all the display elements in the third desktop interface can be pre-laid out into the second desktop interface, it indicates that all the display elements in the third desktop interface can be laid out into the second desktop interface in the first layout manner, and step S2002b is performed; otherwise, it indicates that all the display elements in the third desktop interface cannot be laid out into the second desktop interface in the first layout manner, and step S2002c is performed.

The tablet computer 10 may first pre-lay out the display elements in the third desktop interface in the first layout manner, to determine whether all the display elements in the third desktop interface can be laid out into the second desktop interface in the first layout manner.

S2002b: Lay out all the display elements in the third desktop interface into the second desktop interface in the first layout manner.

When the tablet computer 10 can lay out all the display elements in the third desktop interface in the second desktop interface in the first layout manner, the tablet computer 10 lays out the display elements in the third desktop interface into the second desktop interface in the first layout manner.

Because the first layout manner may retain relative location relationships of some display elements in the third desktop interface, the user can quickly find, in the second desktop interface, a display element on which a related operation needs to be performed, to help improve user experience.

S2002c: Lay out all the display elements in the third desktop interface into the second desktop interface in a third layout manner.

When the tablet computer 10 cannot lay out all the display elements in the third desktop interface into the second desktop interface in the first layout manner, the tablet computer 10 lays out the display elements in the third desktop interface into the second desktop interface in the third layout manner.

If all the display elements in the third desktop interface cannot be laid out into the second desktop interface in the first layout manner, the display elements in the third desktop interface may be laid out into the second desktop interface in the third layout manner, so that it can be ensured that the display elements in the third desktop interface are all displayed in the second desktop interface, and the display elements are not moved to another desktop interface.

Based on the process shown in FIG. 20B, when the display elements in the third desktop interface may be laid out into the second desktop interface in the first layout manner, because the first layout manner may retain relative location relationships of some display elements in the third desktop interface, the user can quickly find, in the second desktop interface, a display element on which a related operation needs to be performed, to help improve user experience.

For another example, FIG. 20C is a schematic flowchart of laying out a display element in a third desktop interface into a second desktop interface by the tablet computer in a preset layout manner. Compared with the embodiment shown in FIG. 20B, this embodiment may adapt to a case in which the display element in the third desktop interface can or cannot be laid out into a second desktop.

As shown in FIG. 20C, the process includes the following steps.

S2002d: Determine whether all display elements in a third desktop interface can be laid out into a second desktop interface in a first layout manner.

For example, the tablet computer 10 may pre-lay out the display elements in the third desktop interface in the first layout manner. If all the display elements in the third desktop interface can be pre-laid out into the second desktop interface, it indicates that all the display elements in the third desktop interface can be laid out into the second desktop interface in the first layout manner, and step S2002e is performed; otherwise, it indicates that all the display elements in the third desktop interface cannot be laid out into the second desktop interface in the first layout manner, and step S2002f is performed.

S2002e: Lay out all the display elements in the third desktop interface into the second desktop interface in the first layout manner.

S2002f: Determine whether all the display elements in the third desktop interface can be laid out into the second desktop interface in a third layout manner.

For example, the tablet computer 10 may pre-lay out the display elements in the third desktop interface in the first layout manner. If all the display elements in the third desktop interface can be pre-laid out into the second desktop interface, it indicates that all the display elements in the third desktop interface can be laid out into the second desktop interface in the first layout manner, and step S2002h is performed; otherwise, it indicates that all the display elements in the third desktop interface cannot be laid out into the second desktop interface in the first layout manner, and step S2002g is performed.

S2002g: Lay out a part of the display elements in the third desktop interface into the second desktop interface in the first layout manner.

The tablet computer 10 may determine layout rankings of the display elements in the third desktop interface in the first layout manner, and then lay out the display elements into the second desktop interface in the layout rankings of the display elements. When there is no empty space that can accommodate a display element in the second desktop interface (for example, an empty grid area is less than a grid size of the display element), the display element and another display element that is laid out after the display element are laid out into another desktop interface.

In some other embodiments, when all the display elements in the third desktop interface cannot be laid out into the second desktop interface in the first layout manner and the third layout manner, a part of the display elements in the third desktop interface may be laid out into the second desktop interface in the third layout manner based on a size sequence of the display elements. When there is no empty space that can accommodate a display element in the second desktop interface (for example, an empty grid area is less than a grid size of the display element), the display element and a display element that is not laid out are laid out into another desktop interface.

2002h: Lay out all the display elements in the third desktop interface into the second desktop interface in the third layout manner.

Based on the method shown in FIG. 20C, when the tablet computer 10 cannot lay out all the display elements in the third desktop interface into the second desktop interface in the first layout manner and the third layout manner, the tablet computer 10 may lay out a part of display elements in the third desktop interface into the second desktop interface in the first layout manner. In this way, a relative location relationship of the part of display elements laid out in the second desktop interface can be retained, to help the user quickly find a display element on which a related operation needs to be performed.

For example, one or more manners in the foregoing second layout manner and one or more manners in the foregoing third layout manner may be preset in the tablet computer 10. When detecting that the display direction of the tablet computer 10 changes, the tablet computer 10 may first lay out the display elements in the third desktop interface in the second layout manner. If the display elements in the third desktop interface cannot be laid out into the second desktop interface in the second layout manner, the tablet computer 10 may lay out the display elements in the third desktop interface into the second desktop interface in the third layout manner. In this way, because the second layout manner can retain more relative location relationships of the display elements in the third desktop interface than the third layout manner, it can be ensured that the relative location relationships of the display elements in the third desktop interface can be retained as much as possible in the second desktop interface obtained through re-layout, to help the user quickly find a display element on which a related operation is performed. For details, refer to the embodiment shown in FIG. 20B. Details are not described herein again.

In some embodiments, if display elements in the third desktop interface cannot be laid out into the second desktop interface in the third layout manner, the tablet computer 10 may determine a layout ranking of each display element in the second layout manner, lay out a part of the display elements that are laid out earlier into the second desktop interface, and lay out a display element that cannot be laid out in the second desktop interface into another desktop interface. In this way, relative location relationships of the display elements in the third desktop interface can be retained as much as possible, to help the user quickly find a display element on which a related operation is performed. For details, refer to the embodiment shown in FIG. 20C. Details are not described herein again.

For example, a plurality of layout manners (for example, one or more manners in the foregoing first layout manner, one or more manners in the foregoing second layout manner, and one or more manners in the foregoing third layout manner) may be preset in the tablet computer 10. When detecting that the display direction of the tablet computer 10 changes, the tablet computer 10 may select different layout manners based on complexity of display elements in a currently displayed third desktop interface, to lay out the display elements in the third desktop interface into the second desktop interface. For example, when complexity of display elements in the second desktop interface is low, the first layout manner or the second layout manner is used to lay out the display elements in the second desktop interface into the third desktop interface; or when complexity of display elements in the second desktop interface is high, the third layout manner is used to lay out the display elements in the third desktop interface into the second desktop interface.

For example, the complexity of the display elements may be determined based on types of grid sizes of the display elements, a quantity of large-size display elements, and the like in the second desktop interface. A larger quantity of the types of the grid sizes of the display elements indicates higher complexity, and a larger quantity of large-size display elements indicates higher complexity.

S2003: Display the second desktop interface, where a display element in the second desktop interface has a same grid size in the second desktop interface and in the third desktop.

After the display elements in the third desktop interface are laid out into the second desktop interface, the tablet computer 10 may display the second desktop interface.

Based on the foregoing method, it can be ensured that the relative location relationships of the display elements in the third desktop interface can be retained as much as possible in the second desktop interface obtained through re-layout, to help the user quickly find a display element on which a related operation is performed.

Further, FIG. 21 is a diagram of a structure of the tablet computer 10 according to some embodiments of this application.

As shown in FIG. 21, the tablet computer 10 may include a processor 110, an interface 120 for external memory, an internal memory 121, a universal serial bus (universal serial bus, USB) interface 130, a charging management module 140, a power management module 141, a battery 142, an antenna 1, a wireless communication module 160, an audio module 170, a speaker 170A, a receiver 170B, a microphone 170C, a headset jack 170D, a sensor module 180, a button 190, a motor 191, an indicator 192, a camera 193, and a display 194. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include a central processing unit (central processing unit, CPU), an AP, a modem processor, a graphics processing unit (graphics processing unit, GPU), an image signal processor (image signal processor, ISP), a microcontroller unit (microcontroller unit, MCU), a video codec, a digital signal processor (digital signal processor, DSP), a baseband processor, a neural-network processor (neural-network processing unit, NPU), a field programmable gate array (field programmable gate array, FPGA), and the like. In some embodiments, different processing units may be independent components, or may be integrated into one or more processors.

In some embodiments, the processor 110 may be configured to perform one or more programs/instructions corresponding to the display methods provided in the foregoing embodiments.

The charging management module 140 is configured to receive a charging input from a charger. When charging the battery 142, the charging management module 140 may further supply power to the tablet computer 10 through the power management module 141.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like.

A wireless communication function of the tablet computer 10 may be implemented through the antenna 1, the wireless communication module 160, the modem processor, the baseband processor, and the like.

The antenna 1 is configured to transmit and receive electromagnetic wave signals.

The wireless communication module 160 may provide a wireless communication solution that includes a wireless local area network (wireless local area network, WLAN) (for example, a wireless fidelity network), Bluetooth (Bluetooth, BT), a global navigation satellite system (global navigation satellite system, GNSS), near field communication (near field communication, NFC) technology, an infrared (infrared, IR) technology, or the like and that is applied to the tablet computer 10. The wireless communication module 160 may be one or more components integrating at least one communication processing module. The wireless communication module 160 receives an electromagnetic wave through the antenna 1, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 1.

The tablet computer 10 may implement a display function via the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image.

The camera 193 is configured to capture a static image or a video.

The interface 120 for external memory may be configured to connect to an external memory card. The external memory card communicates with the processor 110 via the interface 120 for external memory, to implement a data storage function. For example, application data of an application is stored in the external memory card.

The internal memory 121 may be configured to store one or more programs and corresponding data. The internal memory 121 may include a program storage area and a data storage area. In some embodiments, the program storage area may store an operating system, an application required by at least one function, and the like, for example, programs/instructions corresponding to the display methods provided in the foregoing embodiments. The data storage area may store data, for example, the application data of the application, created when the tablet computer 10 is used. In addition, the internal memory 121 may include a high-speed random access memory, or may include a nonvolatile memory, for example, at least one magnetic disk storage device, a flash memory, or a universal flash storage. The processor 110 executes various function applications of the tablet computer 10 by running the one or more programs stored in the internal memory 121 and/or the one or more programs stored in the memory disposed in the processor 110.

The tablet computer 10 may implement an audio function, for example, music playing, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal.

The speaker 170A, also referred to as a "loudspeaker", is configured to convert an audio electrical signal into a sound signal.

The receiver 170B, also referred to as an "earpiece", is configured to convert an electrical audio signal into a sound signal.

The microphone 170C, also referred to as a "mike" or a "mic", is configured to convert a sound signal into an electrical signal.

The headset jack 170D is configured to connect to a wired headset.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The tablet computer 10 determines pressure intensity based on a change of the capacitance. When a touch operation is performed on the display 194, the tablet computer 10 detects intensity of the touch operation by using the pressure sensor 180A. The tablet computer 10 may also calculate a touch location based on a detection signal of the pressure sensor 180A.

In some embodiments, the tablet computer 10 may determine, based on an electrical signal detected by the pressure sensor 180A, whether a user displays a screen-off interface/lock screen.

The barometric pressure sensor 180C may be configured to detect barometric pressure of a geographical location of the tablet computer 10.

The acceleration sensor 180E may detect a magnitude of acceleration of the tablet computer 10 in various directions (usually on three axes). When the tablet computer 10 is still, a value and a direction of gravity may be detected. The acceleration sensor 180 may be further configured to identify a posture of the tablet computer 10, and be used in an application such as switching between a landscape mode and a portrait mode or a pedometer. In some embodiments, the tablet computer 10 may determine, based on data collected by the acceleration sensor 180E, whether a posture of the tablet computer 10 changes, to determine whether a display direction of the tablet computer 10 changes.

The ambient light sensor 180L is configured to sense ambient light brightness. The tablet computer 10 may adaptively adjust brightness of the display 194 based on the sensed ambient light brightness. The ambient light sensor 180L may also be configured to automatically adjust white balance during shooting. The ambient light sensor 180L may further cooperate with the optical proximity sensor 180G to detect whether the tablet computer 10 is in a pocket, to avoid an accidental touch.

The fingerprint sensor 180H is configured to collect a fingerprint. The tablet computer 10 may use a feature of the collected fingerprint to implement fingerprint-based unlocking, application access locking, fingerprint-based photographing, fingerprint-based call answering, and the like.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may also be disposed on a surface of the tablet computer 10 at a location different from that of the display 194.

In some embodiments, the tablet computer 10 may interact with the user based on data collected by the touch sensor 180K, to detect a desktop modification operation of the user, confirm an operation of performing or not performing the desktop modification operation, switch a display direction, and the like.

The button 190 includes a power button, a volume button, and the like. The button 190 may be a mechanical button, or may be a touch button. The tablet computer 10 may receive a button input, and generate a button signal input related to user setting and function control of the tablet computer 10.

The motor 191 may generate a vibration prompt. The indicator 192 may be an indicator light, and may be configured to indicate a charging status and a power change, or may be configured to indicate a message, a notification, and the like.

It may be understood that the structure of the tablet computer 10 shown in this embodiment of this application does not constitute a specific limitation on the tablet computer 10. In some other embodiments of this application, the tablet computer 10 may include more or fewer components than those shown in the figure, or combine some components, or split some components, or have a different component arrangement. The components shown in the figure may be implemented by hardware, software, or a combination of software and hardware.

It should be understood that the term "or" in embodiments of this application describes an association relationship between associated objects, and indicates that two relationships may exist. For example, A or B may indicate the following cases: Only A exists, and only B exists. A and B may be singular or plural.

It should be understood that the term "connected" in embodiments of this application describes a connection relationship between two objects and may represent two connection relationships. For example, that A and B are connected may indicate the following two cases: A is directly connected to B, and A is connected to B through C.

It should be understood that, in embodiments of this application, "for example", "in some embodiments", "in another embodiment", "in still another embodiment", "example", and the like are used to represent giving an example, an illustration, or a description. Any embodiment or design solution described as an "example" in this application should not be explained as being more preferred or having more advantages than another embodiment or design solution. Exactly, the term "example" is for presenting a concept in a specific manner.

It should be understood that, in embodiments of this application, the terms such as "first" and "second" are only used for a purpose of distinction in description, and should not be understood as an indication or implication of relative importance or an indication or implication of a sequence. In embodiments of this application, "equal to" may be used together with "greater than", which is applicable to a technical solution used in a case of "greater than"; or may be used together with "less than", which is applicable to a technical solution used in a case of "less than". It should be noted that, when used together with "greater than", "equal to" is not used together with "less than"; and when used together with "less than", "equal to" is not used together with "greater than".

In the accompanying drawings, some structural or method features may be shown in a particular arrangement and/or order. However, it should be understood that such a particular arrangement and/or order may not be needed. In some embodiments, these features may be arranged in a manner and/or order different from those/that shown in the descriptive accompanying drawings. In addition, inclusion of the structural or method features in a particular figure does not imply that such features are needed in all embodiments, and in some embodiments, these features may not be included or may be combined with other features.

It should be understood that in the examples and specification of this patent, relationship terms such as first and second are only used to distinguish one entity or operation from another entity or operation, and do not necessarily require or imply that any actual relationship or sequence exists between these entities or operations. Furthermore, the term "include" or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. An element preceded by "includes a" does not, without more constraints, preclude the existence of additional identical elements in the process, method, article, or device that includes the element.

## Claims

1. A display method, applied to an electronic device, and comprising:
displaying a first desktop interface in a first display direction of the electronic device, wherein a size of an empty display area in a display area used to lay out a display element in the first desktop interface is a first size;
detecting a first operation of a user, wherein the first operation comprises a modification operation on a first display element, the modification operation is used to decrease the size of the empty display area by a second size, and the second size is less than or equal to the first size; and
when the first operation does not meet a modification condition, skipping performing the first operation.

2. The method according to claim 1, wherein a grid of the display area used to lay out the display element in the first desktop interface comprises a grid with m rows and n columns, m and n are positive integers greater than 1, and m and n are different; and
the first operation is an operation of adding the first display element to the grid with m rows and n columns, wherein that the second size is less than or equal to the first size comprises that a grid size of the first display element is less than or equal to a size of an empty grid in the grid with m rows and n columns; or
the first display element is a display element in the first desktop interface, and the first operation is an operation of increasing a grid size of the first display element, wherein that the second size is less than or equal to the first size comprises that an increased size of the grid size of the first display element is less than or equal to a size of an empty grid in the grid with m rows and n columns.

3. The method according to claim 2, wherein the modification condition indicates that when a grid size of a target display element is not adjusted, the target display element is capable of being laid out in a second desktop interface displayed in a second display direction, wherein a grid of a display area, in the second desktop interface, used to lay out a display element comprises a grid with n rows and m columns, and the second display direction is perpendicular to the first display direction; and
when the first operation is an operation of increasing a size of the first display element, the target display element comprises a display element other than the first display element in the display element in the first desktop interface, and the first display element whose size is increased; or
when the first operation is the operation of adding the first display element to the grid with m rows and n columns, the target display element comprises the display element in the first desktop interface and the first display element.

4. The method according to claim 3, wherein the modification condition comprises:
both m and n are integer multiples of 4; or
a remainder b obtained by dividing m by 4 is different from a remainder d obtained by dividing n by 4, both b and d are even numbers, and a sum of quantities of grids occupied by display elements whose grid sizes are greater than two rows and four columns in the target display element is less than or equal to 16a×c, wherein a is equal to (m-b)/4, and c is equal to (n-d)/4; or
both b and d are 2, and a sum of quantities of grids occupied by display elements whose grid sizes are greater than two rows and four columns in the target display element is less than or equal to 16a×c+8×e, wherein e is a minimum value in a and c; or
one of b and d is an odd number, the other is an even number, at least one of b and d is less than 2, a sum of quantities of grids occupied by display elements whose grid sizes are greater than two rows and four columns in the target display element is less than or equal to 16a×c, and a difference obtained by subtracting a sum of quantities of grids occupied by display elements whose grid sizes are greater than one row and one column in the target display element from a total quantity of grids in the grid with m rows and n columns is greater than or equal to an odd number in m and n; or
one of b and d is an odd number, the other is an even number, both b and d are greater than or equal to 2, a sum of quantities of grids occupied by display elements whose grid sizes are greater than two rows and four columns in the target display element is less than or equal to 16a×c+8×e, and a difference obtained by subtracting a sum of quantities of grids occupied by display elements whose grid sizes are greater than one row and one column in the target display element from a total quantity of grids in the grid with m rows and n columns is greater than or equal to an odd number in m and n; or
both b and d are odd numbers, at least one of b and d is less than 2, a sum of quantities of grids occupied by display elements whose grid sizes are greater than two rows and four columns in the target display element is less than or equal to 16a×c, and a difference obtained by subtracting a sum of quantities of grids occupied by display elements whose grid sizes are greater than one row and one column in the target display element from a total quantity of grids in the grid with m rows and n columns is greater than or equal to a maximum value in m and n; or
both b and d are 3, a sum of quantities of grids occupied by display elements whose grid sizes are greater than two rows and four columns in the target display element is less than or equal to 16a×c+8×e, and a difference obtained by subtracting a sum of quantities of grids occupied by display elements whose grid sizes are greater than one row and one column in the target display element from a total quantity of grids in the grid with m rows and n columns is greater than or equal to a maximum value in m and n; or
the target display element is capable of being completely laid out in the grid with n rows and m columns in a preset layout manner.

5. The method according to claim 3, wherein the method further comprises:
when the first operation meets the modification condition, performing the first operation, and displaying a third desktop interface after the first operation is performed, wherein a grid of a display area used to lay out a display element in the third desktop interface comprises a grid with m rows and n columns, and the target display element is laid out in the grid with m rows and n columns.

6. The method according to claim 5, wherein the method further comprises:
detecting that a display direction of the electronic device is switched from the first display direction to the second display direction, laying out the target display element in the grid with n rows and m columns of the second desktop interface, and displaying the second desktop interface in the second display direction after layout is completed, wherein
the target display element has the same grid size in the second desktop interface as in the third desktop interface.

7. The method according to claim 6, wherein laying out the target display element in the grid with n rows and m columns of the second desktop interface comprises:
when the target display element is capable of being completely laid out in the grid with n rows and m columns in a first manner when the grid size of the target display element is not adjusted, laying out the target display element in the grid with n rows and m columns of the second desktop interface in the first manner; and
when the target display element is incapable of being completely laid out in the grid with n rows and m columns in the first manner when the grid size of the target display element is not adjusted, completely laying out the target display element in the grid with n rows and m columns of the second desktop interface in a second manner.

8. The method according to claim 7, wherein laying out the target display element in the grid with n rows and m columns of the second desktop interface in the first manner comprises:
traversing layout elements in the grid with m rows and n columns of the third desktop interface in a first traversal manner, and determining layout rankings of the layout elements, wherein a layout element traversed earlier is laid out earlier, and the layout elements comprise the target display element and an empty grid in the grid with m rows and n columns of the third desktop interface; and
sequentially laying out the layout elements into the grid with n rows and m columns of the second desktop interface in the layout rankings of the layout elements, wherein during layout, any first layout element in the layout elements is laid out into an empty grid area that is first traversed in the first traversal manner and that is in an empty grid area having a same grid size as the first layout element in the grid with n rows and m columns of the second desktop interface, wherein
the first traversal manner is traversing in a first row-column sequence by using a grid in a first corner of the grid with m rows and n columns or the grid with n rows and m columns of the second desktop interface as a traversal start point, the first corner is an upper left corner, a lower left corner, an upper right corner, or a lower right corner, and the first row-column sequence is a sequence of rows then columns or a row-column sequence of columns then rows.

9. The method according to claim 8, wherein completely laying out the target display element in the grid with n rows and m columns of the second desktop interface in the second manner comprises:
sequentially laying out the target display element into the grid with n rows and m columns of the second desktop interface in descending order of the grid size of the target display element, wherein during layout, any first target display element in the target display element is laid out into an empty grid area that is first traversed in a second traversal manner and that is in an empty grid area having a same grid size as the first target display element in the grid with n rows and m columns of the second desktop interface, wherein
the second traversal manner is traversing in a second row-column sequence by using a grid in a second corner of the grid with n rows and m columns of the second desktop interface as a traversal start point, the second corner is an upper left corner, a lower left corner, an upper right corner, or a lower right corner, and the second row-column sequence is a sequence of rows then columns or a row-column sequence of columns then rows.

10. The method according to claim 7, wherein laying out the target display element in the grid with n rows and m columns of the second desktop interface in the first manner comprises:
traversing layout elements in the grid with m rows and n columns of the third desktop interface in a second traversal manner, and determining layout rankings of the layout elements, wherein a layout element traversed earlier is laid out earlier, and the layout elements comprise the target display element and an empty grid in the grid with m rows and n columns of the third desktop interface, wherein
the second traversal manner is:
traversing layout elements row by row in a sequence from a first row to an m^{th} row by using a grid in the first row and a first column in the grid with m rows and n columns of the third desktop interface as a traversal start point, and when traversing layout elements occupying an i^{th} row, traversing layout elements column by column in ascending order of differences between quantities of columns occupied by the layout elements and a quantity of columns of the traversal start point, wherein i is a positive integer less than or equal to m; and
in a process of traversing the layout elements occupying the i^{th} row:
when a next untraversed second layout element occupying the i^{th} row further occupies a grid in an (i+1)^{th} row, an untraversed layout element in the (i+1)^{th} row is traversed; and
when the second layout element does not occupy the grid in the (i+1)^{th} row, a layout element whose row number of a ranking grid is smallest in an untraversed layout element whose column number of a ranking grid is the same as a column number of a ranking grid of the second layout element and whose row number of the ranking grid is less than or equal to i is traversed, wherein
the ranking grid is a grid in an upper left corner of a grid occupied by a corresponding display element; and
sequentially laying out the layout elements into the grid with n rows and m columns of the second desktop interface in the layout rankings of the layout elements.

11. The method according to claim 10, wherein sequentially laying out the layout elements into the grid with n rows and m columns of the second desktop interface in the layout rankings of the layout elements comprises:
laying out a third layout element whose grid size is p rows and q columns (wherein p and q are positive integers) in the layout elements into the grid with n rows and m columns in the following manners:
when at least a part of laid-out elements in a plurality of laid-out elements that have been laid out in a grid area with r rows and s columns are, after locations of the at least part of laid-out elements are adjusted, capable of being laid out in a grid area with p rows and t columns and occupying all grids in the grid area with p rows and t columns, adjusting locations of the plurality of laid-out elements to lay out the plurality of laid-out elements in the grid area with p rows and t columns, and laying out the third layout element in a remaining grid area of a p-row grid in which the grid area with p rows and t columns is located, wherein r, s, and t are positive integers, p is greater than r, t is less than s, and a sum of q and t is less than m; or
when a plurality of laid-out elements that have been laid out in a grid area with r rows and s columns are, after locations of the plurality of laid-out elements are adjusted, capable of being laid out in a grid area with p rows and t columns and occupying all grids in the grid area with p rows and t columns, laying out the third layout element in an empty grid area that is first traversed in a sequence of rows then columns by using a first column in a first row as a start point and that is in an empty grid area having a same grid size as the third layout element in the grid with n rows and m columns.

12. The method according to any one of claims 1 to 11, wherein the display element comprises at least one of an icon or a service widget.

13. A display method, applied to an electronic device, and comprising:
displaying a third desktop interface in a first display direction, wherein a grid of a display area used to lay out display elements in the third desktop interface comprises a grid with m rows and n columns, and a plurality of display elements are laid out in the grid with m rows and n columns;
detecting that a display direction of the electronic device is switched from the first display direction to a second display direction; and
when the plurality of display elements are capable of being completely laid out in a grid with n rows and m columns in a first manner when grid sizes of the plurality of display elements are not adjusted, laying out the plurality of display elements in the grid with n rows and m columns of a second desktop interface in the first manner, and displaying the second desktop interface in the second display direction, wherein
laying out the plurality of display elements in the grid with n rows and m columns of the second desktop interface in the first manner comprises:
traversing layout elements in the grid with m rows and n columns of the third desktop interface in a first traversal manner, and determining layout rankings of the layout elements, wherein a layout element traversed earlier is laid out earlier, and the layout elements comprise the plurality of display elements and an empty grid in the grid with m rows and n columns of the third desktop interface; and
sequentially laying out the layout elements into the grid with n rows and m columns of the second desktop interface in the layout rankings of the layout elements, wherein during layout, any fourth layout element in the layout elements is laid out into an empty grid area that is first traversed in the first traversal manner and that is in at least one empty grid area having a same grid size as the fourth layout element in the grid with n rows and m columns of the second desktop interface, wherein
the first traversal manner is traversing in a first row-column sequence by using a grid in a first corner of the grid with m rows and n columns or the grid with n rows and m columns as a start point, the first corner is an upper left corner, a lower left corner, an upper right corner, or a lower right corner, and the first row-column sequence is a sequence of rows then columns or a row-column sequence of columns then rows.

14. The method according to claim 13, wherein the method further comprises:
when the plurality of display elements are incapable of being completely laid out in the grid with n rows and m columns in the first manner when the grid sizes of the plurality of display elements are not adjusted, laying out the plurality of display elements in the grid with n rows and m columns of the second desktop interface in a second manner, and displaying the second desktop interface, wherein
completely laying out the plurality of display elements in the grid with n rows and m columns of the second desktop interface in the second manner comprises:
sequentially laying out the plurality of display elements into the grid with n rows and m columns of the second desktop interface in descending order of the grid sizes of the plurality of display elements, wherein during layout, any second display element in the plurality of display elements is laid out into an empty grid area that is first traversed in a second traversal manner and that is in an empty grid area having a same grid size as the second display element in the grid with n rows and m columns of the second desktop interface, wherein
the second traversal manner is traversing in a second row-column sequence by using a grid in a second corner of the grid with n rows and m columns as a start point, wherein the second corner is an upper left corner, a lower left corner, an upper right corner, or a lower right corner, and the second row-column sequence is a sequence of rows then columns or a row-column sequence of columns then rows.

15. The method according to claim 13 or 14, wherein the plurality of display elements and the grid with m rows and n columns meet the following conditions:
both m and n are integer multiples of 4; or
a remainder b obtained by dividing m by 4 is different from a remainder d obtained by dividing n by 4, both b and d are even numbers, and a sum of quantities of grids occupied by display elements whose grid sizes are greater than two rows and four columns in the plurality of display elements is less than or equal to 16a×c, wherein a is equal to (m-b)/4, and c is equal to (n-d)/4; or
both b and d are 2, and a sum of quantities of grids occupied by display elements whose grid sizes are greater than two rows and four columns in the plurality of display elements is less than or equal to 16a×c+8×e, wherein e is a minimum value in a and c; or
one of b and d is an odd number, the other is an even number, at least one of b and d is less than 2, a sum of quantities of grids occupied by display elements whose grid sizes are greater than two rows and four columns in the plurality of display elements is less than or equal to 16a×c, and a difference obtained by subtracting a sum of quantities of grids occupied by display elements whose grid sizes are greater than one row and one column in the plurality of display elements from a total quantity of grids in the grid with m rows and n columns exists; or
one of b and d is an odd number, the other is an even number, both b and d are greater than or equal to 2, a sum of quantities of grids occupied by display elements whose grid sizes are greater than two rows and four columns in the plurality of display elements is less than or equal to 16a×c+8×e, and a difference obtained by subtracting a sum of quantities of grids occupied by display elements whose grid sizes are greater than one row and one column in the plurality of display elements from a total quantity of grids in the grid with m rows and n columns is greater than or equal to an odd number in m and n; or
both b and d are odd numbers, at least one of b and d is less than 2, a sum of quantities of grids occupied by display elements whose grid sizes are greater than two rows and four columns in the plurality of display elements is less than or equal to 16a×c, and a difference obtained by subtracting a sum of quantities of grids occupied by display elements whose grid sizes are greater than one row and one column in the plurality of display elements from a total quantity of grids in the grid with m rows and n columns is greater than or equal to a maximum value in m and n; or
both b and d are 3, a sum of quantities of grids occupied by display elements whose grid sizes are greater than two rows and four columns in the plurality of display elements is less than or equal to 16a×c+8×e, and a difference obtained by subtracting a sum of quantities of grids occupied by display elements whose grid sizes are greater than one row and one column in the plurality of display elements from a total quantity of grids in the grid with m rows and n columns is greater than or equal to a maximum value in m and n.

16. The method according to claim 13, wherein the method further comprises:
when the plurality of display elements is incapable of being completely laid out in the grid with n rows and m columns in the first manner when the grid sizes of the plurality of display elements are not adjusted, traversing the layout elements in the grid with m rows and n columns of the third desktop interface in the first traversal manner, and determining the layout rankings of the layout elements; and
sequentially laying out a plurality of layout elements with higher layout rankings in the layout elements into the grid with n rows and m columns of the second desktop interface in corresponding layout rankings, wherein during layout, any fifth layout element in the plurality of layout elements is laid out into an empty grid area that is first traversed in the first traversal manner and that is in at least one empty grid area having a same grid size as the fifth layout element in the grid with n rows and m columns of the second desktop interface.

17. The method according to any one of claims 13 to 16, wherein the display element comprises at least one of an icon or a service widget.

18. A display method, applied to an electronic device, and comprising:
displaying a third desktop interface in a first display direction, wherein a grid of a display area used to lay out display elements in the third desktop interface comprises a grid with m rows and n columns, and a plurality of display elements are laid out in the grid with m rows and n columns;
detecting that a display direction of the electronic device is switched from the first display direction to a second display direction; and
when the plurality of display elements are capable of being completely laid out in a grid with n rows and m columns in a first manner when grid sizes of the plurality of display elements are not adjusted, laying out the plurality of display elements in the grid with n rows and m columns of a second desktop interface in the first manner, and displaying the second desktop interface in the second display direction, wherein
laying out the plurality of display elements in the grid with n rows and m columns of the second desktop interface in the first manner comprises:
traversing layout elements in the grid with m rows and n columns of the third desktop interface in a second traversal manner, and determining layout rankings of the layout elements, wherein a layout element traversed earlier is laid out earlier, and the layout elements comprise the plurality of display elements and an empty grid in the grid with m rows and n columns of the third desktop interface, wherein
the second traversal manner is:
traversing layout elements row by row in a sequence from a first row to an m^{th} row by using a grid in the first row and a first column in the grid with m rows and n columns of the third desktop interface as a start point, and when traversing layout elements occupying an i^{th} row, traversing layout elements column by column in ascending order of differences between quantities of columns occupied by the layout elements and a quantity of columns of the traversal start point, wherein i is a positive integer less than or equal to m; and
in a process of traversing the layout elements occupying the i^{th} row:
when a next untraversed second layout element occupying the i^{th} row further occupies a grid in an (i+1)^{th} row, an untraversed layout element in the (i+1)^{th} row is traversed; and
when the second layout element does not occupy the grid in the (i+1)^{th} row, a layout element whose row number of a ranking grid is smallest in an untraversed layout element whose column number of a ranking grid is the same as a column number of a ranking grid of the second layout element and whose row number of the ranking grid is less than or equal to i is traversed, wherein
the ranking grid is a grid in an upper left corner of a grid occupied by a corresponding display element; and
sequentially laying out the layout elements into the grid with n rows and m columns of the second desktop interface in the layout rankings of the layout elements, and laying out a sixth layout element whose grid size is p rows and q columns (wherein p and q are positive integers) in the layout elements into the grid with n rows and m columns in the following manners:
when there are a plurality of laid-out elements that have been laid out in a grid area with r rows and s columns and that are, after locations of the plurality of laid-out elements are adjusted, capable of being laid out in a grid area with p rows and t columns and occupying all grids in the grid area with p rows and t columns, adjusting locations of the plurality of laid-out elements to lay out the plurality of laid-out elements in the grid area with p rows and t columns, and laying out the sixth layout element in an empty grid area of a p-row grid in which the grid area with p rows and t columns is located, wherein r, s, and t are positive integers, p is greater than r, t is less than s, and a sum of q and t is less than m; or
when there is no plurality of laid-out elements that have been laid out in a grid area with r rows and s columns and that are, after locations of the plurality of laid-out elements are adjusted, capable of being laid out in a grid area with p rows and t columns and occupying all grids in the grid area with p rows and t columns, laying out the sixth layout element in an empty grid area that is first traversed in a sequence of rows then columns by using a first column in a first row as a start point and that is in an empty grid area having a same grid size as the sixth layout element in the grid with n rows and m columns.

19. The method according to claim 18, wherein the method further comprises:
when the plurality of display elements are incapable of being completely laid out in the grid with n rows and m columns in the first manner when the grid sizes of the plurality of display elements are not adjusted, laying out the plurality of display elements in the grid with n rows and m columns of the second desktop interface in a second manner, and displaying the second desktop interface, wherein
completely laying out the plurality of display elements in the grid with n rows and m columns of the second desktop interface in the second manner comprises:
sequentially laying out the plurality of display elements into the grid with n rows and m columns of the second desktop interface in descending order of the grid sizes of the plurality of display elements, wherein during layout, any third display element in the plurality of display elements is laid out into an empty grid area that is first traversed in a second traversal manner and that is in an empty grid area having a same grid size as the third display element in the grid with n rows and m columns of the second desktop interface, wherein
the second traversal manner is traversing in a second row-column sequence by using a grid in a second corner of the grid with n rows and m columns as a start point, wherein the second corner is an upper left corner, a lower left corner, an upper right corner, or a lower right corner, and the second row-column sequence is a sequence of rows then columns or a row-column sequence of columns then rows.

20. The method according to claim 18 or 19, wherein the plurality of display elements and the grid with m rows and n columns meet the following conditions:
both m and n are integer multiples of 4; or
a remainder b obtained by dividing m by 4 is different from a remainder d obtained by dividing n by 4, both b and d are even numbers, and a sum of quantities of grids occupied by display elements whose grid sizes are greater than two rows and four columns in the plurality of display elements is less than or equal to 16a×c, wherein a is equal to (m-b)/4, and c is equal to (n-d)/4; or
both b and d are 2, and a sum of quantities of grids occupied by display elements whose grid sizes are greater than two rows and four columns in the plurality of display elements is less than or equal to 16a×c+8×e, wherein e is a minimum value in a and c; or
one of b and d is an odd number, the other is an even number, at least one of b and d is less than 2, a sum of quantities of grids occupied by display elements whose grid sizes are greater than two rows and four columns in the plurality of display elements is less than or equal to 16a×c, and a difference obtained by subtracting a sum of quantities of grids occupied by display elements whose grid sizes are greater than one row and one column in the plurality of display elements from a total quantity of grids in the grid with m rows and n columns exists; or
one of b and d is an odd number, the other is an even number, both b and d are greater than or equal to 2, a sum of quantities of grids occupied by display elements whose grid sizes are greater than two rows and four columns in the plurality of display elements is less than or equal to 16a×c+8×e, and a difference obtained by subtracting a sum of quantities of grids occupied by display elements whose grid sizes are greater than one row and one column in the plurality of display elements from a total quantity of grids in the grid with m rows and n columns is greater than or equal to an odd number in m and n; or
both b and d are odd numbers, at least one of b and d is less than 2, a sum of quantities of grids occupied by display elements whose grid sizes are greater than two rows and four columns in the plurality of display elements is less than or equal to 16a×c, and a difference obtained by subtracting a sum of quantities of grids occupied by display elements whose grid sizes are greater than one row and one column in the plurality of display elements from a total quantity of grids in the grid with m rows and n columns is greater than or equal to a maximum value in m and n; or
both b and d are 3, a sum of quantities of grids occupied by display elements whose grid sizes are greater than two rows and four columns in the plurality of display elements is less than or equal to 16a×c+8×e, and a difference obtained by subtracting a sum of quantities of grids occupied by display elements whose grid sizes are greater than one row and one column in the plurality of display elements from a total quantity of grids in the grid with m rows and n columns is greater than or equal to a maximum value in m and n.

21. The method according to any one of claims 18 to 20, wherein the display element comprises at least one of an icon or a service widget.

22. An electronic device, comprising:
a memory, configured to store one or more programs; and
a processor, configured to execute the one or more programs, so that the electronic device implements the display method according to any one of claims 1 to 21.

23. A readable storage medium, wherein the readable storage medium comprises one or more programs, and when the one or more programs are executed on an electronic device, the electronic device is enabled to implement the display method according to any one of claims 1 to 21.
